# EUROPEAN PATENT SPECIFICATION

(11) **EP 4 458 655 B1**
(45) Date of publication and mention of the grant of the patent: **22.04.2026**
(21) Application number: 22922639.4
(22) Date of filing: 25.01.2022
(51) Int. Cl.: B62K 11/00, F02M 35/10, B62J 17/00, F02M 35/16, B62J 1/12, B62J 1/28, B62J 7/06, B62J 11/22, B62J 25/04, B62J 37/00, B62K 5/01, B62J 43/28, B62K 11/04, B62K 23/06, B62K 27/12, B62L 1/00, B62L 3/08, B62J 41/00, B62M 7/06, B62M 25/04

(54) **ALL-TERRAIN VEHICLE**
GELÄNDEFAHRZEUG
VÉHICULE TOUT-TERRAIN

(43) Date of publication of application: 06.11.2024
(73) Proprietor: Zhejiang CFMOTO Power Co., Ltd., Hangzhou, Zhejiang 311100 (CN)
(72) Inventor: WANG, Chao, Hangzhou, Zhejiang 311100 (CN); LUO, Longping, Hangzhou, Zhejiang 311100 (CN); CAO, Zhibin, Hangzhou, Zhejiang 311100 (CN); CHEN, Meng, Hangzhou, Zhejiang 311100 (CN); TIAN, Jianrong, Hangzhou, Zhejiang 311100 (CN); XING, Zhenhu, Hangzhou, Zhejiang 311100 (CN)
(74) Representative: Sun, Yiming
(86) International application number: PCT/CN2022/073887
(87) International publication number: WO 2023/141788

(56) References cited:
- EP-A1- 3 321 497
- CN-A- 105 464 857
- CN-U- 210 653 497
- CN-U- 211 082 006
- CN-U- 214 366 466
- CN-U- 214 366 466
- JP-A- 2001 140 660
- JP-A- 2008 024 291
- JP-A- 2011 099 339
- US-A1- 2002 023 792
- US-A1- 2003 029 656
- US-A1- 2011 108 341
- US-A1- 2013 238 191
- US-A1- 2014 136 076
- US-A1- 2016 144 761
- US-B1- 6 622 806

## Description

### FIELD OF THE DISCLOSURE

The disclosure relates to the field of vehicles, and particularly to an all-terrain vehicle.

### BACKGROUND OF THE DISCLOSURE

In most of the existing all-terrain vehicles, the heat generated from a gearbox and an engine is mainly discharged by a radiator. However, the heat dissipation effect of the radiator may be not enough, so the temperature inside the all-terrain vehicle will be too high, which causes the heat to be discharged slowly, thereby affecting the heat dissipation effect and service life of the vehicle.

In addition, no corresponding heat dissipation structure for the muffler of the all-terrain vehicles to dissipate heat, which results in an increase in the temperature of the plastic covers around the muffler, which poses a safety hazard to the driver. Therefore, there is a need for a method to dissipate heat from the muffler and the plastic covers around, in order to improve the heat dissipation effect of the muffler and plastic covers.

In existing all-terrain vehicles, the engine and other components that are prone to generate heat are generally mounted in a riding area, which also poses a safety hazard to the driver. Further, components such as the engine can produce significant noise. Therefore, there is a need for a method to improve the internal ventilation efficiency of all-terrain vehicles, to achieve better heat dissipation and reduce noise during driving.

US 2011/108341A1 discloses an all-terrain vehicle wherein a transmission is cooled by a transmission air intake duct, the transmission air intake duct having an intake port arranged under a vehicle cover and being fluidly connected to the transmission case.

### SUMMARY OF THE INVENTION

In view of this, the present application provides an all-terrain vehicle with good heat dissipation effect and reduced noise.

In order to achieve the above objectives, the present application provides an all-terrain vehicle. The all-terrain vehicle includes a frame, a vehicle cover, a wheel assembly, a suspension assembly, a prime mover assembly, a transmission assembly, and an air intake system. The vehicle cover is at least partially disposed on the frame, the vehicle cover defines an accommodation space and comprises an instrument shield. The wheel assembly includes a pair of first wheels and a pair of second wheels. The suspension assembly includes a front suspension and a rear suspension. The first wheels are connected to the frame by the front suspension and the second wheels are connected to the frame by the rear suspension. The prime mover assembly drives the wheel assembly and includes an engine. The transmission assembly is disposed between the prime mover assembly and the wheel assembly, a driving force being passed from the prime mover assembly to the wheel assembly by the transmission assembly. The air intake system is at least partially in fluid communication with the prime mover assembly. The air intake system further includes an air inlet and an air intake pipe. The air inlet is at least partially defined on the instrument shield. The air intake pipe is connected to the transmission assembly, the air inlet is at least partially in fluid communication with the air intake pipe. The vehicle cover further includes a side cover assembly. The side cover assembly includes a first insulation cover and a second insulation cover. The first insulation cover and the engine cooperatively defines a first airflow passage extending along a front-rear direction of the all-terrain vehicle and extending to a rear of the frame.

In an embodiment, the instrument shield has an instrument shield windward surface at the front of the all-terrain vehicle, the air inlet is at least partially defined on the instrument shield windward. A first projection plane is defined as a plane perpendicular to a up-down direction of the all-terrain vehicle and a second projection plane is defined as a plane perpendicular to a left-right direction of the all-terrain vehicle, the instrument shield windward surface is substantially perpendicular to the second projection plane. The projection of the instrument shield windward surface projected on the second projection plane is defined as a first projection line; and a straight line intersecting the first projection plane and the second projection plane is defined as a second projection line. An angle defined between the first projection line and the second projection line is in the range from 45 degrees to 90 degrees.

The heat dissipation effect of the transmission assembly is improved by an air inlet defining on the instrument shield. A plurality of flow-guiding cavities are defined on the left and right sides of the first fender, the airflow around the muffler can be increased, thereby improving the heat dissipation effect of the vehicle cover. The first airflow passage defined by the first insulation cover and the engine can improve the ventilation efficiency inside the all-terrain vehicle, thereby enhancing the heat dissipation and noise reduction effects of the vehicle.

### BRIEF DESCRIPTION OF THE DRAWINGS

FIG. 1 is a perspective view of an all-terrain vehicle in present application.
FIG. 2 is a side view of the all-terrain vehicle in present application.
FIG. 3 is a perspective view of a prime mover assembly and a transmission assembly in the present application.
FIG. 4 is a perspective view of a frame in the present application.
FIG. 5 is a perspective view of a frame in the present application showing a first mounting bracket.
FIG. 6 is an enlarged view of part A in FIG. 5.
FIG. 7 is a bottom perspective view of a saddle assembly in the present application.
FIG. 8 is a perspective view of the frame and a mounting bracket assembly in the present application.
FIG. 9 is an exploded view of a second mounting bracket in the present application.
FIG. 10 is a perspective view of the frame and a towing bracket in the present application.
FIG. 11 is an exploded view of the towing bracket in the present application.
FIG. 12 is a side view of the frame and a shelf in the present application.
FIG. 13 shows the shelf and a plurality of combination boards in the present application.
FIG. 14 shows the structure of the shelf in the present application.
FIG. 15 is side view of a backrest in the present application.
FIG. 16 shows the structure of the backrest in the present application.
FIG. 17 shows the mounting structure of the backrest in the present application.
FIG. 18 shows the mounting structure of a prime mover assembly and a transmission assembly in the present application.
FIG. 19 is an exploded view of a first cradle in the present application.
FIG. 20 is a perspective view of a buffer in the present application.
FIG. 21 is a perspective view of a second cradle in the present application.
FIG. 22 is an enlarged view of part B in FIG. 21.
FIG. 23 is a perspective view of a mount plate in the present application.
FIG. 24 is a perspective view of a mount bracket in the present application.
FIG. 25 is an enlarged view of part C in FIG. 24.
FIG. 26 is a perspective view of a license plate holder in the present application.
FIG. 27 is a perspective view of a license plate holder in the present application.
FIG. 28 is a perspective view of a bumper in the present application.
FIG. 29 is a side view of the all-terrain vehicle in the present application.
FIG. 30 is a perspective view of a fuel system in the present application.
FIG. 31 is a view of a insulation pad in the present application.
FIG. 32 is another perspective view of the fuel system in the present application.
FIG. 33 is an enlarged view of part D in FIG. 32.
FIG. 34 is a perspective view of a manipulation assembly in the present application.
FIG. 35 is a cross section view of a shift ball head in the present application.
FIG. 36 is an enlarged view of part E in FIG. 1.
FIG. 37 is a perspective view of a frame and a brake assembly in the present application.
FIG. 38 is a view of a tee connector in the present application.
FIG. 39 is a perspective view of a steering assembly in the present application.
FIG. 40 is a perspective view of a handlebar fixing device in the present application.
FIG. 41 is a perspective view of the structure of the EPS mount in the application.
FIG. 42 is a view of an exhaust system in the present application.
FIG. 43 is a perspective view of a muffler and an insulation cover in the present application.
FIG. 44 is a perspective view of a vehicle cover in the present application.
FIG. 45 is a perspective view of an air intake system in the present application.
FIG. 46 is a side view of a cooling system in the present application.
FIG. 47 is a perspective view of the cooling system in the present application.
FIG. 48 is a perspective view of an adapter bracket in the present application.
FIG. 49 is a perspective view of the adapter bracket and a water pipe clamp in the present application.
FIG. 50 is a perspective view of the cooling system mounted on the frame in the present application.
FIG. 51 is cross section view of the water pipe clamp in the present application.
FIG. 52 is a perspective view of the structure on the right side of the vehicle cover in the present application.
FIG. 53 is a side view of the structure on the left side of the vehicle cover in the present application.
FIG. 54 is a perspective view of a first fender in the present application.
FIG. 55 is a perspective view of a first maintenance cover in the present application.
FIG. 56 is a perspective view of the structure of the second fender in the present application.
FIG. 57 is a side view of a second maintenance cover in the present application.
FIG. 58 is a view of a tail panel and trunk in the present application.
FIG. 59 is a perspective view of the trunk in the present application.
FIG. 60 is a side view of the right side of the all-terrain vehicle in the present application.
FIG. 61 is a side view of the left side of the all-terrain vehicle in the present application.
FIG. 62 is a perspective view of a side cover assembly and foot pedal portion in the present application.
FIG. 63 is an exploded view of the first fender and side cover assembly in the present application.
FIG. 64 is a side view of the first fender, the second fender, and a fuel tank guard in the present application.
FIG. 65 is a top view of the vehicle cover in the present application.
FIG. 66 is a perspective view of the first fender and ventilation grille in the present application.
FIG. 67 is a perspective view of the ventilation grille in the present application.
FIG. 68 is a top view of the second fender and a battery box assembly in the present application.
FIG. 69 is a side view of the electrical system in the present application.
FIG. 70 is a view showing a shock-absorbing sheath and an electronic component in the present application.
FIG. 71 is a diagram of a fuse box assembly in the present application.
FIG. 72 is a diagram of the fuse box assembly, a fuse, and a relay in the present application.
FIG. 73 is a perspective view of the frame and foot pedal bracket in the present application.
FIG. 74 is a perspective view of a shelf and handrails in the present application.
FIG. 75 is a cross section view of a hand-operated brake assembly in the present application.
FIG. 76 is an exploded view of the hand-operated brake assembly in the present application.
FIG. 77 is a side view of a pressure maintaining device in the present application.

### DETAILED DESCRIPTION

The following will provide a detailed description of the present invention in conjunction with the specific embodiment shown in the accompanying drawings, but the embodiment shown and the embodiments discussed do not limit the present invention.

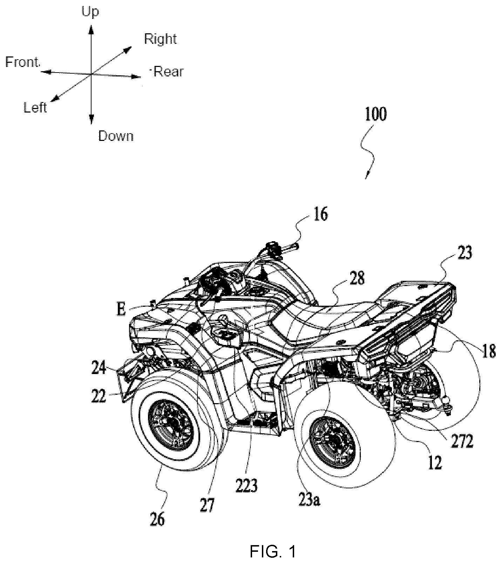

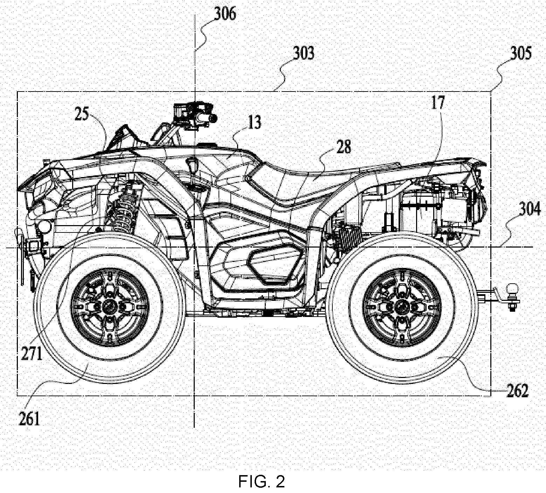

As shown in FIGS. 1 and 2, an all-terrain vehicle 100 includes a frame 12, a fuel system 13, a steering assembly 16, a electrical system 17, an exhaust system 18, a manipulation assembly 22, a vehicle cover 23, a mounting bracket assembly 24, an air intake system 25, a plurality of wheels 26, a suspension assembly 27, and a saddle assembly 28. The frame 12 supports the steering assembly 16, the exhaust system 18, and the vehicle cover 23. The mounting bracket assembly 24 is mounted to the frame 12. The steering assembly 16 controls the running direction of the wheels 26. The gas generated during the running of the all-terrain vehicle 100 is discharged to the external environment through the exhaust system 18. The manipulation assembly 22 is disposed on the frame 12 and connected to the vehicle cover 23. The wheel assembly 26 are connected to the frame 12 by the suspension assembly 27. The general orientations of front, rear, up (upper), down (lower), left and right for the all-terrain vehicle are defined in FIG. 1 for clarity.

As shown in FIG. 2, the wheels 26 includes a pair of first wheels 261 and a pair of second wheels 262, both of which may be used as driving wheel. The first wheels 261 are connected to the steering assembly 16, so that the steering assembly 16 can control the running direction of the wheels 26. The suspension assembly 27 includes a front suspension 271 and a rear suspension 272 (see FIG. 1), with the first wheels 261 connected to frame 12 by the front suspension 271, and the second wheels 262 connected to frame 12 by the rear suspension 272.

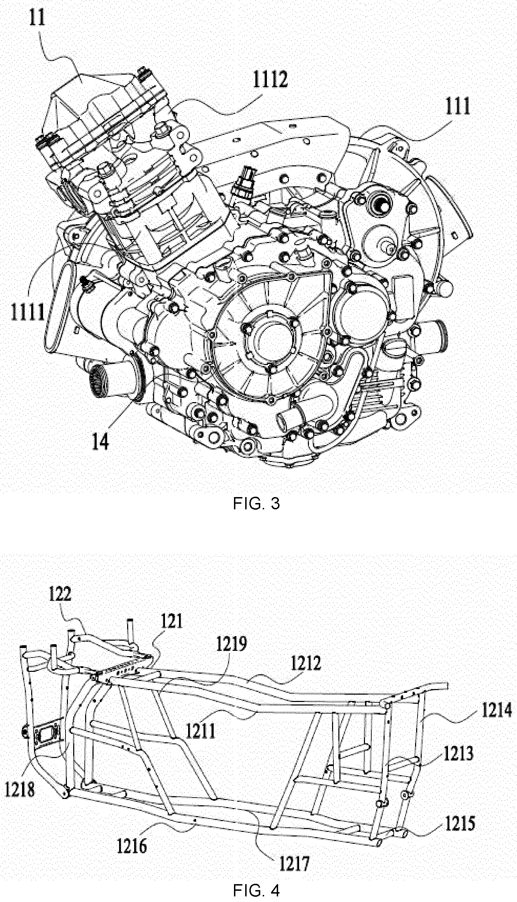

As shown in FIG. 3, the all-terrain vehicle 100 further includes a prime mover assembly 11 and a transmission assembly 14. The prime mover assembly 11 is mounted on the frame 12 and provides power to the all-terrain vehicle 100. The prime mover assembly 11 includes an engine 111 coupled to the transmission assembly 14. The transmission assembly 14 can change the driving force and the running speed of the all-terrain vehicle 100. The engine 111 includes at least one cylinder 1111 and a cylinder head 1112 positioned at one end of cylinder 1111. The cylinder 1111 is equipped with a combustion chamber and piston assembly, and the combustion chamber is connected to the air intake system 25. The engine 111 is mounted on frame 12. In some embodiments, the transmission assembly 14 is a continuously variable transmission (CVT). It should be noted that the transmission assembly 14 may be an automatic transmission (AT), a dual clutch transmission (DCT), or the like.

As shown in FIG. 4, the frame 12 is a metal frame, including a frame body 121 and a front brace 122. The frame body 121 includes a first main beam 1211, a second main beam 1212, a third main beam 1213, a fourth main beam 1214, a fifth main beam 1215, a sixth main beam 1216, a seventh main beam 1217, a eighth main beam 1218, and a ninth main beam 1219. The frame body 121 may be made by welding, and the front brace 122 is connected in front of the frame body 121. The front brace 122 can extend the overall length of frame 12 as an extension of the frame body, which allowing the frame to support more components.

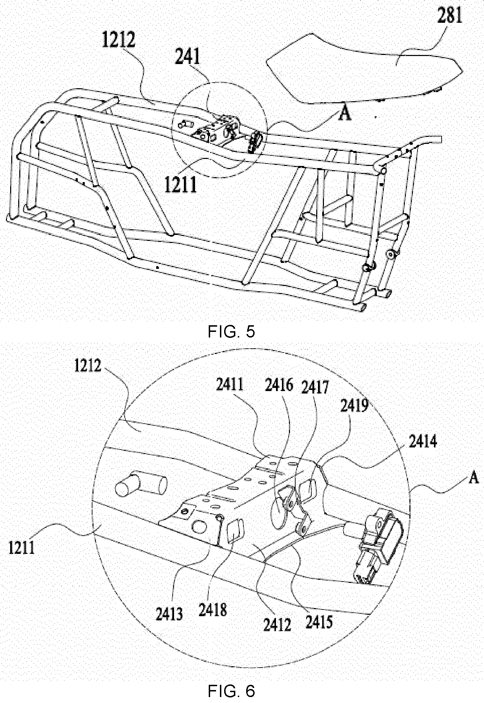

As shown in FIG. 5 to FIG. 9, the mounting bracket assembly 24 is mounted on the frame body 121, and the mounting bracket assembly 24 includes a first mounting bracket 241 and a second mounting bracket 242. The saddle assembly 28 includes a saddle 281. The saddle 281 is at least partially connected between the first mounting bracket 241 and the second mounting bracket 242.

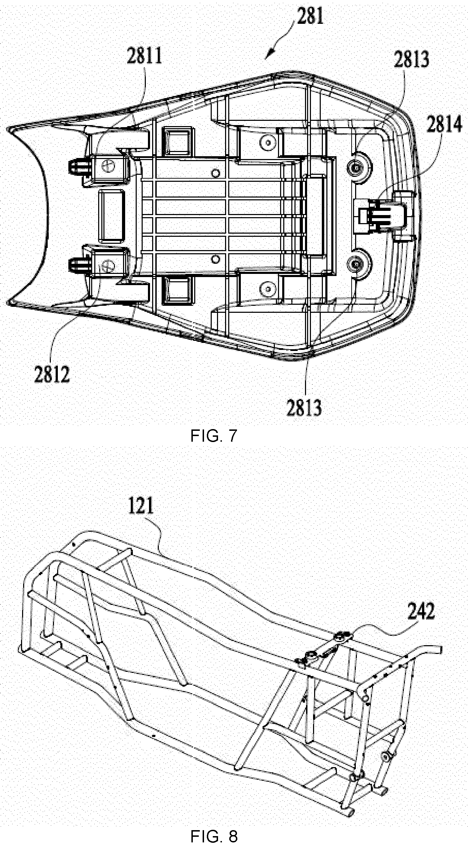

As shown in FIG. 5 and FIG. 6, the first mounting bracket 241 is mounted on the frame body 121. The first mounting bracket 241 is positioned between the first main beam 1211 and the second main beam 1212, and one side of the first mounting bracket 241 is connected to the first main beam 1211. The side of the first mounting bracket 241 away from the first main beam 1211 is connected to the second main beam 1212. The first mounting bracket 241 includes a first surface 2411, a first side 2412, a second side 2413, a third side 2414, and a second surface 2415 parallel to the first surface 2411. A plurality of mounting points including mounting points for fixing fuel system 13 and mounting points for fixing air intake system 25 are distributed on the first surface 2411. The first surface 2411 is an upper surface of the first mounting bracket 241, and the second surface 2415 is a lower surface of the first mounting bracket 241. The first side 2412 is a plane perpendicular to the first surface 2411 and connected to the second surface 2415. The first side 2412 defines a protective hole 2416 for protecting the ignition coil, a limiting member 2417, and a first mounting hole 2418 and a second mounting hole 2419 for docking with the saddle 281. As shown in FIG. 7, along a up-lower direction of the all-terrain vehicle, the lower surface of the saddle 281 includes a first insertion part 2811 and a second insertion part 2812. A symmetry plane 303 is defined as a plane perpendicular to the left-right direction of the all-terrain vehicle 100. The first insertion portion 2811 and the second insertion portion 2812 are substantially symmetrical with respect to the symmetry plane 303. The first insertion portion 2811 is inserted into the first mounting hole 2418, and the insertion portion 2812 is inserted into the second mounting hole 2419, thereby connecting the saddle 281 to the first mounting bracket 241. The ignition coil can be disposed inside the protective hole 2416, and the limiting member 2417 can be connected to the ignition coil, so that the ignition coil is fixed inside the protective hole 2416. The protective hole 2416 can protect the ignition coil, so that it will not interfere with other components or avoid collision with the frame 12. The second side 2413 and the third side 2414 are substantially symmetrical with respect to the symmetry plane 303, and the second side 2413 is connected to the first side 2412, while the third side 2414 is connected to the first side 2412. A plurality of mounting points for fixing the vehicle cover 23 are defined on both the second side 2413 and the third side 2414. The first mounting bracket 241 may be manufactured by an integrated molding, which can reduce manufacturing costs and improve production efficiency. In addition, the first mounting bracket 241 can defines a reliable mounting position for the ignition coil, and can also prevent collisions between the ignition coil and the frame 12 or other components caused by bumps during the running of all-terrain vehicle 100, which improves the utilization rate of internal space of all-terrain vehicle 100 and optimizes the spatial layout of all-terrain vehicle 100.

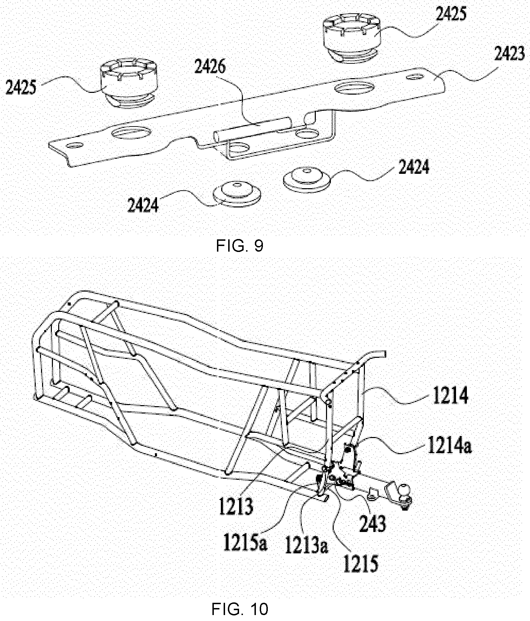

As shown in FIG. 8 and FIG. 9, the second mounting bracket 242 is positioned at the rear of the all-terrain vehicle 100. In some embodiments, the second mounting bracket 242 is positioned between the first main beam 1211 and the second main beam 1212, and is positioned behind the first mounting bracket 241. In some embodiments, the second mounting bracket 242 is mounted on the frame body 121 by bolts. The second mounting bracket 242 includes a mounting bracket body 2423, a first limit block 2424, a second limit block 2425, the fixing column 2426. The first limit block 2424 is mounted on the mounting bracket body 2423 and at least partially passes through the mounting bracket body 2423. The first limit block 2424 can be connected to the electrical system 17 and limit the shaking of the electrical system 17 in the up-down direction. The second limit block 2425 is mounted on the mounting bracket body 2423 and at least partially passes through the mounting bracket body 2423. The second limit block 2425 defines mounting points for the saddle 281, thereby facilitating the fixed-point connection between the saddle 281 and the second mounting bracket 242. As shown in FIG. 7, a third joint 2813 is disposed on the lower surface of the saddle 281. The third joint 2813 is positioned behind the first insertion portion 2811 and the second insertion portion 2812 in the front-rear direction of the all-terrain vehicle 100. The third joint 2813 is clamped with the second limit block 2425 to connect the saddle 281 and the second mounting bracket 242. The first limit block 2424 and the second limit block 2425 are both made of rubber materials, which allows the first limit block 2424 to provide shock absorption and buffering between the electrical system 17 and the mounting bracket body 2423 while limiting the shaking of the electrical system 17. Similarly, the second limit block 2425 can provide shock absorption and buffering between the mounting bracket body 2423 and the saddle 281. In this embodiment, the lower surface of the saddle 281 is further provided with a hook lock 2814 disposed on the rear side of the third joint 2813. The fixing column 2426 is used to connect the hook lock 2814. The fixing column 2426 is cylindrical-shaped and is positioned on the upper surface of the mounting bracket body 2423. The fixing column 2426 is substantially parallel to the upper surface of the mounting bracket body 2423. In some embodiments, the fixing column 2426 is positioned on the rear side of the upper surface of the mounting bracket body 2423 in the front-rear direction of the all-terrain vehicle 100. The fixing column 2426 is substantially parallel to the left-right direction of the all-terrain vehicle 100. Both ends of the fixing column 2426 are fixed to the mounting bracket body 2423. One side of the fixing column 2426 and the mounting bracket body 2423 cooperatively defines a space. The hook lock 2814 pass through the space to be connected to the fixing column 2426, thereby fixing the saddle 281. The second mounting bracket 242 in this embodiment is an integrated structure, which reduces the number of components required for manufacturing and lowers manufacturing costs. It can not only provide support for the saddle 281 and facilitate installation, but also limit the swinging or shaking of electrical system 17.

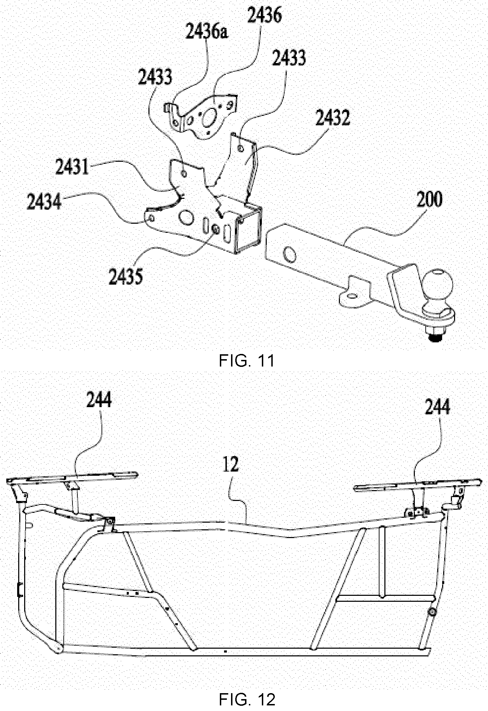

As shown in FIG. 10 and FIG. 11, the mounting bracket assembly 24 further includes a towing bracket 243. The towing bracket 243 is positioned at the rear of the all-terrain vehicle 100 and between the third main beam 1213 and the fourth main beam 1214. The towing bracket 243 is used to provide a mounting position for the towing device 200, which is a device that can achieve the towing function of the all-terrain vehicle 100. The towing bracket 243 includes a first clamp plate 2431 and a second clamp plate 2432. The all-terrain vehicle 100 defines a symmetry plane 303 perpendicular to the left-right direction of the all-terrain vehicle 100, and the all-terrain vehicle 100 is substantially symmetrical with respect to the symmetry plane 303. The first clamp plate 2431 and the second clamp plate 2432 are substantially symmetrical with respect to the symmetry plane 303. The first clamp plate 2431 is connected to the third main beam 1213, the first clamp plate 2431 is connected to the fifth main beam 1215, the second clamp plate 2432 is connected to the fourth main beam 1214, and the second clamp plate 2432 is connected to the fifth main beam 1215. Both the first clamp plate 2431 and the second clamp plate 2432 defines a first mounting point 2433, a second mounting point 2434 and a third mounting point 2435. The first mounting point 2433 defined on the first clamp plate 2431 and the first mounting point 2433 defined on the second clamp plate 2432 are substantially symmetrical with respect to the symmetry plane 303. The second mounting point 2434 defined on the first clamp plate 2431 and the second mounting point 2434 defined on the second clamp plate 2432 are substantially symmetrical with respect to the symmetry plane 303. The third mounting point 2435 defined on the first clamp plate 2431 and the third mounting point 2435 defined on the second clamp plate 2432 are substantially symmetrical with respect to the symmetry plane 303.

In some embodiments, at least one group of first mounting points 2433, at least one group of second mounting points 2434, and at least one group of third mounting points 2435 are defined on both the first clamp plate 2431 and the second clamp plate 2432. The first clamp plate 2431 is connected to the third main beam 1213 at a first group of first mounting points 2433. A first clamping portion 1213a is disposed on the third main beam 1213, and a first group of first mounting points 2433 at least partially passes through the first clamping portion 1213a, and the first clamping portion 1213a is clamped with the first group of first mounting points 2433. In addition, the connection between the first clamping portion 1213a and the first mounting point 2433 can be further improved by threading bolts passing by a first group of the first mounting points 2433. The second clamp plate 2432 is connected to the fourth main beam 1214 by a second group of first mounting points 2433. A second clamping portion 1214a is disposed on the fourth main beam 1214, and a second group of the first mounting points 2433 at least partially passes through the second clamping portion 1214a, and the second clamping portion 1214a is clamped with the second group of the first mounting points 2433. In addition, the connection between the second clamping portion 1214a and the second mounting points 2433 can be further improved by threading bolts passing by a second group of the first mounting points 2433. Fasteners are disposed between the first clamping portion 1213a and the first group of first mounting points 2433 and between the second clamping portion 1214a and the second group of first mounting points 2433. The fasteners can make the connection between the first clamping portion 1213a and the first group of first mounting points 2433 and between the second clamping portion 1214a and the second group of first mounting points 2433 more firm and reliable. The fasteners can also withstand the mechanical force between the frame 12 and the towing bracket 243, thereby reducing friction losses. In some embodiments, the fastener may be a shaft sleeve made of rubber materials, which can effectively reduce the wear between the towing bracket 243 and the frame 12, thereby improving the durability of the towing bracket 243. The first clamp plate 2431 and the second clamp plate 2432 are both connected to the fifth main beam 1215 by one group of second mounting points 2434. A rack 1215a is mounted on the fifth main beam 1215, and two groups of second mounting points 2434 are connected to the two sides of the rack 1215a by means of bolts. The rack 1215a is integrally formed with the fifth main beam 1215, and may be fixed to the fifth main beam 1215 by means of welding or other methods. An accommodation space is defined between the first clamping plate 2431 and the second clamping plate 2432, and the towing device 200 is at least partially accommodated in the accommodation space. The two groups of third mounting points 2435 are respectively connected to both sides of the towing device 200, so that both the first clamping plate 2431 and the second clamping plate 2432 are at least partially attached to the towing device 200. The towing bracket 243 in this embodiment may be a detachable structure according to the needs of users and different usage scenarios, which improves assembly convenience and reducing unnecessary assembly costs. The design of multiple mounting points optimizes the connection between the towing bracket 243 and the frame 12, thereby making the connection between the frame 12 and the towing bracket 243 more reliable and stable, and effectively improving the durability of the towing bracket 243.

As shown in FIG. 11, the towing bracket 243 further includes a power socket seat 2436 and a power socket. The power socket 2436 is mounted between the first clamp plate 2431 and the second clamp plate 2432, and the power socket is mounted on the power socket seat 2436. The power socket is used to provide an output interface for the trailer power supply. One end of the power socket seat 2436 is mounted on the first clamp plate 2431, and the other end of the power socket seat 2436 is mounted on the second clamp plate 2432. Both ends of the power socket seat 2436 define a fourth mounting point 2436a. The fourth mounting point 2436a substantially coincides with the first mounting point 2433, making it easy to fix the power socket seat 2436 on the first clamping portion 1213a by the fourth mounting point 2436a, thereby fixing the connection between the power socket seat 2436 and the third main beam 1213, thereby making it easy to fix the power socket seat 2436 on the second clamping portion 1214a by the fourth mounting point 2436a, thereby fixing the connection between the power socket seat 2436 and the fourth main beam 1214. The power socket seat 2436 can be fixed on the frame 12, and the power socket seat 2436 can be fixed between the first clamp plate 2431 and the second clamp plate 2432, thereby shortening the length of the power cord and facilitating the connection of the trailer power plug. In addition, it is easy to install and disassemble the power socket seat 2436 and the power socket, so that the installation and disassembly of the power socket seat 2436 and power socket can be carried out according to actual needs, thereby improving the practicality and diversity of the all-terrain vehicle 100.

In this embodiment, the fourth mounting point 2436a, the first mounting point 2433, and the first clamping portion 1213a are fixedly connected by bolts. The fourth mounting point 2436a, the first mounting point 2433, and the second clamping portion 1214a are fixedly connected by bolts. Therefore, the power socket seat 2436 can be fixed on the frame 12, and the power socket seat 2436 can be fixed between the first clamp plate 2431 and the second clamp plate 2432, thereby shortening the length of the power cord and facilitating the connection of the trailer power plug. In addition, it is easy to install and disassemble the power socket seat 2436 and the power socket, so that the installation and disassembly of the power socket seat 2436 and power socket can be carried out according to actual needs, thereby improving the practicality and diversity of the all-terrain vehicle 100.

In this embodiment, the power socket can be mounted on the power socket seat 2436 by bolts, which facilitates the stability of the connection between the power socket and the power socket seat 2436, prevents displacement of the power socket during the running of the all-terrain vehicle 100, ensures safety, and improves the service life of the all-terrain vehicle 100.

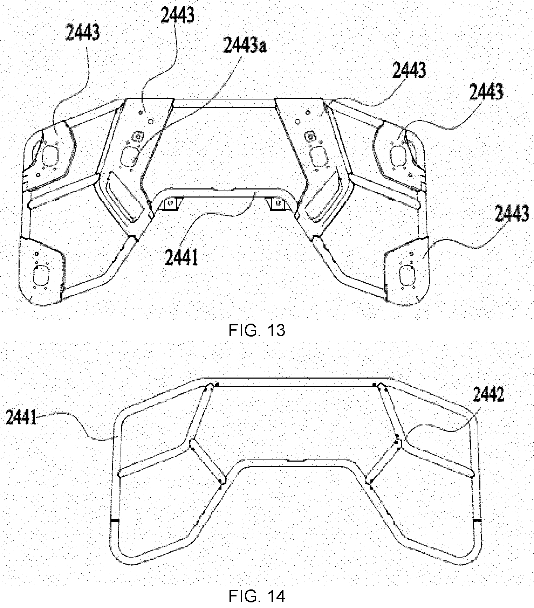

As shown in FIG. 12, the mounting bracket assembly 24 further includes a shelf 244. The shelf 244 may be mounted on frame 12, serving as an extension component of all-terrain vehicle 100. The shelf 244 is used to provide installation locations for external devices or equipment for all-terrain vehicle 100, thereby allowing the all-terrain vehicle 100 to carry more external devices or equipment. As shown in FIG. 13 and FIG. 14, the shelf 244 includes a shelf body 2441, a reinforcement portion 2442, and a combination plate 2443. The reinforcement portion 2442 is used to improve the structural strength of shelf 244, and is positioned in the plane defined by the shelf body 2441. The reinforcement portion 2442 is connected to the shelf body 2441, and the combination plate 2443 can be connected to at least one of the shelf body 2441 or the reinforcement portion 2442. The combination board 2443 defines a mounting portion 2443a for mounting external device or equipment. The mounting portion 2443a may be holes, slots, or the like for easy mounting or connection of external device or equipment. It should be noted that a plurality of combination boards 2443 may be mounted on the shelf body 2441, and the number of the combination boards 2443 can be selected according to the user's needs, which can reduce unnecessary waste, not only shorten the mounting cost of shelf 244, but also greatly improve the user experience. In addition, the shelf 244 can be mounted at the front and/or rear of all-terrain vehicle 100. When the shelf 244 is mounted at the front of all-terrain vehicle 100, the shelf 244 is the front shelf. When shelf 244 is mounted at the rear of all-terrain vehicle 100, the shelf 244 is the rear shelf, and rear handrails may be mounted on the rear shelf. In some embodiments, the shelf body 2441 may be made by an integrated bending forming process, and the reinforcement portion 2442 may be connected to the shelf body 2441 by welding. The combination plates 2443 may be fixed to the shelf body 2441 and/or the reinforcement portion 2442 by welding, which is simple, easy to produce, can simplify the production process, and thus reduce manufacturing costs.

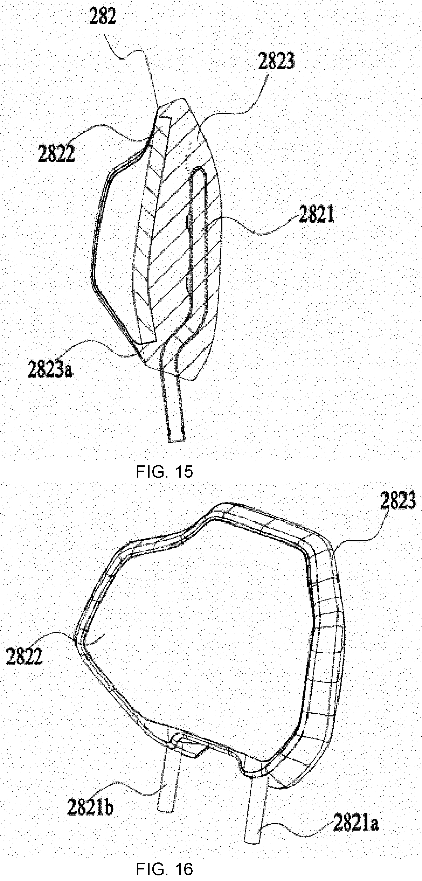

As shown in FIG. 15 to FIG. 17, the saddle assembly 28 further includes a backrest 282 for provide support for the user's back. The all-terrain vehicle 100 further includes a backrest mounting seat 29 for mounting the backrest 282. The backrest 282 is mounted on the shelf 244 by the backrest mounting seat 29.

As shown in FIG. 15, the backrest 282 includes a skeleton 2821, a first sponge layer 2822, and a second sponge layer 2823. The skeleton 2821 is used to connect to the backrest mounting seat 29, and the second sponge layer 2823 is connected to the skeleton 2821. A connection groove 2823a is defined on the second sponge layer 2823, and the first sponge layer 2822 is at least partially disposed within the connection groove 2823a. The connection groove 2823a facilitates the assembly of the first sponge layer 2822 and the second sponge layer 2823, and facilitates the production and processing of the first sponge layer 2822 and the second sponge layer 2823.

As shown in FIG. 16, the skeleton 2821 and the second sponge layer 2823 cooperatively form the supporting body of the backrest 282. The skeleton 2821 includes a first supporting skeleton 2821a and a second supporting skeleton 2821b. The first supporting skeleton 2821a passes through the second sponge layer 2823 and is fixed inside the second sponge layer 2823, and the second supporting skeleton 2821b also passes through the second sponge layer 2823 and is fixed inside the second sponge layer 2823. In some embodiments, the first sponge layer 2822 is disposed on the front side of the second sponge layer 2823 in the front-rear direction of the all-terrain vehicle 100. The second sponge layer 2823 has a thickness greater than the first sponge layer 2822, and the first sponge layer 2822 has a hardness smaller than the second sponge layer 2823. The first sponge layer 2822 is closer to the user compared to the second sponge layer 2823. The first sponge layer 2822 serves as the contact points between the backrest 282 and the user, which can improve the user's comfort and provide a good riding experience. The thickness of the first sponge layer 2822 is in the range from 20 mm to 30 mm. The thickness of the second sponge layer 2823 is in the range from 30 mm to 50 mm. The hardness and softness of different portions of the backrest 282 are inconsistent. The second sponge layer 2823 has a harder hardness and thicker thickness. The second sponge layer 2823 is connected to the skeleton 2821 as the main support for the backrest 282, which can effectively reduce the passenger's sense of touch with the skeleton 2821, and can prevent the first sponge layer 2822 from being too soft and causing excessive deformation, which may touch the skeleton 2821 and prevent the user from noticeably feeling the presence of the skeleton 2821, thereby causing discomfort. In some embodiments, the first sponge layer 2822 can be connected and fixed to the second sponge layer 2823 by bonding, which reduces the difficulty of the manufacturing process and simplifies the processing. This can effectively improve the production efficiency of the backrest 282 and reduce production costs.

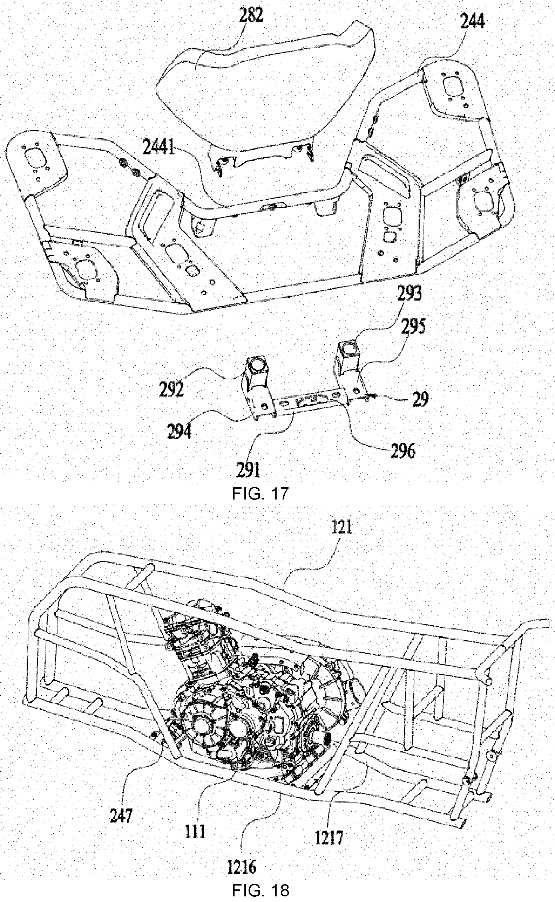

As shown in FIG. 17, the backrest mounting seat 29 is positioned on shelf 244 at the rear of the all-terrain vehicle 100. The backrest mounting seat 29 includes a bottom plate 291, a first cylinder 292, a second cylinder 293, a first support member 294, and a second support member 295. In some embodiments, one end of the first supporting skeleton 2821a is connected to the interior of the first cylinder 292, and one end of the second supporting skeleton 2821b is connected to the interior of the second cylinder 293. The first support member 294 is positioned below the first cylinder 292, and one end of the first support member 294 is connected to the first cylinder 292. The first support member 294 can provide support for the first cylinder 292, thereby keeping the first cylinder 292 stable. The end of the first support member 294 that is far away from the first cylinder 292 is connected to the shelf body 2441. The second support member 295 is positioned below the second cylinder 293, and one end of the second support member 295 is connected to the second cylinder 293. The first support member 294 can provide support for the second cylinder 293, thereby keeping the second cylinder 293 stable. The end of the second support member 295 away from the second cylinder 293 is connected to the shelf body 2441. The first support member 294 and the second support member 295 are both positioned below the shelf body 2441. In some embodiments, the first cylinder 292 and the second cylinder 293 may be of the same structure and/or made of the same materials, or they may be of different structures and/or made of different materials. In some embodiments, the first support member 294 and second support member 295 may be of the same structure and/or made of the same materials, or they may be of different structures and/or made of different materials. The first support member 294 and the second support member 295are connected to the shelf body 2441 by bolts, which ensures a stable connection between the first support member 294 and the shelf body 2441 and a stable connection between the second support member 295 and the shelf body 2441. At the same time, the backrest mounting seat 29 can be removed from the shelf 244, which is a simple and convenient disassembly method. Users can disassemble and assemble the backrest mounting seat 29 according to their needs. The bottom plate 291 is positioned between the first support member 294 and the second support member 295, and one side of the bottom plate 291 is connected to the first support member 294, while the other side of the bottom plate 291 is connected to the second support member 295. A connection portion 296 is disposed on the bottom plate 291 and is connected to the bottom plate 291. The bottom plate 291 is connected to the shelf body 2441 by the connection portion 296. In some embodiments, the connection portion 296 is an L-shaped connection member, which is fixed to the bottom plate 291 by welding and is connected to the shelf body 2441 by bolts. A plurality of weight reduction holes are defined on the bottom plate 291, which can reduce the weight of the bottom plate 291, optimize the force situation of the connection portion 296, and improve the stability of the connection between the connection portion 296 and the shelf body 2441. In some embodiments, a plurality of bushings are provided between the connection portion 296 and the shelf body 2441, between the first support member 294 and the shelf body 2441, and between the second support member 295 and the shelf body 2441. The bushings can effectively reduce the friction between the connection portion 296 and the shelf body 2441, the friction between the first support member 294 and the shelf body 2441, and the friction between the second support member 295 and the shelf body 2441, thereby reducing the wear caused by relative motion between components. This fixing method enables the backrest mounting seat 29 to maintain stability in the front-rear, the left-right, and up-down directions on the shelf body 2441. Moreover, the use of the backrest mounting seat 29 in this application makes the fixation of the backrest 282 more firm and the mounting strength higher, thereby effectively avoiding the shaking of the backrest 282 during the running of the all-terrain vehicle 100 and improving the stability of the backrest 282. The backrest mounting seat 29 in the present application has a simple structure, low production cost and is also convenient for the mounting and disassembly of backrest 282, which can effectively save the time and cost of backrest 282 installation or disassembly.

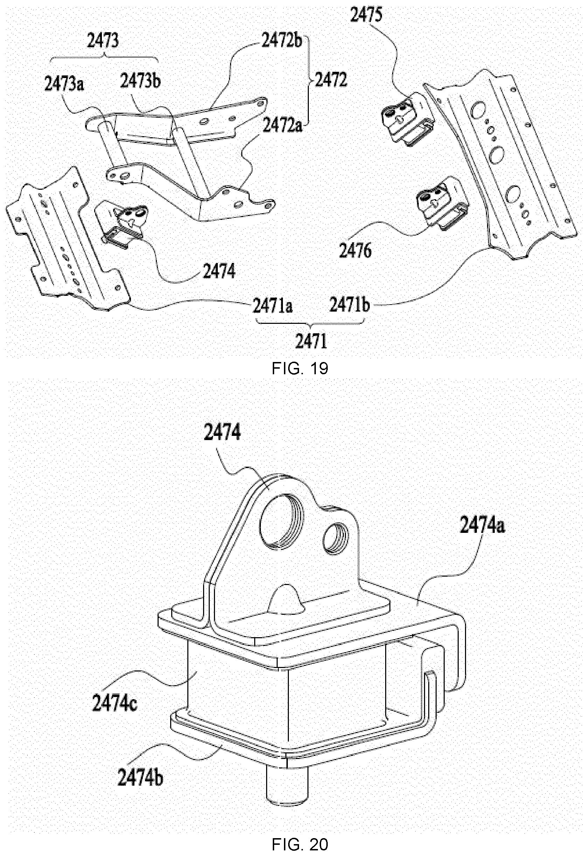

As shown in FIG. 18 and FIG. 19, the mounting bracket assembly 24 further includes a first cradle 247 for fixing the engine 111 and disposed between the sixth main beam 1216 and the seventh main beam 1217. The first cradle 247 includes a fixing portion 2471, an engine mount member 2472, and an engine support beam 2473. The fixing portion 2471 is fixed to the frame body 121 and is used to transfer the gravity or pressure of the engine 111 to the frame 12. The engine support beam 2473 is mounted on the engine mount member 2472, and one side of the engine 111 is connected to the fixing portion by the engine mount member 2472.

As shown in FIG. 19, the fixing portion 2471 includes a first fixing plate 2471a and a second fixing plate 2471b. The engine mount member 2472 includes a first engine mount plate 2472a and a second engine mount plate 2472b. The engine support beam 2473 includes a first engine support beam 2473a and a second engine support beam 2473b. The first fixing plate 2471a is positioned adjacent to the first wheels 261 and is mounted between the sixth main beam 1216 and the seventh main beam 1217. One side of the first fixing plate 2471a is connected to the sixth main beam 1216, and the other side of the first fixing plate 2471a is connected to the seventh main beam 1217. The second fixing plate 2471b is positioned adjacent to the second wheels 262 and is also mounted between the sixth main beam 1216 and the seventh main beam 1217. One side of the second fixing plate 2471b is connected to the sixth main beam 1216, and the other side of the second fixing plate 2471b is connected to the seventh main beam 1217. The first engine support beam 2473a is positioned between the first engine mount plate 2472a and the second engine mount plate 2472b. One end of the first engine support beam 2473a is connected to the first engine mount plate 2472a, and the other end of the first engine support beam 2473a is connected to the second engine mount plate 2472b. One end of the second engine support beam 2473b is connected to the first engine mount plate 2472a, and the second engine support beam 2473b is mounted between the first engine mount plate 2472a and the second engine mount plate 2472b. The second engine support beam 2473b is positioned behind the first engine support beam 2473a. The other end of the second engine support beam 2473b is connected to the second engine mount plate, and the first engine support beam 2473a is substantially parallel to the second engine support beam 2473b. The engine support beams 2473 mounted between the first engine mount plate 2472a and the second engine mount plate 2472b can improve the structure stability of the first engine mount plate 2472a and the second engine mount plate 2472b, thereby enabling the first cradle 247 to have higher support strength. A plurality of engine mount holes for mounting the engine 111 are defined on the end of the first engine mount plate 2472a away from the first engine support beam 2473a. A plurality of engine mount holes for mounting the engine 111 are defined on the end of the second engine mount plate 2472b away from the first engine support beam 2473a. The first fixing plate 2471a is connected to one end of the engine 111 by the first engine mount plate 2472a and the second engine mount plate 2472b, which can reduce the transfer of vibration from engine 111, thereby making the connection between fixing portion 2471 and engine 111 more rigid. In addition, a first buffer 2474 is mounted on the first fixing plate 2471a, and a second buffer 2475 and a third buffer 2476 are mounted on the first fixing plate 2471b. The first buffer 2474 is mounted on the first fixing plate 2471a by bolts, and the first fixing plate 2471a is connected to the first engine mount plate 2472a by the first buffer 2474. The second buffer 2475 and the third buffer 2476 are mounted at certain intervals on the second fixing plate 2471b. The second buffer 2475 and the third buffer 2476 are connected to the side of the engine 111 away from the engine mount member 2472.

As shown in FIG. 20, the first buffer 2474 includes an upper plate 2474a, a lower plate 2474b, and a damping block 2474c. The upper plate 2474a is connected to the first engine mount plate 2472a by bolts, and the damping block 2474c is positioned between the upper plate 2474a and the lower plate 2474b. The upper surface of the damping block 2474c is bonded to the upper plate 2474a, and the lower surface of the damping block 2474c is bonded to the lower plate 2474b. The lower plate 2474b is connected to the first fixing plate 2471a by bolts. It should be noted that in the present application, both the second buffer 2475 and the third buffer 2476 have the structure the same in principle as the first buffer 2474, and the structures of the second buffer 2475 and the third buffer 2476 will not be described in detail. In addition, the damping block 2474c may be made of rubber materials, which can better absorb buffering force and provide shock absorption for the engine 111.

The first buffer 2474, the second buffer 2475 and the third buffer 2476 can absorb the vibration or partial noise generated by the engine 111 when operating. The first buffer 2474, the second buffer 2475 and third buffer 2476 can further improve the stability of the connection between the engine 111 and the first cradle 247. The all-terrain vehicle 100 defines a first projection plane 304 perpendicular to a up-down direction of the all-terrain vehicle 100 and a second projection plane 305 perpendicular to a left-right direction of the all-terrain vehicle 100. In some embodiments, an angle α is defined between a mount plane of the first fixing plate 2471a for mounting the first buffer 2474 and the first projection plane 304, and an angle β is defined between a mount plane of the second fixing plate 2471b for mounting the second buffer 2475 (or the third buffer 2476) and the first projection plane 304. The angle α is in the range from 15 degrees to 45 degrees, and the angle β is in the range from 15 degrees to 45 degrees, which optimizes the loading angles of the first buffer 2474, the second buffer 2475, and third buffer 2476, thereby resulting in higher stability and reliability of the first buffer 2474, the second buffer 2475, and the third buffer 2476. An angle θ defined between the mount plane of the first buffer 2474 and the mount plane of the second buffer 2475 is substantially equal to an angle θ defined between the mount plane of the first buffer 2474 and the mount plane of the second buffer 2476 because the mount plane of the second buffer 2475 is substantially parallel to the mount plane of the third buffer 2476. The angle θ is in the range from 60 degrees to 90 degrees. Within this range, the smaller the angle θ is, the more effective it is to optimize the force situation of the first fixing plate 2471a and the second fixing plate 2471b in the up-down direction of the all-terrain vehicle 100, so that the first fixing plate 2471a and the second fixing plate 2471b can distribute the pressure from the engine 111 in other directions, thereby avoiding the occurrence of the first cradle 247 breaking due to excessive concentration of force. When the angle θ is 60 degrees, the first fixing plate 2471a and the second fixing plate have the best load-bearing effect. It should be noted that the weight of engine 111 is mainly supported by the first fixing plate 2471a and the second fixing plate 2471b. The angle θ defined between the mount plane of the first buffer 2474 and the mount plane of the second buffer 2475 has a significant impact on the force situation of the first fixing plate 2471a and the second fixing plate 2471b. If the angle θ is too small or too large, then the first fixing plate 2471a and the second fixing plate 2471b are subjected to excessive force in the up-down direction, which seriously affects the service life of the first fixing plate 2471a and the second fixing plate 2471b. It should be noted that the angle range above only exemplary. In practical applications, corresponding adjustments may also be made according to the actual situation. In some embodiments, both the first engine support beam 2473a and the second engine support beam 2473b are cylindrical rod-shaped structures. The first cradle 247 in the present application is connected by means of a three-point connection method, which not only provides better fixation effect for engine 111, but also reduces the manufacturing cost of the first cradle 247. In addition, this connection method can expand more space inside the vehicle body, improve the suspension rigidity of engine 111, improve shock absorption effect, and avoid the vibration of the entire vehicle caused by engine 111 oscillation in all-terrain vehicles. It also avoids the large oscillation amplitude of engine 111 during rapid acceleration and deceleration, thereby avoiding interference between the engine 111 and other components.

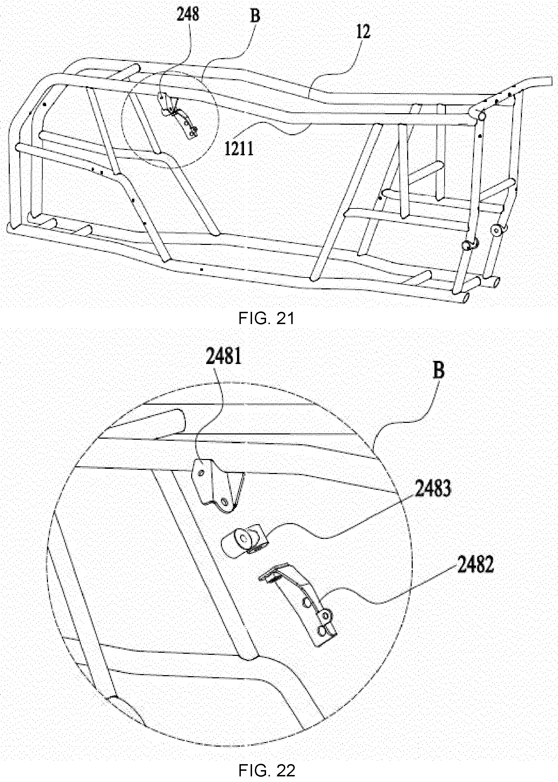

As shown in FIG. 21, the mounting bracket assembly 24 further includes a second cradle 248. The second cradle 248 for limiting the oscillation of the cylinder head 1112 (as shown in FIG. 3) is fixedly mounted on the first main beam 1211. As shown in FIG. 22, the second cradle 248 includes a first fixing member 2481, a second fixing member 2482, and an adapter member 2483. The first fixing member 2481 is connected to the first main beam 1211, and the adapter member 2483 is used to connect the first fixing member 2481 and the second fixing member 2482. In some embodiments, the second cradle 248 is connected to the cylinder head 1112 of the engine 111 by the second fixing member 2482. One end of the second fixing member 2482 is connected to the cylinder head 1112, and the other end of the second fixing member 2482 is connected to the adapter member 2483. The end of adapter member away from the second fixing member 2482 is connected to one end of the first fixing member 2481, and the other end of the first fixing member 2481 is fixedly connected on the first main beam 1211. In some embodiments, the first fixing member 2481 is fixed to the first main beam 1211 by welding. It should be noted that adapter member 2483 is an elastic component. The adapter member 2483 may be made of rubber materials. The amplitude of left-right oscillation of the cylinder head 1112 can be limited by utilizing the elastic deformation of the rubber material, which reduces the transmission of engine 111 vibration, and also reduces the friction and wear between the first fixing member 2481, the second fixing member 2482, and the adapter member 2483, thereby improving the service life of the second cradle 248. The second cradle 248 can prevent engine 111 from swinging too much in the left-right direction, which effectively reduces the lateral swinging distance of the engine 111, thereby reducing the risk of collision between the cylinder head 1112 and the frame 12 or other vehicle components.

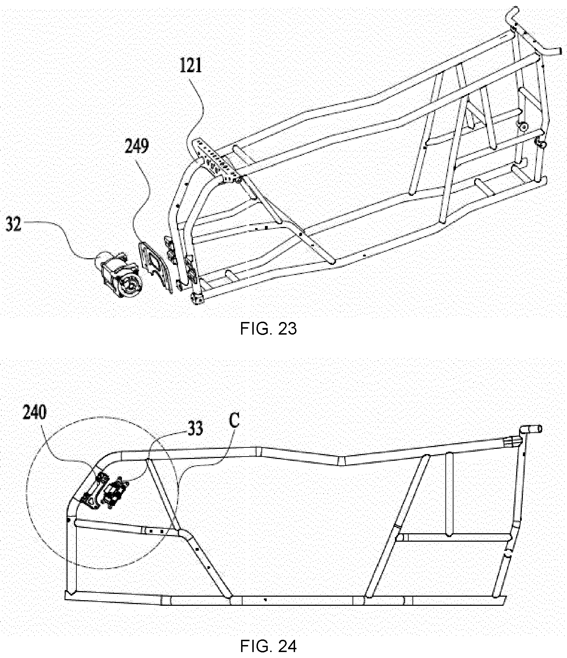

As shown in FIG. 23, the mounting bracket assembly 24 further includes a mount plate 249. The mount plate 249 is mounted on the main body 121 of the frame 12 and is positioned on the front of the frame 12. The mount plate 249 is used to provide mounting points for the winch 32, that is, the winch 32 is mounted on the mount plate 249. The winch 32 is a vertical drum that is rotated by human or mechanical power and a lifting equipment that completes traction operations by horizontally winding flexible components (such as steel wire ropes and chains). It is a self-protection and traction device for all-terrain vehicles. It can perform self-rescue and rescue in harsh environments such as snow, swamps, deserts, beaches, muddy mountain roads, and can also perform tasks such as clearing obstacles, dragging objects, and installing facilities under other conditions. In one embodiment, the mount plate 249 is connected to the frame body 121 by means of bolts. The width of the mount plate 249 along the left-right direction of the all-terrain vehicle 100 is greater than the width of the main body 121, so as to mount the winch 32 more easily. The mount plate 249 is made of metal material with strong rigidity, and one or a plurality of weight reduction holes are defined on the mount plate 249 to reduce the weight of the mount plate 249. The mount plate 249 provided in this embodiment may be selected and mounted according to the user's needs, which reduces production costs, thereby making it easy to install and disassemble, reducing the difficulty of installation and disassembly, and saving time and effort in maintenance.

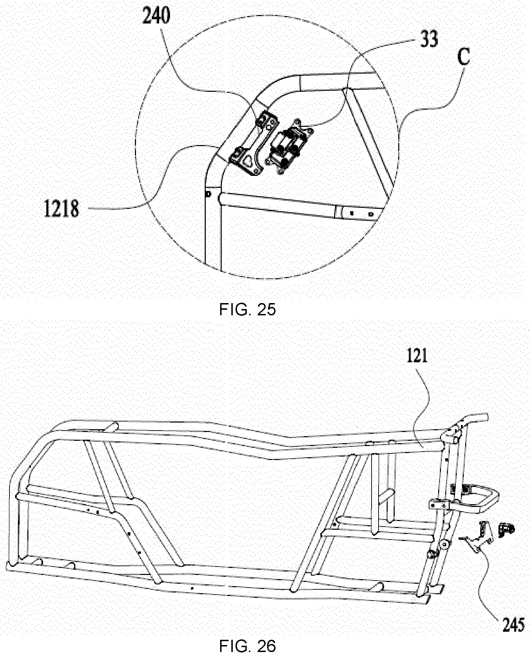

As shown in FIG. 24, the mounting bracket assembly 24 further includes a mount bracket 240. A winch relay 33 is mounted on mounting bracket 240, which is used to conduct/disconnect the current output from electrical system 17 to the winch 32. As shown in FIG. 25, the mounting bracket 240 is used to mounted the winch relay 33. The mounting bracket 240 is positioned at the front of the all-terrain vehicle 100. The mounting bracket 240 is mounted on the eighth main beam 1218. A thread sleeve for guiding the bolts is disposed between the eighth main beam 1218 and the mounting bracket 240, which can facilitate the mount and positioning of the bolts. At the same time, during the movement of the all-terrain vehicle 100, the thread sleeve can absorb the friction force between the mounting bracket 240 and the eighth main beam 1218, thereby reducing wear. Alternatively, the winch relay 33 is connected to mounting bracket 240 by means of bolts. In this embodiment, the mounting bracket 240 is connected to the eighth main beam 1218 of the all-terrain vehicle 100, which can effectively improve the space utilization rate, reduce the layout cost and the maintenance cost of the winch relay 33. In addition, the dust and waterproof effects can be improved, and the service life of the winch relay 33 can be extended.

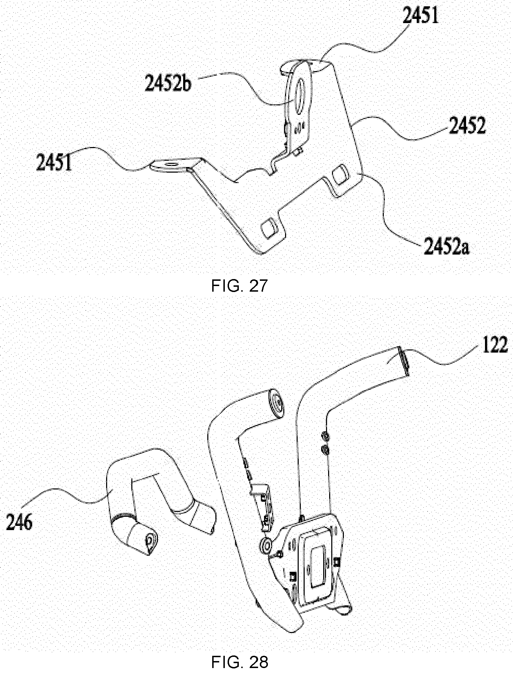

As shown in FIG. 26 and FIG. 27, the mounting bracket assembly 24 further includes a license plate holder 245. The license plate holder 245 is used for providing mounting points for a license plate of all-terrain vehicle 100. The license plate holder 245 includes a fixing portion 2451 and a mounting portion 2452. The fixing portion 2451 is connected to the frame 12 by bolts. As shown in FIG. 27, the mounting portion 2452 comprises a license plate mounting portion 2452a for mounting the license plate and a license plate lamp mounting portion 2452b for mounting a license plate lamp. The license plate is mounted on the license plate mounting portion 2452a by bolts, and the license plate mounting portion 2452a is connected to the fixing portion 2451. An angle defined between the license plate mounting portion 2452a and the fixing portion 2451 is greater than 90 degrees, which can prevent the frame 12 from obstructing the license plate, thereby making it easier for observers to see the license plate more intuitively, and facilitating the mounting of the license plate. The license plate lamp mounting portion 2452b is substantially perpendicular to the fixing portion 2451, and the fixing portion 2451, the license plate mounting portion 2452a, and the license plate lamp mounting portion 2452b are integrated, which can reduce the production cost. At the same time, the license plate holder 245 is mounted on the frame 12 by means of bolts, which is conducive to the maintenance or replacement of license plate mounting bracket 245.

As shown in FIG. 28, the mounting bracket assembly 24 further includes a bumper 246.

The bumper 246 serves as a safety device to protect the front of the vehicle and absorbs external impact forces. If the position of the bumper is set too low in the all-terrain vehicle, the front bumper is prone to collision with the road surface when passing through special road sections. For example, in some steep road sections or steep slopes, the front bumper may collide with the road surface, which is not conducive to the user driving experience. The bumper 246 is mounted on the front brace 122. Threaded holes for connecting bolts are defined on the bumper 246. The bumper 246 is connected to the front brace 122 by means of bolts, thereby allowing the user to complete the mount or disassembly of the bumper 246. In one embodiment, a bushing for guiding the connection of the bolt may be disposed at the connection position of the bolt, which can be placed on the front brace 122, which facilitates the mount and disassembly of the bumper 246, thereby reducing the wear of the front brace 122. The all-terrain vehicle 100 of this application improves the drawbacks of the existing design by mounting a detachable bumper 246, which is conducive to personalized settings for users. Users can also disassemble the bumper 246 according to different usage scenarios, allowing the all-terrain vehicle 100 to obtain a larger approach angle on special road sections, thereby enabling the all-terrain vehicle 100 to drive on steep slopes and overcome larger obstacles.

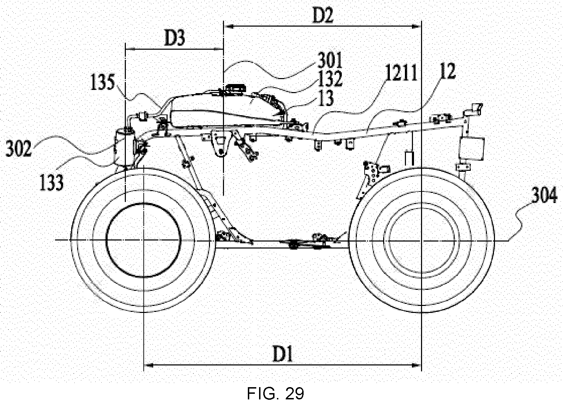

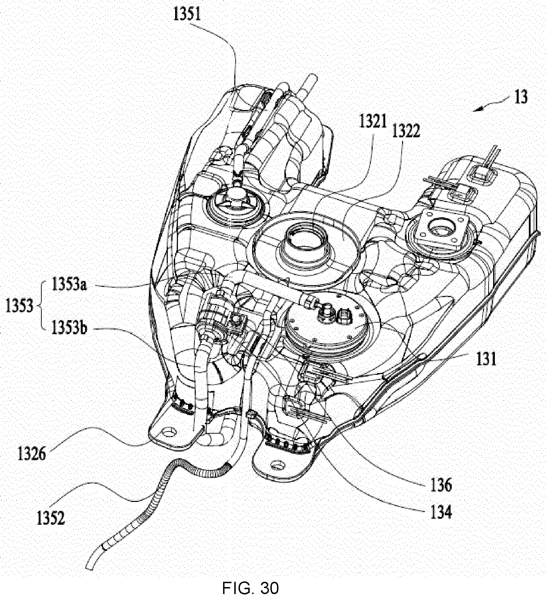

As shown in FIG. 29 and FIG. 30, the all-terrain vehicle 100 further includes a fuel system 13 positioned in the front of the all-terrain vehicle 100. The fuel system 13 for providing fuel to the prime mover assembly 11 is mounted on the frame 12. In one embodiment, the fuel system 13 includes a fuel pump 131, a fuel tank 132, a carbon canister 133, a fuel filter 134, and a pipeline 135. The fuel tank 132 is used for storing fuel. A fuel vapor port is defined on the fuel tank 132, and the carbon canister 133 is connected to the fuel vapor port through the pipeline 135. Activated carbon is placed in carbon canister 133 to absorb excess fuel vapor in the fuel tank 132. The fuel tank 132 is mounted on frame 12. Alternatively, the fuel tank 132 may be at least partially mounted on the first main beam 1211 and connected to the first main beam 1211. The fuel tank 132 may be at least partially mounted on the second main beam 1212 (as shown in FIG. 4) and connected to the second main beam 1212. The fuel tank 132 may be at least partially mounted below the first main beam 1211 or the second main beam 1212. The carbon canister 133 is mounted on the frame 12, and is disposed in front of the fuel tank 132. In the left-right direction of the all-terrain vehicle 100, the carbon canister 133 may be disposed on the left side or the right side of the all-terrain vehicle 100.

The all-terrain vehicle 100 defines a first projection plane 304 perpendicular to a up-down direction of the all-terrain vehicle 100 and a second projection plane 305 perpendicular to a left-right direction of the all-terrain vehicle 100.

A projection of a first wheel 261 axis on the first projection surface 304 along the up-down direction of the all-terrain vehicle 100 is defined as a first projection line, and a projection of a second wheel 261 axis on the first projection surface 304 along the up-down direction of the all-terrain vehicle 100 is defined as a second projection line. The distance between the first projection line and the second projection line along the front-rear direction of the all-terrain vehicle 100 is defined as a first distance D1. The first distance D1 refers to the shortest distance between the first projection line and the second projection line. The fuel tank 132 defines a first symmetry plane 301 in the left-right direction, and the fuel tank 132 is substantially symmetrical with respect to the first symmetry plane 301. The first symmetry plane 301 is perpendicular to the first projection plane 304. A projection of the first symmetry plane 301 on the first projection surface 304 along the up-down direction of the all-terrain vehicle 100 is defined as a third projection line. The distance between the third projection line and the second projection line along the front-rear direction of the all-terrain vehicle 100 is defined as a second distance D2. A ratio of D2 to D1 is in the range from 0.65 to 0.75, which makes the fuel tank 132 far away from the heat source in the front-rear direction of the all-terrain vehicle 100, increases the distance of heat transfer, thereby reducing the interference of heat on the fuel tank 132 and reducing the volatilization of fuel. This is conducive to saving internal space of all-terrain vehicle 100 and improving the stability of fuel tank 132.

Alternatively, a ratio of D2 to D1 is in the range from 0.67 to 0.72, which makes the fuel tank 132 far away from the heat source in the front-rear direction of the all-terrain vehicle 100, increases the distance of heat transfer, thereby reducing the interference of heat on the fuel tank 132 and reducing the volatilization of fuel. This is conducive to saving internal space of all-terrain vehicle 100 and improving the stability of fuel tank 132.

The carbon canister 133 defines a second symmetry plane 302 in the left-right direction, and the carbon canister 133 is substantially symmetrical with respect to the second symmetry plane 302. The second symmetry plane 302 is perpendicular to the first projection plane 304. A projection of the second symmetry plane 302 on the first projection surface 304 along the up-down direction of the all-terrain vehicle 100 is defined as a fourth projection line. The distance between the fourth projection line and the third projection line along the front-rear direction of the all-terrain vehicle 100 is defined as a third distance D3. The third distance D3 refers to the shortest distance between the fourth projection line and the third projection line. A ratio of D3 to D1 is in the range from 0.3 to 0.4. In this application, the pipeline 135 used to connect the carbon canister 133 and the fuel tank 132 has better universality compared to the arrangement method in the existing all-terrain vehicles, and can be applied to vehicle models with different body lengths.

Alternatively, a ratio of D3 to D1 is in the range from 0.33 to 0.36. In this application, the pipeline 135 used to connect the carbon canister 133 and the fuel tank 132 has better universality compared to the arrangement method in the existing all-terrain vehicles, and can be applied to vehicle models with different body lengths.

As shown in FIG. 30, the fuel pump 131 is positioned above the fuel tank 132. The fuel pump 131 is connected to the engine 111 by a pipeline 135 and delivers fuel to the engine 111. The fuel filter 134 is positioned between the engine 111 and the fuel pump 131. The fuel filter 134 is used to prevent particles, water, and impurities from entering the engine 111, thereby ensuring that the precision components in the fuel system 13 are not worn or damaged. The Pipeline 135 includes fuel vapor pipe 1351, leak fuel pipe 1352, and fuel pipe 1353. One end of fuel vapor pipe 1351 is connected to the fuel vapor port, and the other end of the fuel vapor pipe 1351 is connected to the carbon canister 133. Fuel vapor pipe 1351 is capable of guiding the volatile fuel vapor inside the fuel tank 132 to the carbon canister 133. The leak fuel pipe 1352 is used to guide the spilled fuel to the ground during refueling. The fuel pipe 1353 includes a first fuel pipe 1353a and a second fuel pipe 1353b. The first fuel pipe 1353a is disposed between the fuel pump 131 and the fuel filter 134, and the fuel is transmitted to the fuel filter 134 for filtration through the first fuel pipe 1353a. The second fuel pipe 1353b is disposed between fuel filter 134 and engine 111, the filtered fuel is directed to the engine 111 through the second fuel pipe 1353b.

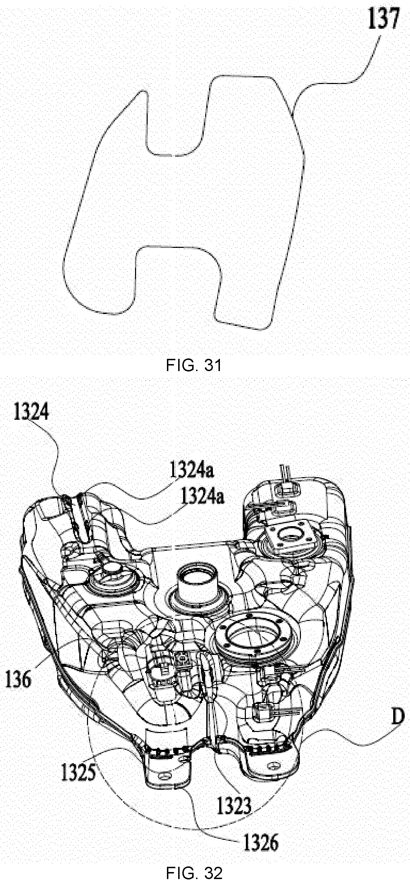

As shown in FIG. 31, an insulation pad 137 is mounted on the bottom surface of fuel tank 132, which is used to isolate the heat source of prime mover assembly 11. The insulation pad 137 is attached to the bottom surface of fuel tank 132 to ensure that the ratio of the coverage area of the insulation pad 137 to the bottom surface area of fuel tank 132 is greater than or equal to 1, so that the bottom surface of fuel tank 132 is completely covered by the insulation pad 137, thereby reducing the heat transferred by prime mover assembly 11 to fuel tank 132 and thereby reducing the amount of fuel volatilization. The contour of the insulation pad 137 is substantially the same as the outer contour of the bottom surface of the fuel tank 132, thereby making it easy for the insulation pad 137 to fully cover the bottom surface of the fuel tank 132. In order to facilitate the fixation between the insulation pad 137 and the fuel tank 132, a layer of adhesive material is spread on the insulation pad 137. The adhesive material is connected and bonded to the bottom surface of the fuel tank 132, so as to allow the insulation pad 137 to fully adhere to the bottom surface of the fuel tank 132. The coverage area of the insulation pad 137 is greater than or equal to the bottom surface area of the fuel tank 132, thereby achieving better adhesion of the insulation pad 137 to the fuel tank 132. At the same time, the insulation pad 137 can also protect the local groove structure of the bottom surface of the fuel tank 132 from being compressed by other components inside the all-terrain vehicle 100.

As shown in FIG. 30, the fuel tank 132 is further equipped with a refueling channel 1321 and a fuel pan 1322. The fuel pan 1322 is disposed above the refueling channel 1321, and the fuel pan 1322 is connected to the leak fuel pipe 1352. The leak fuel pipe 1352 is used to export the liquid accumulated on the fuel pan 1322. The spilled fuel during the refueling of the all-terrain vehicle 100 can be received by the fuel pan 1322 and directed to the ground through the leak fuel pipe 1352. It can also export the leaked rainwater and other sewage to protect the fuel tank 132 from pollution. The fuel filter 134 is mounted on the upper surface of the fuel tank 132 by means of a filter bracket 136. The filter bracket 136 defines a chamber, and the maximum diameter size of the chamber is the diameter size of the fuel filter 134. The filter bracket 136 is connected to the fuel tank 132 by bolts, and a convex limit structure is also disposed on the filter bracket 136 to limit the fuel filter 134. Alternatively, the filter bracket 136 may be connected to the fuel tank 132 by means of hot melting, forming an integrated mount structure between the filter bracket 136 and the fuel tank 132. There is no need to disposed other suitable installation positions for the filter bracket 136, which can greatly save assembly space. The fuel tank 132 and fuel filter 134 can be mounted or removed in an integrated manner, thereby making it easy for users to repair or replace.

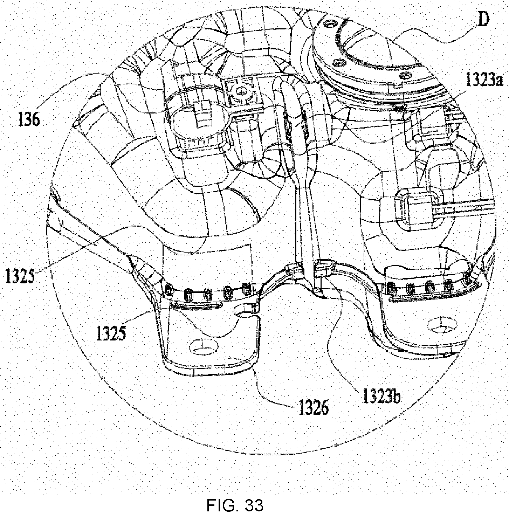

As shown in FIG. 32 and FIG. 33, a first limit slot 1323, a second limit slot 1324, and a third limit slot 1325 are also defined on the fuel tank 132. The first limit slot 1323 is disposed along a parting surface of the fuel tank 132 and is used to place and fix the leak fuel pipe 1352. The depth of the first limit slot 1323 is greater than or equal to the diameter of the leak fuel pipe 1352. At least one first limit portion 1323a is defined in the first limit slot 1323. The parting surface refers to the contact surface of the mold that directly forms the fuel tank 132, which is divided into several portions based on the structure of the fuel tank 132. The contact surface of these portions is the parting surface of the fuel tank 132. According to the structure of fuel tank 132, the parting surface of fuel tank 132 herein refers to a symmetrical plane of the fuel tank 132 along the front-rear direction of the all-terrain vehicle 100, that is, the fuel tank 132 is substantially symmetrical with respect to the parting surface. The first limit slot 1323 is defined on the parting surface of fuel tank 132, which can make the parting surface of fuel tank 132 smoother and can facilitate the machining of the first limit slot 1323. The first limit portion 1323a includes two limit protrusions, which are opposite to each other and are disposed in the first limit slot 1323. The first limit portion 1323a defines a first notch, and the width of the first notch defined by the first limit portion 1323a is smaller than the diameter of the leak fuel pipe 1352, so that the leak fuel pipe 1352 and the first limit portion 1323a are in an interference fit to limit the direction and relative shaking of the leak fuel pipe 1352 on the fuel tank 132. A circular arc groove 1323b is defined on the parting surface of the fuel tank 132 that passes through the leak fuel pipe 1352. The diameter of the opening formed by the circular arc groove 1323b is smaller than the diameter of the leak fuel pipe 1352. The leak fuel pipe 1352 is in an interference fit with the circular arc groove 1323b. This first limit slot 1323 can limit and fix the leak fuel pipe 1352, thereby avoiding the shaking of the leak fuel pipe 1352 and causing wear on the parting surface of the fuel tank 132, which can also protect the leak fuel pipe 1352. The second limit slot 1324 is disposed on the fuel tank 132 and is positioned on the right side of the fuel tank 132. The second limit slot 1324 is used to place and fix the fuel vapor pipe 1351. The depth of the second limit slot 1324 is greater than or equal to the diameter of the fuel vapor pipe 1351. At least one second limit portion 1324a is also provided in the second limit slot 1324, which includes two limit protrusions symmetrically disposed in the second limit slot 1324. The second limit portion 1324a defines a second notch. The width of the second notch defined by the second limit portion 1324a is smaller than the diameter of the fuel vapor pipe 1351, which allows the fuel vapor pipe 1351 to fit with the second limit slot 1324, thereby limiting the direction and relative shaking of the fuel vapor pipe 1351 on the fuel tank 132. The third limit slot 1325 is used to limit the direction or relative shaking of the second fuel pipe 1353b. The third limit slot 1325 is at least partially disposed on the surface of the fuel tank 132 through which the second fuel pipe 1353b passes, in order to limit the direction or relative shaking of the second fuel pipe 1353b. At least four fuel tank fixing portions 1326 are also provided on the fuel tank 132, which are positioned on the front and rear of the fuel tank 132 and are used to fix the fuel tank 132 to the frame 12. The third limit slot 1325 is at least partially defined on the fuel tank fixing portions 1326 on the front. The third limit slot 1325 defines a third notch, and the width of the third notch defined by the third limit slot 1325 is smaller than the diameter of the fuel pipe 1353. The second fuel pipe 1353b is in an interference fit with the third limit slot 1325, and without external force, the second fuel pipe 1353b will not separate from the third limit slot 1325. In this application, a plurality of limit slots are defined on the pipeline 135 laid on the fuel tank 132 to limit the direction of pipeline 135 on the fuel tank 132, and can also provide protection for the pipeline 135, thereby effectively reducing the length of pipeline 135 and reducing manufacturing costs.

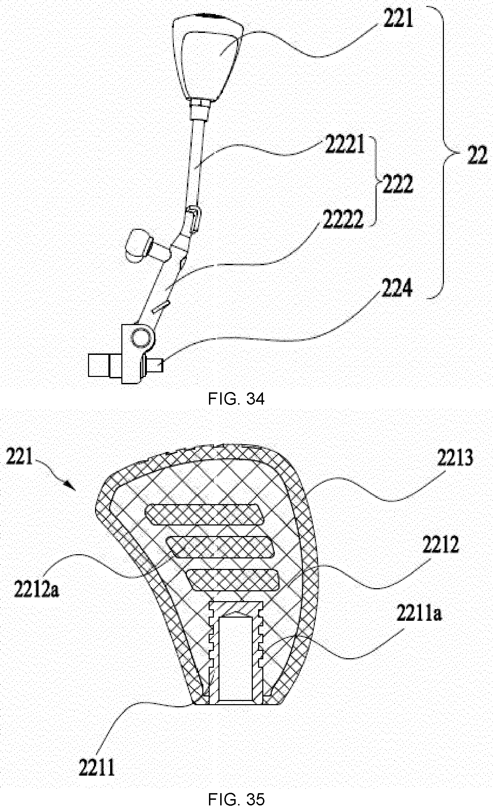

The manipulation assembly 22 is connected to the transmission assembly 14, and the user can change the driving status of all-terrain vehicle 100 by controlling the manipulation assembly 22. The manipulation assembly 22 is mounted on the left side of the all-terrain vehicle 100 (see FIG. 1), which can facilitate the user to control with their left hand. As shown in FIG. 34, the manipulation assembly 22 includes a shift operation portion 221, a shift lever 222, a shift limit cover 223 (see FIG. 1), and a shift rotation shaft 224. The shift operation portion 221 is connected to the shift lever 222, and the end of the shift lever 222 222 away from the shift operation portion 221 is connected to the shift rotation shaft 224. The shift lever 222 passes through the shift limit cover 223 and is connected to the shift rotation shaft 224. As shown in FIG. 35, the shift operation portion 221 includes a base layer 2211, an intermediate layer 2212, and a covering layer 2213. The bottom end of the base layer 2211 is connected to the shift lever 222 by means of threads, and the shift lever 222 is at least partially positioned in the base layer 2211. Several anti-slip grooves 2211a for meshing and connecting with the intermediate layer 2212 are defined on the upper outer surface of the base layer 2211. The width of each anti-slip groove 2211a is substantially equal. At least a portion of the base layer 2211 is disposed in the intermediate layer 2212. Multiple through holes 2212a are defined in the interior of the intermediate layer 2212, and the covering layer 2213 is at least partially penetrated through the through holes 2212a and connected to the intermediate layer 2212, so as to fix the covering layer 2213 on the intermediate layer 2212. The intermediate layer 2212 is at least partially disposed in the covering layer 2213, so as to make the covering layer 2213 in contact with the user and improve the user's comfort. The covering layer 2213 is connected to the intermediate layer 2212 and covers each layer through holes 2212a. The covering layer 2213 defines a closed loop through the through holes 2212a inside the intermediate layer 2212, thereby maximizing the contact area between the covering layer 2213 and the intermediate layer 2212 and thereby ensuring seamless connection and fixation between the two. The material hardness used in the intermediate layer 2212 is greater than that of the cover layer 2213. The intermediate layer 2212 and the cover layer 2213 can be achieved through injection molding technology. The intermediate layer 2212 is seamlessly connected to the anti-slip groove 2211a on the base layer 2211 through injection molding, thereby fixing the intermediate layer 2212 on the base layer 2211. Alternatively, the base layer 2211 may be an embedded component, which may be made of a metal material, which can make the connection between the shift operation portion 221 and the shift lever 222 more stable. To ensure user comfort during use, the covering layer 2213 may be made of EPDM plastic, which has a softer texture, lower cost, and better injection molding effect. The shift operation portion 221 in this embodiment is less prone to injection molding defects during manufacturing, and its internal structure is more stable. The thickness of the portion where the shift operation portion 221 comes into contact with the user is uniform, the hardness is softer, and the comfort is better. The shift lever 222 includes a first connection portion 2221 and a second connection portion 2222. One end of the first connection portion 2221 is connected to the shift operation portion 221, the other end of the first connection portion 2221 is connected to one end of the second connection portion 2222, and the other end of the second connection portion 2222 is connected to the shift rotation shaft 224. The first connection portion 2221 and the second connection portion 2222 cooperatively define a certain bending angle at the connection, and the bending angle may be in the range from 0 degree to 180 degrees. Both the first connection portion 2221 and the second connection portion 2222 are substantially a cylinder. The bending angle refers to the angle defined by the axis of the first connection portion 2221 and the axis of the second connection portion 2222. In existing terrain vehicles, the position of the manipulation assembly is not reasonable, and the arrangement of the shift operation portion 221 is generally far away from the vehicle cover. For users with relatively shorter arm lengths, the operation is more laborious and lacks universality. Moreover, the user's vision is often obstructed by the vehicle cover, which makes it inconvenient for the user to control. The bending angle can prevent the shift operation portion 221 from being obstructed by the vehicle cover 23, thereby making it easier for users to use and easy to mount or remove. The bending angle may be in the range from 0 degree to 180 degrees in order to facilitate the setting of the second connection portion 2222, make reasonable use of the internal space of the vehicle body, and reduce manufacturing costs. The position of the connection between the first connection portion 2221 and the second connection portion 2222 is lower than the plane where the shift limit cover 223 is positioned, so that the manipulation assembly 22 can be closer to the position of the vehicle cover 23. This can facilitate the user to pull the shift lever 222 through the shift operation portion 221, thereby making the operation more convenient and time-saving.

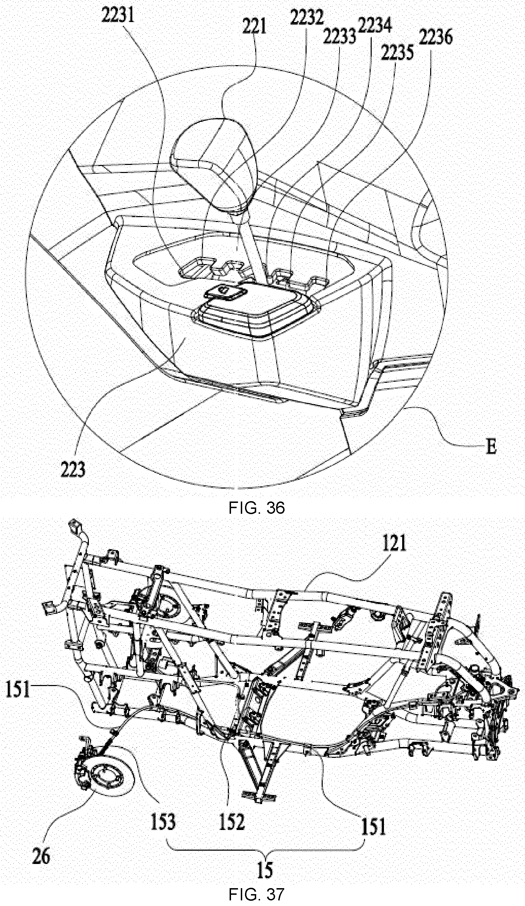

As shown in FIG. 36, the shift limit cover 223 defines a sliding groove 2231, a first gear slot 2232, a second gear slot 2233, a third gear slot 2234, a fourth gear slot 2235, and a fifth gear slot 2236. The sliding groove 2231 is connected to various gear slots, facilitating the movement of shift lever 222 between sliding groove 2231 and various gear slots, thereby achieving the purpose of switching the driving status of all-terrain vehicle 100. Each gear slot corresponds to an all-terrain vehicle 100 driving status gear, for example, the first gear slot 2232 corresponds to a parking gear, the second gear slot 2233 corresponds to a reverse gear, the third gear slot 2234 corresponds to a neutral gear, the fourth gear slot 2235 corresponds to a high gear, and the fifth gear slot 2236 corresponds to a low gear. It should be noted that the driving status of the all-terrain vehicle 100 corresponding to each gear slot can be changed according to actual needs, that is, the arrangement order of each gear slot can be changed according to actual needs. Users can control the shift lever 222 to move in the sliding groove 2231 through the shift operation portion 221, changing the driving status of the all-terrain vehicle 100. Users can control the shift lever 222 to enter the corresponding gear slot according to the driving needs of the all-terrain vehicle 100, thereby achieving the goal of switching the driving status of the all-terrain vehicle 100. The gear slots refers to the general term for the first gear slot 2232, second gear slot 2233, third gear slot 2234, fourth gear slot 2235, and fifth gear slot 2236. In this embodiment, the manipulation assembly 22 is improved by improving the shift lever 222. Based on scientific human-machine interaction design, a more comfortable human-machine interaction feeling can be obtained, with better universality, making the user's control posture of the manipulation assembly more scientific and healthier, avoiding the health impact caused by unscientific posture, and increasing the comfort during use.

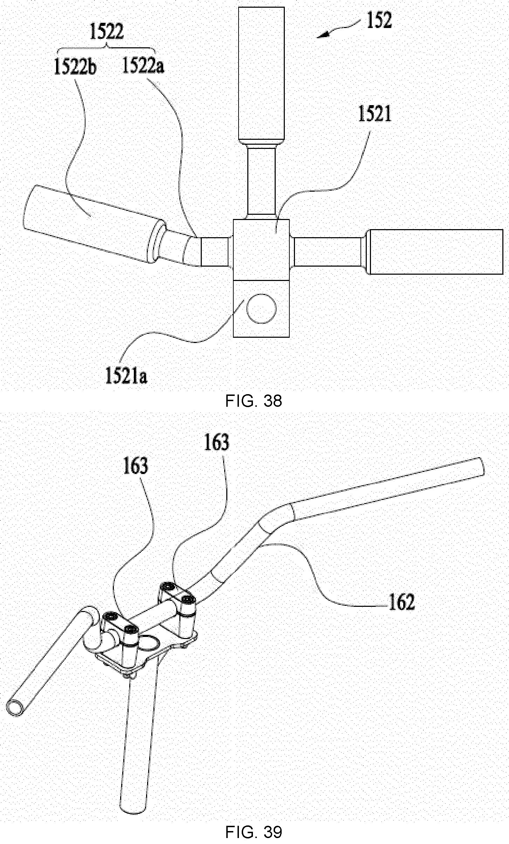

As shown in FIG. 37 and FIG. 38, the all-terrain vehicle 100 further includes a braking system 15, which is associated with the wheel assembly 26 to achieve braking control. Alternatively, the braking system 15 includes a braking pipeline 151, tee connector152, and a brake 153. The tee connector 152 is connected to the braking pipeline 151, and the braking pipeline 151 is connected to the brake 153. The brake system 15 is filled with brake fluid. The brake fluid is transmitted to the brake pipeline 151 through the tee connector 152. The brake fluid is then transmitted to each brake 153. The brake 153 controls the stopping or deceleration of the wheel assembly 26, thereby achieving the braking of the all-terrain vehicle 100. The tee connector 152 includes an adapter block 1521 and an adapter pipe 1522. The adapter block 1521 defines an internal chamber, and the adapter pipe 1522 is connected to the adapter block 1521. The adapter pipe 1522 is connected to the chamber inside the adapter block 1521. The adapter block 1521 may be mounted on the frame body 121 by means of bolts. Three adapter pipes 1522 are disposed on the adapter block 1521, which are respectively disposed on different planes of the adapter block 1521 and may be substantially a "T" shape. One end of each adapter pipe 1522 is connected to the chamber of adapter block 1521, and the other end of each adapter pipe 1522 is connected to brake pipeline 151. The adapter block 1521 defines an adapter fixing portions 1521a. The adapter fixing portions 1521a and three adapter pipes 1522 are respectively disposed on different planes of the adapter block 1521 and are substantially disposed in a "cross" shape, that is, the three adapter pipes 1522 and the adapter fixing portion 1521a are disposed around the adapter block 1521. The adapter block 1521 is mounted on the frame body 121 by means of the adapter fixing portion 1521a and bolts. The brake system 15 transfers the brake fluid to different brake pipelines 151 through a tee connector 152. The adapter pipe 1522 includes a bending portion 1522a and a straight portion 1522b. One end of the bending portion 1522a is connected to the chamber of the adapter block 1521, the other end of the bending portion 1522a is connected to one end of the straight portion 1522b, and the other end of the straight portion 1522b is connected to the brake pipeline 151. Due to the many internal parts in the vehicle body, the brake pipeline 151 needs to transmit brake fluid in different directions. In existing technology, it is mostly disposed by bending the brake pipeline, but this will cause the turning radius of the brake pipeline to be too large, which is not conducive to the flow of brake fluid and the layout of the internal space of the vehicle body. It should be noted that the bending portion 1522a is a bending structure, and the bending angle of the bending structure is in the range from 0 degree to 90 degrees, that is, the adapter pipe 1522 can be bent through the bending portion 1522a, and the bending angle of the adapter pipe 1522 is in the range from 0 degree to 90 degrees. The bending angle of the bending portion 1522a and the adapter pipe 1522 can be adjusted according to the arrangement of the brake pipeline 151, so that the bending portion 1522a and the adapter pipe 1522 can adapt to the arrangement of the brake pipeline 151, thereby making the connection between the bending portion 1522a and the brake pipeline 151 more stable, and thereby making the connection between the adapter pipe 1522 and the brake pipeline 151 more stable, and effectively preventing brake fluid leakage. The bending structure can make the flow of brake fluid smoother. The bending angle of the bending structure can be selected according to the arrangement of the brake pipeline 151, thereby making the arrangement of the brake pipeline 151 easier and effectively saving internal space of the vehicle body.

The all-terrain vehicle 100 defines a first projection plane 304 perpendicular to the up-down direction of the all-terrain vehicle 100. Along the up-down direction of the all-terrain vehicle 100, two projections of the axes of two adjacent adapter pipes 1522 on the first projection plane 304 are respectively defined as a first adapter pipe projection line and a second adapter pipe projection line. An angle defined between the first adapter pipe projection line and the second adapter pipe projection line is in the range from 30 degrees to 150 degrees. Along the up-down direction of the all-terrain vehicle 100, two projections of the axes of two adjacent bending portions 1522a substantially with the two projections of the axes of two adjacent adapter pipes 1522 on the first projection plane 304. The bending portion 1522a and the adapter pipe 1522 can adapt to the arrangement of the brake pipeline 151, thereby making the connection between the bending portion 1522a and the brake pipeline 151 more stable, and thereby making the connection between the adapter pipe 1522 and the brake pipeline 151 more stable, and effectively preventing brake fluid leakage. The bending structure can make the flow of brake fluid smoother. The angle defined between the first adapter pipe projection line and the second adapter pipe projection line can be selected according to the arrangement of the brake pipeline 151, thereby making the arrangement of the brake pipeline 151 easier and effectively saving internal space of the vehicle body.

Alternatively, the diameter of the bending portion 1522a is smaller than the diameter of the straight portion 1522b, and the cross-section of the straight portion is circular, which effectively increases the flux of brake fluid between the straight tube portion 1522b and the brake pipeline 151. The bending portion 1522a may be fixed and mounted with the straight portion 1522b and the adapter block 1521 by means of welding, and the straight portion 1522b is connected to the brake pipeline 151 by riveting. It should be noted that the above connection and fixing method is not limited. In this embodiment, the tee connector 152 can be disposed in different directions of the brake pipeline 151 through the design of the bending portion 1522a, thereby providing more choices for the design of the internal space of the all-terrain vehicle 100, and significantly improving the efficiency of brake fluid flow and making brake fluid flow smoother.

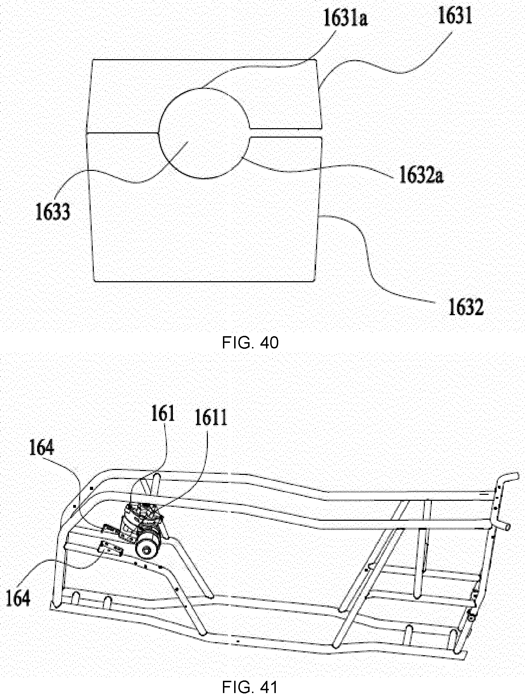

The steering assembly 16 is positioned at the front of the all-terrain vehicle 100. As shown in FIG. 39 to FIG. 41, the steering assembly 16 includes an EPS (Electric Power Steering) 161, a handlebar 162, and a handlebar fixing device 163 for fixing the handlebar 162, which is connected to the EPS 161. The EPS161 is used to aid with steering of the all-terrain vehicle 100. In this embodiment, as shown in FIG. 39, the all-terrain vehicle 100 includes at least two handlebar fixing devices 163. As shown in FIG. 40, the handlebar fixing device 163 includes a first pressure block 1631 and a second pressure block 1632. The first pressure block 1631 is positioned above the second pressure block 1632, and the first pressure block 1631 is detachably fixed to the second pressure block 1632 by bolts. The first pressure block 1631 is equipped with a countersunk hole for hiding bolts, which is more aesthetically pleasing while protecting the bolts. The second pressure block 1632 is equipped with a screw hole for connection, and the bolt passes through and is connected to the countersunk hole and screw hole, thereby connecting and fixing the first pressure block 1631 and the second pressure block 1632. A first groove 1631a is defined on the bottom of the first pressure block 1631, and a second groove 1632a is defined on the second pressure block 1632. When the first pressure block 1631 is connected to the second pressure block 1632, the first groove 1631a and the second groove 1632a cooperatively define a first mount space 1633 where the handlebar 162 run through. The first mount space 1633 is in an interference fit with the handlebar 162, thereby achieving the fixation of the handlebar 162. In existing all-terrain vehicles, the handlebar is generally mounted to the frame by means of bolts, in order to ensure consistent tightness of two sides, calibration is required, which is time-consuming and laborious. In this application, the first pressure block 1631 is at least partially spaced apart from the second pressure block 1632, so that when mounting the handlebar 162, at least a gap is defined between the first pressure block 1631 and the second pressure block 1632. When mounting the handlebar 162, bolts can be used to connect the side where there is no gap between the first pressure block 1631 and the second pressure block 1632, so that at least a portion of the first pressure block 1631 and the second pressure block 1632 fit together. Then, bolts can be used to connect the other side, so that the handlebar 162 can be quickly and stably fixed to the handlebar fixing device 163. In this embodiment, both the first pressure block 1631 and the second pressure block 1632 may be made of aluminum, which can reduce the load-bearing capacity of the all-terrain vehicle 100 and facilitate user operation. In this embodiment, the handlebar fixing device 163 can improve the convenience of assembling the handlebar 162, thereby making the fixation of the handlebar 162 more stable and reliable. The countersunk hole can prevent the bolts used for assembly from being exposed, thereby protecting the bolts.

As shown in Figure 41, the steering assembly 16 further includes an EPS mounting bracket 164 for fixing the EPS 161, the EPS mounting bracket 164 is disposed on both sides of the EPS 161. EPS 161 is connected to the frame body 121 by the EPS mounting bracket 164. The EPS mounting bracket 164 is positioned between the EPS161 and the frame body 121, and is positioned below the EPS 161 to connect and support the EPS 161. The upper surface of the EPS mounting bracket 164 is connected to the EPS 161, and the lower surface of the EPS mounting bracket 164 is connected to the frame body 121. The lower half of the EPS 161 includes a mount fixing portion 1611, which is defined holes to connect EPS 161 with EPS mounting bracket 164 by bolts, thereby achieving fixation between EPS161 and EPS mounting bracket 164. The upper surface of EPS mounting bracket 164 is positioned on the first plane, and the lower surface of the installation fixing part 1611 is positioned on the second plane. The first plane and second plane are substantially parallel, which facilitates the mount between the EPS 161 and the EPS mounting bracket 164 and makes the connection between the EPS 161 and the EPS mounting bracket 164 more stable. The lower surface of the EPS mounting bracket 164 refers to the surface adjacent to the frame body 121, the upper surface of the EPS mounting bracket 164 refers to the surface adjacent to the EPS 161, and the lower surface of mounting fixing portion 1611 refers to the surface adjacent to the EPS mounting bracket 164. In this embodiment, the EPS mounting bracket 164 is more firmly fixed to the EPS161, thereby optimizing the bolt connection method, and effectively improving the shaking sensation of the EPS161 during steering, and avoiding bolt breakage.

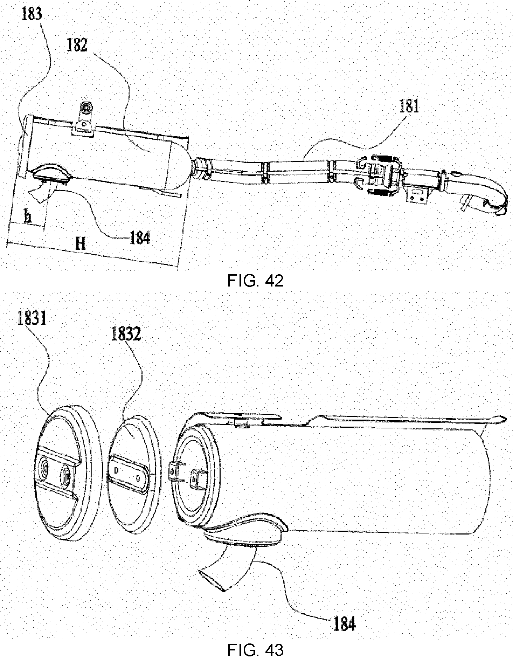

As shown in FIG. 42, the exhaust system 18 includes an exhaust pipe 181 and a muffler 182. The exhaust system 18 is used to exhaust the gas output by the prime mover assembly 11. The gas enters the muffler 182 through the exhaust pipe 181 and is discharged into the outside air through the muffler 182. The exhaust pipe 181 and the muffler 182 extend substantially along the front-rear direction of the all-terrain vehicle 100. The muffler 182 is positioned at the rear of the all-terrain vehicle 100, and is connected to the engine 111 by the exhaust pipe 181. An insulation cover 183 and an tail pipe 184 are mounted on the muffler 182. Gas enters the interior of the muffler 182 through the exhaust pipe 181, and the noise of the gas is treated by the muffler 182. Finally, the gas is discharged into the external air through the tail pipe 184. Alternatively, the tail pipe 184 is a curved structure mounted on the outer wall of the muffler 182, and the tail pipe 184 is in fluid communication with the muffler 182. The tail pipe 184 is mounted on the lower side of the muffler 182. Compared to the arrangement of the tail pipe 184 connected to the tail end of the muffler 182, this can increase the longitudinal length of the tail pipe 184, thereby increasing the volume of the muffler 182. The connection position between the tail pipe 184 and the muffler 182 is defined as a first connection position. The distance between the first connection position and the tail end of the muffler 182 is defined as a distance h. The ratio of the distance h to the total length H of the muffler 182 is in the range from 0.1 to 0.2. This can receive the gas that has been fully silenced by the muffler 182, and can also make space for the installation of other components of all-terrain vehicle 100, while reducing the temperature impact of the discharged gas on other components of the all-terrain vehicle 100.

As shown in FIG. 43, alternatively, the insulation cover 183 is mounted on one end of the muffler 182 away from the exhaust pipe 181. The insulation cover 183 includes a decorative layer 1831 and an insulation layer 1832. The decorative layer 1831 can come into contact with external air, and the insulation layer 1832 is positioned between the decorative layer 1831 and the muffler 182. The insulation layer 1832 can isolate the heat conducted by the muffler 182. It should be noted that in order to isolate as much heat as possible from the muffler 182, the thickness of the insulation layer 1832 is greater than that of the decorative layer 1831. Alternatively, the insulation layer 1832 can use composite materials, which have better insulation effects compared to traditional metal materials. The ratio of the thickness of the insulation layer 1832 to the thickness of the decorative layer 1831 is greater than or equal to 2. The thickness of the insulation layer 1832 is at least twice that of the decorative layer 1831, which can ensure a certain insulation effect while reducing the difficulty of material production and assembly. Both the cross-section of the muffler 182 and the cross-section of the insulation cover 183 may be circular, with the diameter of the insulation layer 1832 greater than the diameter of the tail end of the muffler 182, and the diameter of the decorative layer 1831 greater than the diameter of the insulation layer 1832. It should be noted that the insulation cover 183 may be of other shapes, and the inner diameter of the insulation layer 1832 is greater than the diameter of the muffler 182, while the inner diameter of the decorative layer 1831 is greater than the inner diameter of the insulation layer 1832.

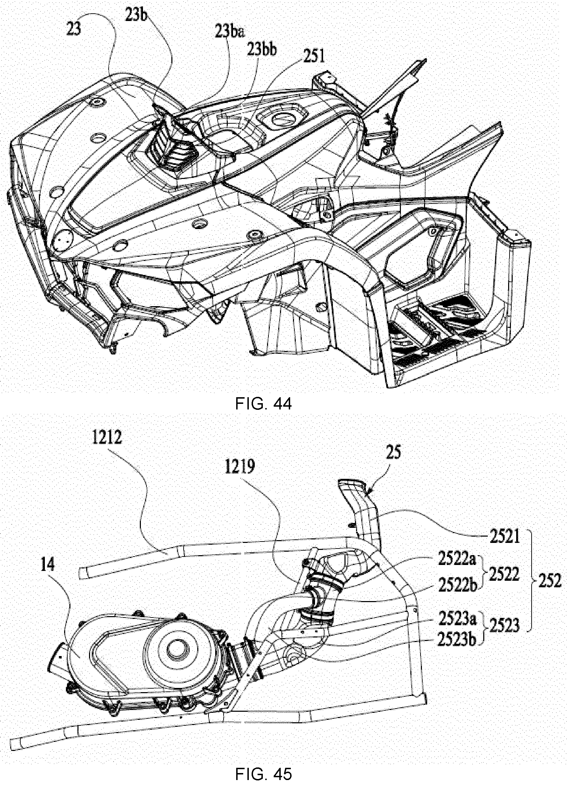

As shown in FIG. 44, the air intake system 25 is used to deliver clean, dry, sufficient, and stable air to the engine 111. The air intake system 25 includes an air inlet 251 and an air intake pipe 252. The vehicle cover 23 includes an instrument shield 23b. The air inlet 251 is at least partially defined on the instrument shield 23b. The instrument shield 23b has an instrument shield windward surface 23ba. The all-terrain vehicle 100 defines a first projection plane 304 perpendicular to an up-down direction of the all-terrain vehicle 100 and a second projection plane 305 perpendicular to a left-right direction of the all-terrain vehicle 100. The first projection plane 304 is perpendicular to the second projection plane 305. The instrument shield windward surface 23ba is substantially perpendicular to the second projection surface 305. A projection of the instrument shield windward surface 23ba on the second projection surface 305 along the left-right direction of the all-terrain vehicle 100 is defined as a first projection line, and a projection of the first projection surface 304 on the second projection surface 305 along the left-right direction of the all-terrain vehicle 100 is defined a second projection line. Alternatively, an angle defined between the first projection line and the second projection line is in the range from 45 degrees to 90 degrees. The length of the instrument shield 23b in the front-rear direction of the all-terrain vehicle 100 can be reduced, thereby making the structure of all-terrain vehicle 100 more compact, improving the space utilization rate of the all-terrain vehicle 100, and improving the driving operability of the all-terrain vehicle 100.

Alternatively, the angle defined between the first projection line and the second projection line is in the range from 50 degrees to 80 degrees. The length of the instrument shield 23b in the front-rear direction of the all-terrain vehicle 100 can be reduced, thereby making the structure of all-terrain vehicle 100 more compact, improving the space utilization rate of the all-terrain vehicle 100, and improving the driving operability of the all-terrain vehicle 100.

At least one air inlet 251 is defined on the instrument shield windward surface 23ba of the instrument shield 23b. A plurality of louvers are disposed on the instrument shield 23b and divide into a plurality of air inlets 251 on the instrument shield windward surface 23ba. The air enters the interior of the instrument shield 23b through the air inlet 251, thereby allowing the ambient air to flow towards the intake pipe 252. The intake pipe 252 is connected to the transmission assembly 14, thereby allowing ambient air to enter the transmission assembly 14, thereby reducing the internal temperature of the transmission assembly 14. The louvers 23bb is substantially perpendicular to the second projection plane 305. A projection of the louver on the second projection plane 305 along the left-right direction of the all-terrain vehicle 100 is defined as a third projection line. An angle defined between the second projection line and the third projection line is in the range from 9 degrees to 11 degrees. The amount of air entering the instrument shield 23b can meet the requirements, and it can also prevent water and other liquids from flowing towards the back of the instrument shield 23b, which prevents water and other liquids from entering the interior of the instrument shield 23b, thereby improving the heat dissipation effect and service life of the all-terrain vehicle 100.

Alternatively, the angle defined between the second projection line and the third projection line is 10 degrees. At this point, it can not only meet the demand for the amount of air entering the instrument shield 23b, but also prevent water and other liquids from flowing towards the back of the instrument shield 23b, which can prevent water and other liquids from entering the interior of the instrument shield 23b, thereby improving the heat dissipation effect and service life of the all-terrain vehicle 100.

Alternatively, the instrument shield windward surface 23ba includes a left instrument shield windward surface and a right instrument shield windward surface. At least one air inlet 251 and at least one louver 23bb is defined on the left instrument shield windward surface, and at least one air inlet 251 and at least one louver 23bb is defined on the right instrument shield windward surface. Alternatively, the number of the air inlet 251 on the left instrument shield windward surface may be/may not be equal to the number of the air inlet 251on the right instrument shield windward surfaces according to needs. Alternatively, the number of the louver 23bb on the left instrument shield windward surface may be/may not be equal to the number of the louver 23bb on the right instrument shield windward surface according to needs. The amount of air entering the instrument shield 23b can meet the requirements, and it can also prevent water and other liquids from flowing towards the back of the instrument shield 23b, which prevents water and other liquids from entering the interior of the instrument shield 23b, thereby improving the heat dissipation effect and service life of the all-terrain vehicle 100.

As shown in FIG. 45, alternatively, the air intake pipe 252 includes a first air intake pipe 2521, a pipe joint 2522, and a second air intake pipe 2523. The pipe joint 2522 includes a first joint portion 2522a and a second joint portion 2522b. The first joint portion 2522a is positioned between the air first intake pipe 2521 and the second air intake pipe 2523 to connect the first air intake pipe 2521 and the second air intake pipe 2523. One end of the first air intake pipe 2521 is connected to the instrument shield 23b, and the other end of the first air intake pipe 2521 is connected to the first joint portion 2522a. One end of the second air intake pipe 2523 is connected to the first joint portion 2522a, and the second joint portion 2522b is positioned between the second air intake pipe 2523 and the transmission assembly 14. The other end of the second air intake pipe 2523 is connected to the second joint portion 2522b, and the end of the second joint portion 2522b far away from the second air intake pipe 2523 is connected to the transmission assembly 14. The first joint portion 2522a and the second joint portion 2522b are both hollow annular structures. The ambient air enters the instrument shield 23b from the air inlet 251, is introduced into the second intake pipe 2523 through the first intake pipe 2521, and is introduced into the transmission assembly 14 through the second intake pipe 2523. Alternatively, the first intake pipe 2521 is connected to the ninth main beam 1219 by means of bolts. The second intake pipe 2523 comprises a first branch pipe 2523a and a second branch pipe 2523b. One end of the first branch pipe 2523a is connected to the first joint portion 2522a, and the other end of the first branch pipe 2523a is connected to the second joint portion 2522b. The second branch pipe 2523b is disposed around the ninth main beam 1219, and one end of the second branch pipe 2523b is connected to the first joint portion 2522a at one side of the first joint portion 2522a. The end of the second branch pipe 2523b far away from the first joint portion 2522a is connected to the first branch pipe 2523a. The inner diameter of the second branch pipe 2523b is smaller than that of the first branch pipe 2523a. In this embodiment, the pipe joint 2522 may be made of elastic materials. For example, the pipe joint 2522 may be made of rubber material. The shaking of intake pipe 252 can be reduced by utilizing the elastic variable of rubber material to absorb the swinging force of intake pipe 252 during the driving or movement of all-terrain vehicle 100, thereby reduce the friction loss of intake pipe 252. A clamp is disposed on the outside of pipe joint 2522 for further fixing the above connection. The ambient air is guided into the interior of the vehicle through the instrument shield 23b, and is directed into the transmission assembly 14 through the intake pipe 252, which effectively reduces the internal temperature of the transmission assembly 14. The intake pipe 252 utilizes a bifurcated intake pipe design to increase the area of the intake pipe, thereby effectively improving the intake air volume of the intake pipe 252, solving the problem of insufficient intake volume, greatly improving the intake efficiency, and achieving better heat dissipation. At the same time, it fully utilizes the internal space of the all-terrain vehicle 100 to improve space utilization.

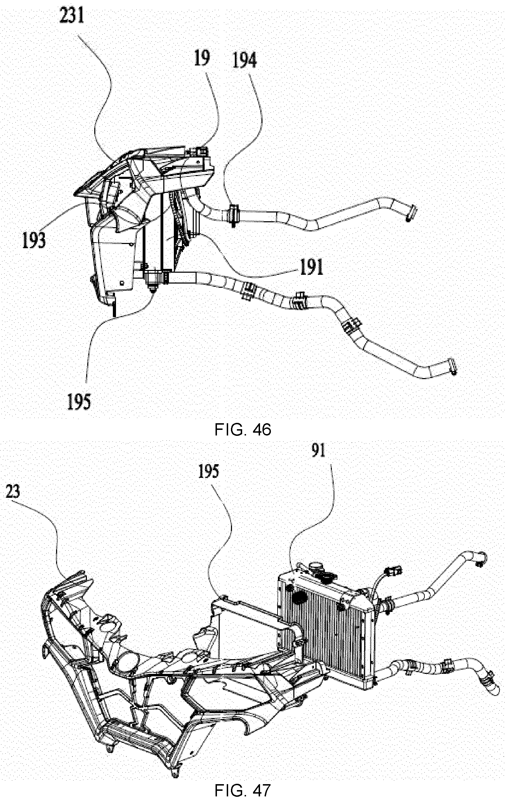

As shown in FIG. 46 to FIG. 48, the all-terrain vehicle 100 further includes a cooling system 19, which can timely transfer the heat inside the all-terrain vehicle 100 to the ambient air, thereby allowing the all-terrain vehicle 100 to operate at the most suitable temperature state. Alternatively, the cooling system 19 further includes a radiator 191, a water tank 192, a fan vent pipe 193, and a water pipe clamp 194. The radiator 191 has a radiator wind-in surface in a wind-in direction and a radiator wind-out surface in a wind-out direction. A wind deflector 195 is mounted on the radiator 191 to prevent the hot air discharged from the radiator wind-out surface of the radiator 191 from being sucked back into the radiator wind-in surface. The air deflector 195 is mounted between the radiator 191 and the vehicle cover 23. The air deflector 195 is mounted on the radiator 191 by means of bolts, and the air deflector 195 is disposed around the radiator wind-in surface, so that an air guide cavity can be defined between the radiator 191 and the vehicle cover 23. The ambient air introduced from the vehicle cover 23 substantially flows along the air guide cavity towards the radiator wind-in surface, which can effectively improve the intake efficiency of the wind deflector 195, effectively block the reflux of hot air, greatly improve the heat dissipation effect of the radiator 191, and reduce the temperature inside and around the radiator 191 of the all-terrain vehicle 100.

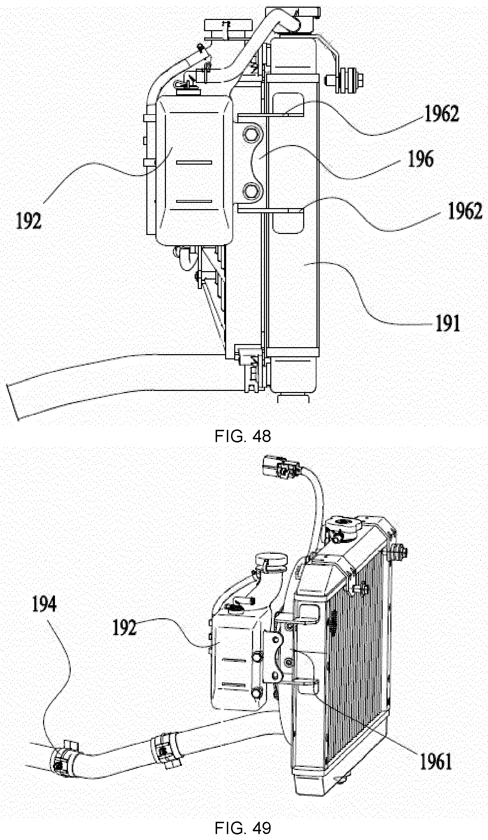

As shown in FIG. 48, an adapter bracket 196 for installing water tank 192 is disposed on one side of the radiator 191. The side of the radiator 191 refers to the surfaces perpendicular to the radiator wind-in surface and the radiator wind-out surface and positioned on two sides of the radiator 191. The water tank 192 is connected to the adapter bracket 196 by bolts, thereby making it easy to disassemble and install the water tank.

As shown in FIG. 49, the adapter bracket 196 includes a bottom plate 1961 and a side plate 1962 fixedly connected together. The bottom plate 1961 is substantially perpendicular to the wind-out surface. The bottom plate 1961 is connected to the water tank 192 by bolts. The side plate 1962 substantially extends along the wind-out surface of the radiator 191 and surrounds one side of the radiator 191. One end of the side plate 1962 is folded to define a flange parallel to the bottom plate 1961. The adapter bracket 196 is fixed to the radiator 191 at the flange. The side plate 1962 extends and surrounds the wind-out surface of the radiator 191, and is connected to one side of the radiator 191.

The adapter bracket 196 is fixed on one side of the radiator 191 by welding, and the bottom plate 1961 may be integrated formed with the side plate 1962. In this embodiment, the water tank 192 may be integrated and mounted on the radiator 191 by the adapter bracket 196. The adapter bracket 196 solves the installation problem of the water tank 192, which is conducive to saving the installation space of the water tank 192, thereby reducing assembly labor and material costs.

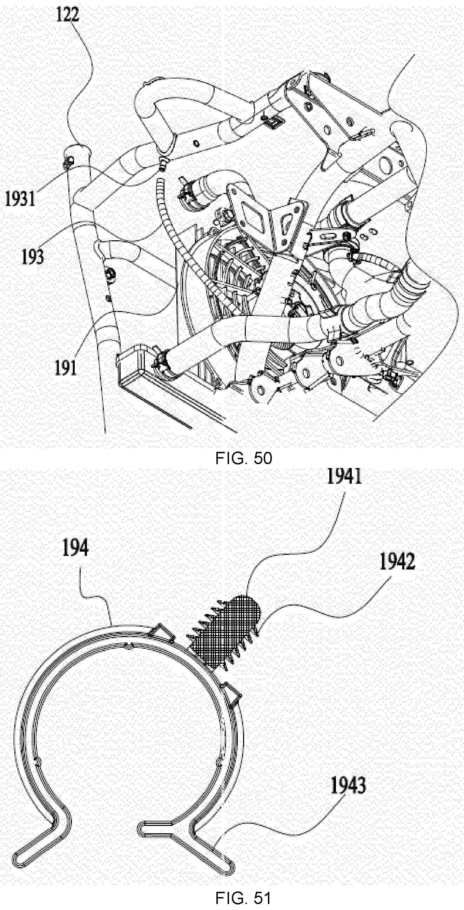

As shown in FIG. 50, the fan vent pipe 193 is used to exhaust the hot air inside the radiator 191 for cooling the radiator 191. The fan vent pipe 193 is positioned behind the radiator 191, and is connected to the front brace 122 to connect an exhaust air path to the front brace 122. The front brace 122 guides the hot air to the outside of the all-terrain vehicle 100. The exhaust air path refers to the running trajectory of the hot air discharged from the fan vent pipe 193 to the front brace 122. Due to the small diameter of fan vent pipe 193, it is prone to water ingress or blockage caused by mud and sand. Therefore, the installation position and exhaust direction of the fan vent pipe 193 are particularly important.

The fan vent pipe 193 is mounted on the front brace 122 by a connector 1931, which is a hollow structure. One end of connector 1931 is connected to the front brace 122, and the other end of connector 1931 is in an interference fit with the fan vent pipe 193, which can guide the hot air inside the radiator 191 to the front brace 122. The ventilation holes and/or weight reduction holes defined on the front brace 122 are used to exhaust the hot air to the external environment, so the exhaust air path of the fan vent pipe 193 are not be considered and limited, which can solve the installation problem of the fan vent pipe 193. The installation cost can be reduced while effectively avoiding mud, water, and the like from entering the fan vent pipe 193 and affecting the performance of the radiator 191.

As shown in FIG. 51, the water pipe of radiator 191 is fixed to the frame 12 by a water pipe clamp 194. The water pipe clamp 194 defines an installation space for fixing the water pipe, and the cross-sectional area of the installation space is substantially circular. The diameter of the cross-sectional area of the installation space is smaller than the diameter of the water pipe, so that the water pipe clamp 194 is in an interference fit with the water pipe, thereby achieving fixation between the water pipe clamp 194 and the water pipe. A limit column 1941 is disposed on the outer wall of the water pipe clamp 194, and at least one pair of limit plates 1942 are disposed on the limit column 1941, The limit column 1941 is connected to the frame 12, allowing the water pipe clamp 194 to be mounted on the frame 12. During installation, the limit plate 1942 plays a guiding role, making it convenient for the water pipe clamp 194 to be mounted on the frame 12. The water pipe clamp 194 is clamped to the frame 12 by the limit plate 1942, thereby making it impossible for the limit column 1941 to move. The limit plate 1942 can prevent the water pipe clamp 194 from falling off and has a good fixing effect. The angle defined between the outer plane of the limit column 1941 and the limit plate 1942 is in the range from 0 degree to 90 degrees. Multiple pairs of the limit plates 1942 are substantially symmetrically mounted on the limit column 1941, which provides better anti reverse effect and makes the connection between the water pipe clamp 194 and the frame 12 more stable and reliable. The water pipe clamp 194 defines an opening connected to the installation space, and flipped edge structures 1943 are disposed on both sides of the opening. The flipped edge structure 1943 facilitates manual installation by expanding the opening of the water pipe clamp 194, thereby making it easier for assembly workers to connect the water pipe with the water pipe clamp 194. A protective sheath can be mounted on the water pipe corresponding to the installation position of the water pipe clamp 194. The outer diameter of the protective sheath should be greater than the diameter of the installation space. The protective sheath is fixed and matched with the water pipe clamp 194 to reduce the wear of the water pipe and have the function of indicating the installation position. When installing, it is only necessary to determine whether the position of the protective sheath corresponds to the water pipe clamp 194 to determine whether there is an error in the installation of the water pipe. The protective sheath can be made of polyethylene material and mounted on the water pipe through heat shrink process. The water pipe clamp 194 may be made of plastic. The fixing of the water pipe is achieved through the use of a water pipe clamp 194, which effectively reduces manual assembly costs and assembly difficulties. At the same time, the water pipe clamp 194 can be made of plastic, which is beneficial for cost control.

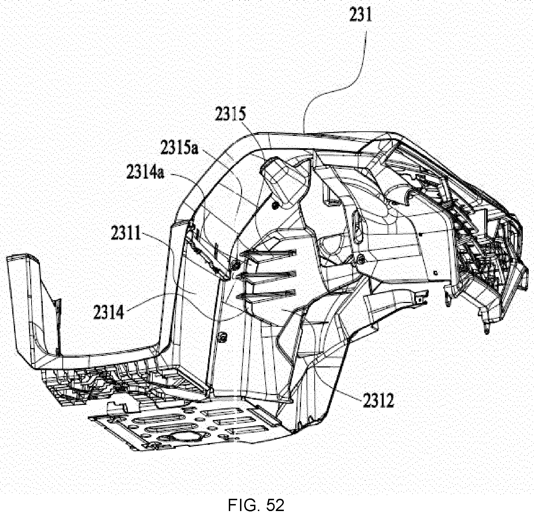

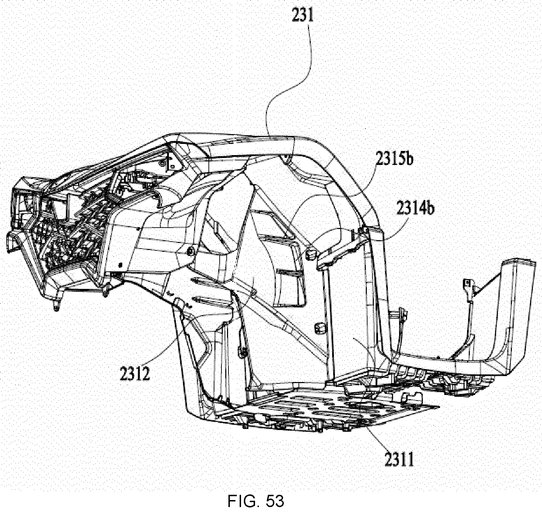

As shown in FIG. 52 and FIG. 53, the vehicle cover 23 includes a first fender 231. The first fender 231 is positioned at the front of the all-terrain vehicle 100. The first fender 231 is mounted on the frame 12, and is used to prevent the first wheel 261 from throwing soil into the interior of the all-terrain vehicle 100 or onto the user. The all-terrain vehicle 100 defines a symmetry plane 303 perpendicular to the left-right direction of the all-terrain vehicle 100, and the all-terrain vehicle 100 is substantially symmetrical with respect to the symmetry plane 303. The first fender 231 is a structure that is substantially symmetrical with respect to the symmetry plane 303, and the first wheel 261 on the right side of the all-terrain vehicle 100 is defined as a first right wheel. A flow-guiding cavity 2314, a flow-guiding plate 2315, a fender windward surface 2311 and a fender wind-in surface 2312 are defined on the first fender 231. The flow-guiding cavity 2314 defines a first flow-guiding cavity 2314a and a second flow-guiding cavity 2314b. The flow-guiding plate 2315 includes a first flow-guiding plate 2315a and a second flow-guiding plate 2315b. For example, the fender windward surface 2311 is positioned adjacent to the rear side of the first right wheel in the front-rear direction of the all-terrain vehicle 100. The fender windward surface 2311 comes into contact with the ambient air that enters from the front side of the all-terrain vehicle 100 while driving. The fender wind-in surface 2312 is connected to the fender windward surface 2311 and is positioned on the side of the first right wheel facing the inside of the vehicle. A first flow-guiding cavity 2314a is defined at the connection between the fender wind-in surface 2312 and the fender windward surface 2311. The first flow-guiding cavity 2314a is used to guide the ambient air from the fender windward surface 2311 into the interior of the all-terrain vehicle 100, thereby reducing the internal temperature of the all-terrain vehicle 100. During the running of the all-terrain vehicle 100, the ambient air continuously converges on the fender windward surface 2311, and the air pressure on the fender windward surface 2311 gradually increases. The air pressure on the fender wind-in surface 2312 is low, forming a pressure difference. The ambient air flows from the high pressure area to the low pressure area, that is, the ambient air flows from the fender windward surface 2311 to the fender wind-in surface 2312, and is introduced into the interior of the vehicle through the first flow-guiding cavity 2314a. The airflow inside the vehicle can be increased, thereby significantly reducing the temperature inside the vehicle and improving riding comfort. The vehicle cover 23 defines an accommodation space 23a (refer to FIG. 1). The first flow-guiding cavity 2314a is in fluid communication with the accommodation space 23a, thereby allowing air to enter the accommodation space 23a, thereby improving the heat dissipation effect of the vehicle cover 23, thereby enhancing the internal heat dissipation effect and service life of the all-terrain vehicle 100, and improving the comfort of the all-terrain vehicle 100.

The first fender 231 further includes several first flow-guiding plates 2315a. The several first flow-guiding plates 2315 are mounted in the first flow-guiding cavity 2314a, and the several first flow-guiding plates 2315a divide the first flow-guiding cavity 2314a into a plurality of ventilation holes. During the running of the all-terrain vehicle 100, the first flow-guiding plate 2315a can increase the intake volume of the first flow-guiding cavity 2314a, thereby increasing the amount of air introduced into the interior of the all-terrain vehicle 100, thereby improving the heat dissipation effect and service life of the all-terrain vehicle 100. The first flow-guiding plate 2315a can block mud and water from entering the first flow-guiding cavity 2314a, prevent the blockage of the first flow-guiding cavity 2314a from affecting the intake efficiency of the first flow-guiding cavity 2314a, thereby improving the intake efficiency of the first flow-guiding cavity 2314a, and thereby improving the heat dissipation effect and service life of the all-terrain vehicle 100.

In this embodiment, the all-terrain vehicle 100 further includes a second flow-guiding cavity 2314b and a second flow-guiding plate 2315b. The second flow-guiding cavity 2314b and the second flow-guiding plate 2315b are both positioned on the left side of the all-terrain vehicle 100. Optionally, the first flow-guiding cavity 2314a and the second flow-guiding cavity 2314b are substantially symmetrical with respect to the symmetry plane 303, and the first flow-guiding plate 2315a and the second flow-guiding plate 2315b are substantially symmetrical with respect to the symmetry plane 303. The several second flow-guiding plates 2315b are mounted in the second flow-guiding cavity 2314b, and the several second flow-guiding plates 2315b divide the second flow-guiding cavity 2317 into several ventilation holes. During the running of the all-terrain vehicle 100, the second flow-guiding plates 2315b can increase the intake volume of the second flow-guiding cavity 2314b, thereby increasing the amount of air introduced into the interior of the all-terrain vehicle 100, thereby improving the heat dissipation effect and service life of the all-terrain vehicle 100. The second flow-guiding cavity 2314b is in fluid communication with the accommodation space 23a, thereby allowing air to enter the accommodation space 23a, thereby improving the heat dissipation effect of the vehicle cover 23, thereby enhancing the internal heat dissipation effect and service life of the all-terrain vehicle 100, and improving the comfort of the all-terrain vehicle 100.

In addition, the second flow-guiding plate 2315b can block mud and water from entering the second flow-guiding cavity 2314b, prevent the blockage of the second flow-guiding cavity 2314b from affecting the intake efficiency of the second flow-guiding cavity 2314b, thereby improving the intake efficiency of the second flow-guiding cavity 2314b, and thereby improving the heat dissipation effect and service life of the all-terrain vehicle 100. In addition, a fender windward surface 2311 and a fender wind-in surface 2312 are also defined on the left of the all-terrain vehicle 100. The left fender windward surface 2311 and the right fender windward surface 2311 are substantially symmetrical with respect to the symmetry plane 303, and the left fender wind-in surface 2312 and the right fender wind-in surface 2312 are substantially symmetrical with respect to the symmetry plane 303. The connection methods of the left fender windward surface 2311 may be the same in principle as the right fender windward surface 2311. The connection methods of the left fender wind-in surface 2312 may be the same in principle as the right fender wind-in surface 2312.

The all-terrain vehicle 100 defines a third projection plane 306 perpendicular to the front-rear direction of the all-terrain vehicle 100, the projection of the first flow-guiding cavity 2314a on the third projection plane 306 is defined as a first projection area, and the projection of the second flow-guiding cavity 2314b on the third projection plane 306 is defined as a second projection area. The area of the first projection area is in the range from 5800 mm² to 9000 mm². The area of the second projection area is in the range from 5800 mm² to 9000 mm². The amount of air imported into the interior of the all-terrain vehicle 100 can be increased, thereby improving the heat dissipation effect and service life of the all-terrain vehicle 100. Both the first flow-guiding cavity 2314a and the second flow-guiding cavity 2314b is in fluid communication with the accommodation space 23a, thereby allowing air to enter the accommodation space 23a, thereby improving the heat dissipation effect of the vehicle cover 23, thereby enhancing the internal heat dissipation effect and service life of the all-terrain vehicle 100, and improving the comfort of the all-terrain vehicle 100.

In one embodiment, the area of the first projection area is in the range from 5800 mm² to 9000 mm². The area of the second projection area is in the range from 5800 mm² to 9000 mm². The amount of air imported into the interior of the all-terrain vehicle 100 can be increased, thereby improving the heat dissipation effect and service life of the all-terrain vehicle 100. Both the first flow-guiding cavity 2314a and the second flow-guiding cavity 2314b is in fluid communication with the accommodation space 23a, thereby allowing air to enter the accommodation space 23a, thereby improving the heat dissipation effect of the vehicle cover 23, thereby enhancing the internal heat dissipation effect and service life of the all-terrain vehicle 100, and improving the comfort of the all-terrain vehicle 100.

The area of the first projection area and the area of the second projection area may be adjusted according to the arrangement of the exhaust system 18. For example, when the exhaust system 18 is mounted on the right side of all-terrain vehicle 100, the area of the first projection area may be greater than that of the second projection area. The air intake of the first flow-guiding cavity 2314a is greater than that of the second flow-guiding cavity 2314b, thereby allowing more air to cool the exhaust system 18, improving the heat dissipation effect of the exhaust system 18, and thus improving the heat dissipation effect of the all-terrain vehicle 100. Meanwhile, due to the fact that some of the heat emitted by the exhaust system 18 will flow in the accommodation space 23a, while the heat on the right side of the all-terrain vehicle 100 is discharged through the first flow-guiding cavity 2314a, the heat on the left side of the all-terrain vehicle 100 can be discharged by setting the second flow-guiding cavity 2314b, thereby improving the heat dissipation effect of the all-terrain vehicle 100. In addition, when the exhaust system 18 is mounted on the right side of all-terrain vehicle 100, the area of the first projection area may be equal to that of the second projection area.

For example, when the exhaust system 18 is mounted on the left side of all-terrain vehicle 100, the area of the first projection area is less than that of the second projection area. The air intake of the first flow-guiding cavity 2314a is less than that of the second flow-guiding cavity 2314b, thereby allowing more air to cool the exhaust system 18, improving the heat dissipation effect of the exhaust system 18, and thus improving the heat dissipation effect of the all-terrain vehicle 100. Meanwhile, due to the fact that some of the heat emitted by the exhaust system 18 will flow in the accommodation space 23a, while the heat on the left side of the all-terrain vehicle 100 is discharged through the second flow-guiding cavity 2314b, the heat on the right side of the all-terrain vehicle 100 can be discharged by setting the first flow-guiding cavity 2314a, thereby improving the heat dissipation effect of the all-terrain vehicle 100. In addition, when the exhaust system 18 is mounted on the left side of all-terrain vehicle 100, the area of the first projection area may be equal to that of the second projection area.

The projection of the exhaust system 18 on the third projection plane 306 is defined as a third projection area. The third projection area, the first projection area and the second projection area are positioned at a substantially the same height in the up-down direction of the all-terrain vehicle 100. The first flow-guiding cavity 2314a or the second flow-guiding cavity 2314b can better cool the exhaust system 18. During running of the all-terrain vehicle 100, the air can substantially cover the exhaust system 18, thereby improving the heat dissipation effect of the exhaust system 18 and thereby improving the heat dissipation effect of the all-terrain vehicle 100.

Alternatively, the first flow-guiding plate 2315a and the second flow-guiding plate 2315b are substantially perpendicular to the third projection surface 306. The flow guiding effect of the first flow-guiding plate 2315a and the second flow-guiding plate 2315b can be improved, thereby increasing the air intake of the first flow-guiding cavity 2314a and the second flow-guiding cavity 2314b, thereby improving the heat dissipation effect and service life of the exhaust system 18, and improving the heat dissipation effect and service life of the all-terrain vehicle 100. In this implementation, the first flow-guiding plate 2315a and the second flow-guiding plate 2315b extend substantially along the front-rear direction of the all-terrain vehicle 100, thereby increasing the intake volume of the first flow-guiding cavity 2314a and the second flow-guiding cavity 2314b, thereby improving the heat dissipation effect and service life of the exhaust system 18, and improving the heat dissipation effect and service life of the all-terrain vehicle 100.

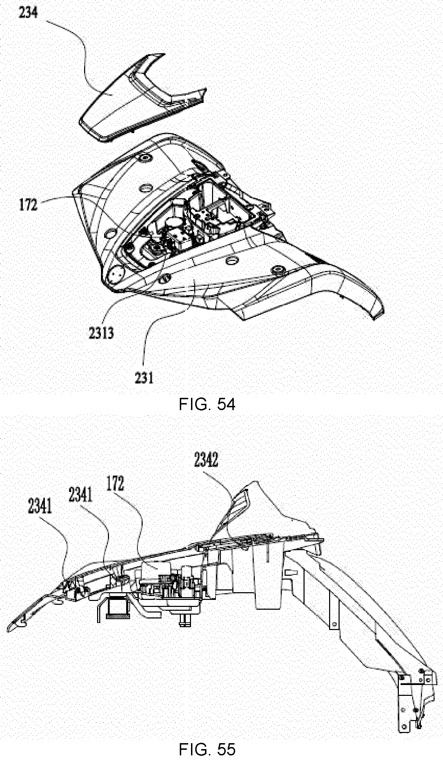

As shown in FIG. 54, a chamber with a certain volume is defined inside the first fender 231, which can serve as the first maintenance chamber 2313. Devices that require frequent inspection, repair, or replacement in the vehicle, such as automatic oil cups, fuses, relays, waterproof plugs, and others can be positioned in the first maintenance chamber 2313, which facilitates the inspection of component losses and replacement, saving maintenance time and thus reducing labor costs.

As shown in FIG. 54 and FIG. 55, the vehicle cover 23 further includes a first maintenance cover 234. The first maintenance cover 234 is used to cover the first maintenance chamber 2313. Through the first maintenance cover 234, the waterproof and dust-proof functions of the first maintenance chamber 2313 are achieved, thereby ensuring the service life of the components inside the first maintenance chamber 2313. The first maintenance cover 234 is connected to the first fender 231. The first maintenance cover 234 comprises a connection portion 2341. The first maintenance cover 234 is connected to the first fender 231 by the connection portion 2341. The connection portion 2341 can limit the movement of one end of the first maintenance cover 234 in the front, back, left, right, and up and down directions. A third clamping portion 2342 is provided at the other end of the first maintenance cover 234, and the first maintenance cover 234 is connected to the first fender 231 by the third clamping portion 2342. Alternatively, the third clamping portion 2342 may be a hook. The all-terrain vehicle 100 defines a symmetry plane 303 perpendicular to the left-right direction of the all-terrain vehicle 100, and the all-terrain vehicle 100 is substantially symmetrical with respect to the symmetry plane 303. Two hooks are disposed on the bottom surface of the first maintenance cover 234. The two hooks are substantially symmetrical with respect to the symmetry plane 303, which can limit the movement of the first maintenance cover 234 in the front, back, left, right, and up and down directions. At least one end of the first maintenance cover 234 and the first fender 231 by means of clearance fit, thereby leaving a gap space for manual grip. This method can effectively simplify the disassembly and assembly process. When repairing the first maintenance chamber 2313, the disassembly and assembly of the first maintenance cover 234 can be completed without the use of tools, which has better re-usability and is more convenient and faster.

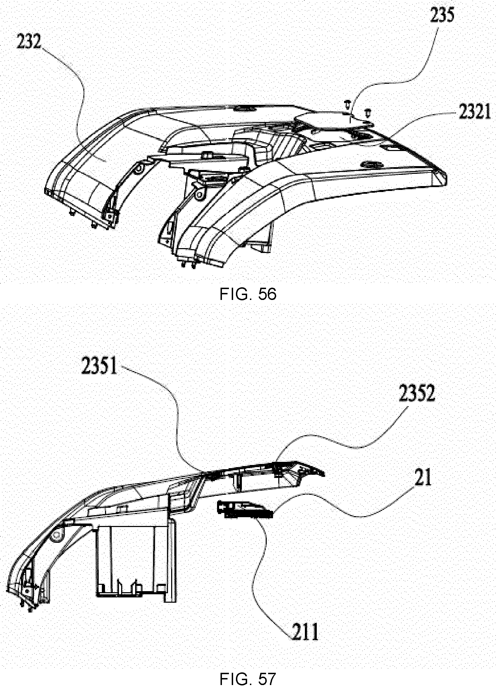

The all-terrain vehicle 100 further includes a control system 21, which includes an ECU (Electronic Control Unit) 211. The ECU 211 is connected to the engine 111 and can control the ignition and start of the engine 111. Generally, the working temperature of the ECU is between -40 °C and 80 °C. The ECU cannot withstand high temperatures and contact with water can easily lead to water damage. All-terrain vehicles are suitable for driving in various environments and often need to be driven in water environments. In addition, areas with high temperatures are present inside all-terrain vehicles, so the layout of the ECU is particularly important. Usually, the ECU needs to be disposed away from heat sources. As shown in FIG. 56, the vehicle cover 23 further includes a second fender 232 and a second maintenance cover 235. The second fender 232 is positioned at the rear of the all-terrain vehicle 100, and is connected to the frame 12, which can be used to prevent the second wheel 262 from throwing soil into the interior of the all-terrain vehicle 100 or onto the user. In this embodiment, the second fender 232 defines a second maintenance chamber 2321, which is disposed far away from the prime mover assembly 11, and the second maintenance chamber 2321 is far away from the wheel assembly 26, that is, in the up-down direction of the all-terrain vehicle 100, the distance between the second maintenance chamber 2321 and the wheel assembly 26 is as far as possible. As shown in FIG. 57, ECU 211 is mounted in the second maintenance chamber 2321. In the working environment of the all-terrain vehicle 100 wading in water, this can prevent water from entering the second maintenance chamber 2321 and prevent damage to ECU 211 caused by water immersion. The second maintenance cover 235 is mounted on the second maintenance chamber 2321, and is used to cover the second maintenance chamber 2321 and the components stored inside the second maintenance chamber 2321. Alternatively, the second maintenance cover 235 includes a first connection portion 2351 and a second connection portion 2352. The first connection portion 2351 is clamped with the second fender 232, and the first connection portion 2351 can limit the movement of the second maintenance cover 235 in the up-down direction. The second connection portion 2352 is connected and fixed to the second fender 232 by bolts, so that the second maintenance cover 235 is fixedly mounted on the second maintenance chamber 2321, which reduces the difficulty of disassembling and assembling the second maintenance cover 235, making it easier for users to open. At the same time, this can arrange ECU 211 in an environment that is easy to maintain and is safer.

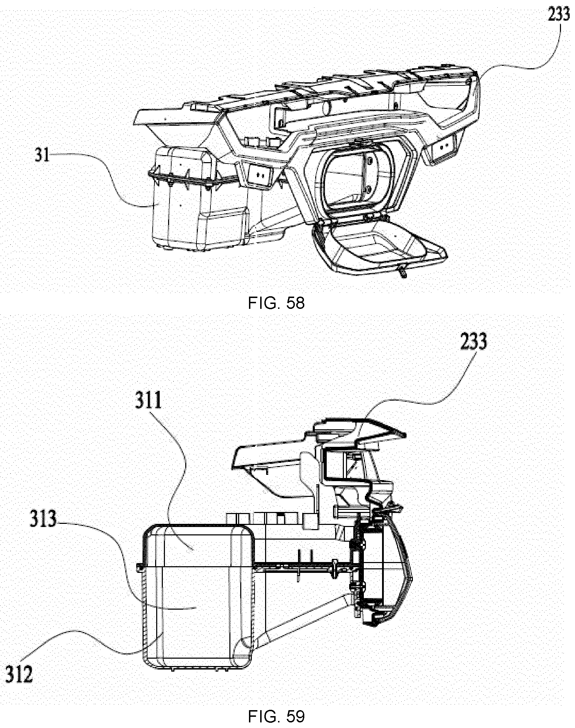

As shown in FIG. 58, the all-terrain vehicle 100 further includes a trunk 31 positioned at the rear of the all-terrain vehicle 100. In existing technology, the trunk volume is too small to store much, thereby making it inconvenient to use. Usually, the trunk is integrated with the trunk panel, which is not easy to disassemble and is quite disappointing for users. The vehicle cover 23 further includes a rear panel 233. In this application, the tail panel 233 is mounted on the second fender 232, and the trunk 31 is connected to the tail panel 233, so that the trunk 31 is mounted at the rear of the all-terrain vehicle 100. As shown in FIG. 59, the trunk 31 includes a first trunk body 311 and a second trunk body 312. The first trunk body 311 is mounted above the second trunk body 312, and the first trunk body 311 is detachably fixed to the second trunk body 312 by bolts. The first trunk body 311 and the second trunk body 312 are equipped with sealing rings to improve the sealing between the first trunk body 311 and the second trunk body 312, thereby improving the waterproof performance of the trunk 31. A storage chamber 313 with a certain volume is defined between the first trunk body 311 and the second trunk body 312. The all-terrain vehicle 100 defines a first projection plane 304 perpendicular to an up-down direction of the all-terrain vehicle 100 and a second projection plane 305 perpendicular to a left-right direction of the all-terrain vehicle 100. The first projection plane 304 is perpendicular to the second projection plane 305. The first trunk body 311 is substantially parallel to the first projection surface. The second trunk body 312 includes an inclined portion and a horizontal portion. The horizontal portion is substantially parallel to the first projection surface 304. The bottom surface of the inclined portion may be an inclined plane, and the inclined surface of the inclined portion is substantially perpendicular to the second projection plane 305. A projection of the first projection surface 304 on the second projection surface 305 along the left-right direction of the all-terrain vehicle 100 is defined as a first projection line, and an projection of the inclined surface on the second projection surface 305 along the left-right direction of the all-terrain vehicle 100 is defined a second projection line. A first angle is defined between the first projection line and the second projection line. The first angle can be adjusted according to needs.

The cross-sectional area of the storage chamber 313 can gradually increase along the inclined direction towards the chamber, and the storage chamber 313 extends along at least one side of the left or right side of the all-terrain vehicle 100. The setting of the inclined surface not only increases the volume of the storage chamber 313, but also facilitates the user's access to items. At the same time, it allows the user to have a broader operating field of view, which can clearly see the situation inside the storage chamber 313 and effectively avoid the problem of obstructed vision when accessing items. In this embodiment, the storage chamber 313 extends along the left side direction of the all-terrain vehicle 100. This method can obtain a larger volume of the storage chamber 313 in a limited internal space of the vehicle body, while avoiding interference with the devices on the right side of the second box 312. For example, the first trunk body 311 may be integrally formed with the second trunk body 312, thereby effectively improving production efficiency and reducing production costs. Compared to the integrated structure of the trunk and trunk panel in existing technology, the trunk 31 in this embodiment can be optionally mounted according to the user's needs, which can reduce the manufacturing cost of the all-terrain vehicle 100, reduce unnecessary expenses for the user, and enable the all-terrain vehicle 100 to meet personalized settings. At the same time, the setting of this trunk 31 is also convenient for the user to install and remove during maintenance. At the same time, the trunk 31 has larger storage space, stable object storage, and convenient access.

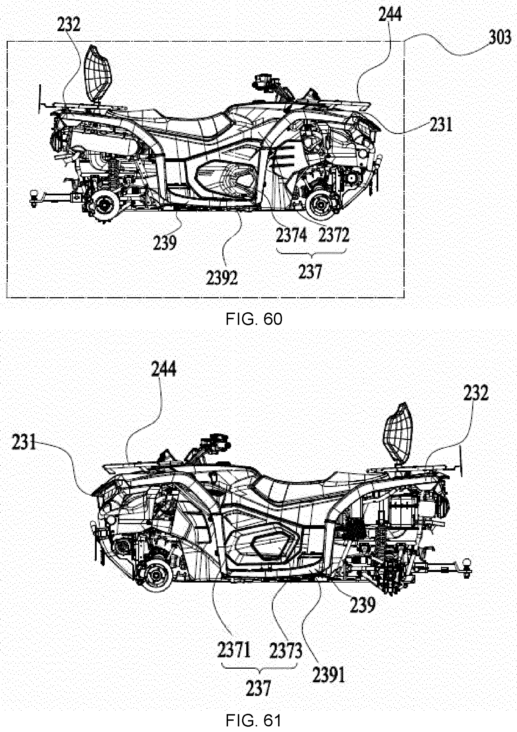

As shown in FIG. 60 and FIG. 61, the vehicle cover 23 further includes a side cover assembly 237 and a foot pedal portion 239. The foot pedal portion 239 includes a first foot pedal 2391 and a second foot pedal 2392. The first foot pedal 2391 is mounted on the left side of the all-terrain vehicle 100 and is connected between the first fender 231 and the second fender 232. The second foot pedal 2392 is positioned on the right side of the all-terrain vehicle 100, and is connected between the first fender 231 and the second fender 232. In the front-rear direction of the all-terrain vehicle 100, one end of the first foot pedal 2391 is connected to the first fender 231, the other end of the first foot pedal 2391 is connected to the second fender 232, one end of the second foot pedal 2392 is connected to the first fender 231, and the other end of the second foot pedal 2392 is connected to the second fender 232.

The prime mover assembly 11 is the power source for the entire all-terrain vehicle 100. The heat generated by the prime mover assembly 11 during operation is very large, and the gas temperature around the engine 111 is generally in the range from 600 °C to 800 °C. To prevent internal components of all-terrain vehicle 100 from malfunctioning due to high temperature, it is necessary to cool down the prime mover assembly 11.

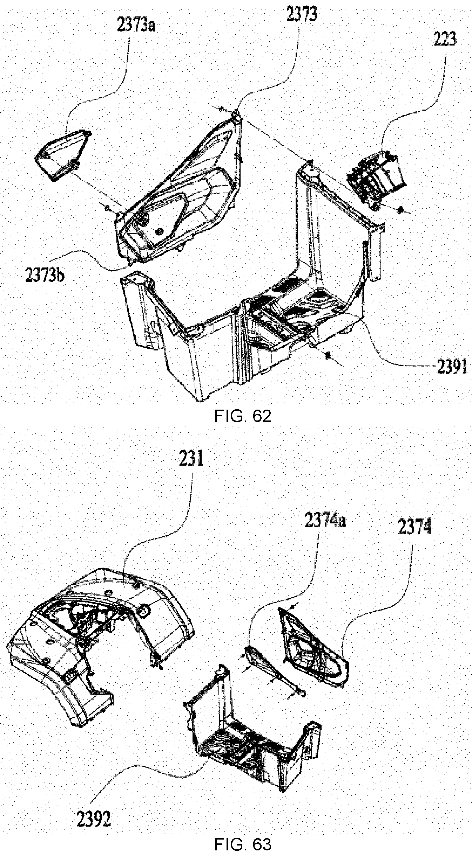

As shown in FIG. 60 and 61, the side cover assembly 237 includes a first side cover 2371, a second side cover 2372, a first insulation cover 2373, and a second insulation cover 2374. The first side cover 2371 and the second side cover 2372 are substantially symmetrical with respect to the symmetry plane 303. The first side cover 2371 is mounted on the left side of the all-terrain vehicle 100, and the second side cover 2372 is mounted on the right side of the all-terrain vehicle 100. The first insulation cover 2373 is mounted on a straddle portion on the side of engine 111. The straddle portion refers to the portion of the all-terrain vehicle 100 positioned adjacent to the inner legs when the user drives the all-terrain vehicle 100. A first airflow passage is defined inside the all-terrain vehicle 100, and the first airflow passage substantially extends from a front of the frame 12, runs through the inner side of the first insulation cover 2373 and extends to a rear of the frame 12. Alternatively, in the left-right direction of the all-terrain vehicle 100, a space in fluid communication with the first airflow passage is defined by the first insulation cover 2373 and the engine 111, and the interior and exterior of the vehicle are completely isolated on the left side of the all-terrain vehicle 100. Alternatively, the space size of the first airflow passage can be increased by increasing the distance between the engine 111 and the first insulation cover 2373, thereby increasing the airflow between the engine 111 and the first insulation cover 2373, which is beneficial for improving heat dissipation efficiency and preventing burns to the user's legs. The first insulation cover 2373 is positioned between the first fender 231 and the second fender 232. As shown in FIG. 62, the first insulation cover 2373 is connected to the first foot pedal 2391 by a plug-in structure, and one end of the first insulation cover 2373 is connected to the first fender 231, and the end of the first insulation cover 2373 far away from the first fender 231 is connected to the second fender 232. Specifically, the first insulation cover 2373 is connected to the first foot pedal 2391 through a connection portion 2373b. The first foot pedal 2391 is equipped with a corresponding insertion portion, which can be a hole, groove, or other structure. The connection portion 2373b is clamped with the insertion portion to limit and fix the first insulation cover 2373, preventing it from jumping left, right, or front and back on the first foot pedal 2391. One end of the first insulation cover 2373 is connected to the first fender 231 by bolts, and the end of the first insulation cover 2373 that is far away from the first fender 231 is connected to the second fender 232. This method restricts the jumping of the first insulation cover 2373 between the first fender 231 and the second fender 232 through bolt fixation, thereby avoiding the shaking of the first insulation cover 2373 during running of the all-terrain vehicle 100. In this embodiment, the connection method between the first insulation cover 2373, the first fender 231, and the second fender 232 may be by means of other connection methods. Similarly, the position and construction method of the insertion portion are not limited. Optionally, a detachable lid 2373a is mounted on the outer surface of the first insulation cover 2373. The detachable lid 2373a is positioned on the side of the first insulation cover 2373 adjacent to the outside of the all-terrain vehicle 100. The detachable lid 2373a is clamped onto the first insulation cover 2373, and the detachable lid 2373a forms a gripping portion with the first insulation cover 2373. During maintenance, the detachable lid 2373a can be disassembled by hand through the gripping portion, without the need for tools, saving time and cost, and is convenient and fast. The width of the gripping portion is greater than the width of the human finger. Specifically, the width of the gripping portion can be set to be greater than or equal to 1 cm to ensure that the human finger can enter the gripping portion, so that the detachable lid 2373a can be disassembled by hand through the gripping portion. It should be noted that the connection method and fixing structure of the first insulation cover 2373 and the detachable lid 2373a are not limited. To ensure the good operation of the all-terrain vehicle 100, frequent inspection/maintenance of the components of engine 111 is required. The detachable lid 2373a is mounted on the side of engine 111, which not only reduces the difficulty of disassembling the quick release cover 2373a, but also shortens the inspection/maintenance time of engine 111. When installing the first insulation cover 2373, the connection portion 2373b of the first insulation cover 2373 is connected to the insertion portion of the first foot pedal 2391 to limit the movement of the first insulation cover 2373 in the left or right or front and rear directions. The first insulation cover 2373 and the first fender 231 are fixed by bolts, and the first insulation cover 2373 and the second fender 232 are fixed by bolts to lock the movement of the first insulation cover 2373 in all directions, thus completing the installation of the first insulation cover 2373.

As shown in FIG. 63, the second insulation cover 2374 and the first insulation cover 2373 are substantially symmetrical with respect to the symmetry plane 303. The second insulation cover 2374 is detachably fixed on the right side of the all-terrain vehicle 100, and the second insulation cover 2374 is mounted on the straddle portion positioned on one side of the transmission assembly 14. A second airflow passage is defined inside the all-terrain vehicle 100, and the second airflow passage substantially extends from a front of the frame 12, runs through the inner side of the second insulation cover 2374 and extends to a rear of the frame 12. It should be noted that the shape, and material of the second insulation cover 2374 are the same in principle as the first insulation cover 2373. During running of the all-terrain vehicle 100, the ambient air entering from the front of the frame body 121 flows through the first insulation cover 2373 by flowing along the first airflow passage, which takes away the heat trapped between the engine 111 and the first insulation cover 2373. Then, the air flows through the second insulation cover 2374 by flowing along the second airflow passage, which takes away the heat between the transmission assembly 14 and the second insulation cover 2374, reducing the heat transferred from the prime mover assembly 11 to the rider from the side of the frame 12, thereby reducing the heat transferred to the user's legs, effectively reducing the temperature of the user's legs, and improving driving comfort. An insulation portion 2374a for isolating the heat inside the all-terrain vehicle 100 is disposed on the second insulation cover 2374. Optionally, the insulation portion 2374a may be made of materials including aluminum foil and ceramic fibers. In this application, the first insulation cover 2373 and the second insulation cover 2374 are respectively enclosed on two sides of the all-terrain vehicle 100 to isolate the all-terrain vehicle 100 from outside in the left-right direction, thereby making the heat dissipation passage inside the all-terrain vehicle 100 to extend from the front to the rear, which effectively improves the ventilation efficiency inside the all-terrain vehicle 100 and can also effectively reduce the noise of the engine 111 during starting or driving the all-terrain vehicle 100. The heat dissipation passage refers to an airflow passage defined by the first airflow passage and the second airflow passage.

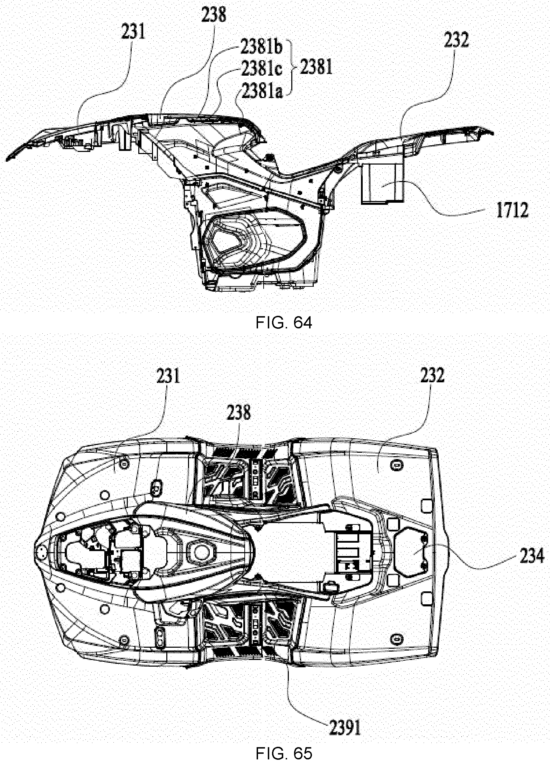

As shown in FIG. 64 and 65, the vehicle cover 23 further includes a fuel tank guard 238. The fuel tank guard 238 is mounted above the fuel tank 132, and is used to protect the fuel tank 132. At least one fuel tank fixing portion is disposed on the side positioned adjacent to the fuel tank guard 238. The fuel tank guard 238 is connected to the first fender 231 by the fixing portion 2381, and the fuel tank guard 238 is connected to the side cover assembly 237 by the fixing portion 2381. One side of the fixing portion 2381 is connected to the first side cover 2371, and the side of the fixing portion 2381 away from the first side cover 2371 is connected to the second side cover 2372 in the left-right direction of the all-terrain vehicle 100. The fixing portion 2381 is mounted on the side of the fuel tank guard 238 adjacent to the fuel tank 132, that is, the fixing portion 2381 is mounted below the fuel tank guard 238 in the up-down direction of the all-terrain vehicle 100. The fixing portion 2381 includes a bolt fixing end 2381a, a clamp end 2381b, and a plug hole 2381c. The bolt fixing end 2381a includes a first bolt fixing end and a second bolt fixing end. In the front-rear direction of the all-terrain vehicle 100, the first bolt fixing end is disposed at the front of the fuel tank guard 238, and the second bolt fixing end is disposed at the rear end of the fuel tank guard 238. The bolt fixing end 2381a enables the fuel tank guard 238 to be connected to the first side cover 2371 by bolts. A spatial range is defined between the first bolt fixing end and the second bolt fixing end, and the clamp end 2381b and the plug hole 2381c are disposed in intervals within this spatial range. The clamp end 2381b can be clamped and matched with the first side cover 2371 to limit the movement of the fuel tank guard 238 in the up-down direction. The plug hole 2381c can also be connected to the first side cover 2371. The clamp fitting is used to limit the movement of the fuel tank guard 238 in the left-right direction and the front-rear direction, thereby achieving the connection between the first side cover 2371 and the fuel tank guard 238. Similarly, the connection between the second side cover 2372 and the fuel tank guard 238 is the same in principle as that of the first side cover 2371. This can reduce the assembly process, improve assembly efficiency, and facilitate integrated disassembly and installation by connecting and fixing the fuel tank guard 238, the first side cover 2371, and the second side cover 2372 and then assembling them onto the all-terrain vehicle 100. The first side cover 2371 is clamped to the first mounting bracket 241, and the second side cover 2372 is clamped to the first mounting bracket 241. The first side cover 2371 is connected to the second fender by means of clearance fit, and the second side cover 2372 is connected to the second fender by means of clearance fit, which leaves a gap space on both sides of the all-terrain vehicle 100 that can be held by human hands for easy installation and disassembly. One end of the first side cover 2371 is clamped and fixed with the first insulation cover 2373, and one end of the second side cover 2372 is clamped and fixed with the second insulation cover 2374. Due to the close contact between the first side cover 2371 and the second side cover 2372 with the human body, overheating of the first side cover 2371 and the second side cover 2372 can cause discomfort to the user. Therefore, an insulation board is also mounted on the inside of the first side cover 2371 and the second side cover 2372 to isolate heat. The insulation board may be made of multi-layer composite materials, for example, may be made of aluminum foil and ceramic fibers. In this embodiment, the fuel tank guard 238, the first side cover 2371, and the second side cover 2372 are integrated for disassembly and assembly. The connection between the three adopts a detachable fixed structure, which can facilitate repeated installation and disassembly. During disassembly, the gap between the first side cover 2371 or the second side cover 2372 can be held by hand, and the user can pull the first side cover 2371 or the second side cover 2372 to disconnect the connection between the first side cover 2371 or the second side cover 2372 and the fuel tank guard 238, completing the integrated disassembly and assembly of the first side cover 2371, the second side cover 2372, and the fuel tank guard 238. This tool-free disassembly and assembly method is simple, fast, and easy to maintain, greatly improving maintenance efficiency and greatly reducing time costs.

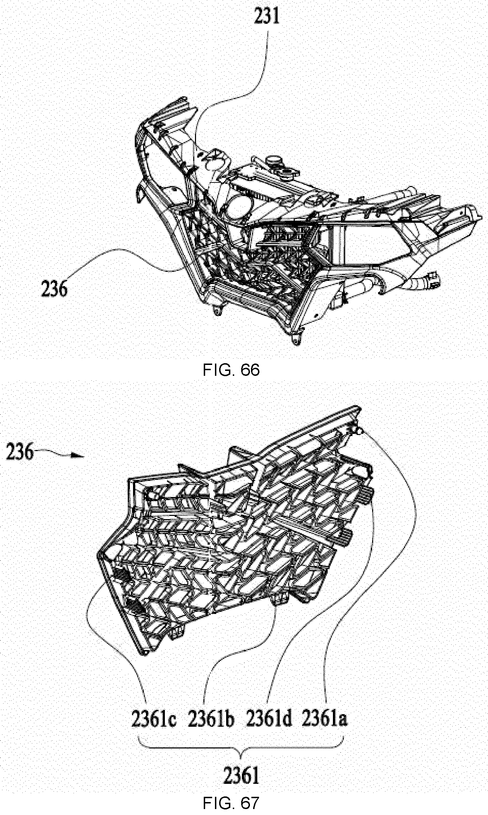

Generally, a ventilation grille is mounted in the front of an all-terrain vehicle, which is used to introduce ambient air from the front side of the vehicle. As all-terrain vehicles generally operate in outdoor environments, weeds, leaves, and other garbage can easily accumulate on the ventilation grille when driving. In existing all-terrain vehicles, the ventilation grille and the fender are integrated, which often increases the difficulty of cleaning the ventilation grille, making it time-consuming and laborious to clean the garbage in the ventilation grille. In this application, as shown in FIG. 66, the vehicle cover 23 further includes a ventilation grille 236. The ventilation grille 236 is positioned in the front of the all-terrain vehicle 100, and is mounted on the first fender 231. The ventilation grille 236 defines at least one grid-shaped ventilation holes, and a connection portion 2361 for connecting the first fender 231 is disposed on the inner side of the ventilation grille 236. The inner side of ventilation grille 236 refers to the side of ventilation grille 236 adjacent to the first fender 231. The connection portions 2361 are disposed on all sides of the ventilation grille 236, which can be connected to the first fender 231. As shown in FIG. 67, in the up, down, left, and right directions of the all-terrain vehicle 100, the connection portion 2361 includes a first connection portion 2361a, a second connection portion 2361b, a third connection portion 2361c, and a fourth connection portion 2361d. The first connection portion 2361a is disposed at the upper end of the ventilation grille 236, the second connection portion 2361b is disposed at the bottom of the ventilation grille 236, the third connection portion 2361c is disposed on the left side of the ventilation grille 236, and the fourth connection portion 2361d is disposed on the right side of the ventilation grille 236. The first connection portion 2361a is clamped to one end of the first fender 231, and the first connection portion 2361a can limit the movement of the ventilation grille 236 in the left-right direction and the up-down direction. The second connection portion 2361b is clamped with one end of the first fender 231 away from the first connection portion 2361a, and the second connection portion 2361b can limit the movement of the ventilation grille 236 in the front-rear direction. The third connection portion 2361c and the first fender 231 are clamped on one side, while the fourth connection portion 2361d and the first fender 231 are clamped on the side away from the third connection portion 2361c. The third connection portion 2361c and the fourth connection portion 2361d can limit the movement of the ventilation grille 236 in the up-down direction and left-right direction. This application coordinates the connection portions 2361 disposed around the ventilation grille 236 with the first fender 231, so as to limit and fix the ventilation grille 236 in all directions, making the installation of the ventilation grille 236 more firm and reliable. In this embodiment, the fixing method of each connection portion 2361 on the ventilation grille 236 is detachable, thereby greatly simplifying the disassembly and assembly process. Users can disassemble and assemble the ventilation grille 236 without using tools, making it easy to clean. Moreover, the ventilation grille 236 of this application can adapt to multiple installations and demolitions and is not easily deformed.

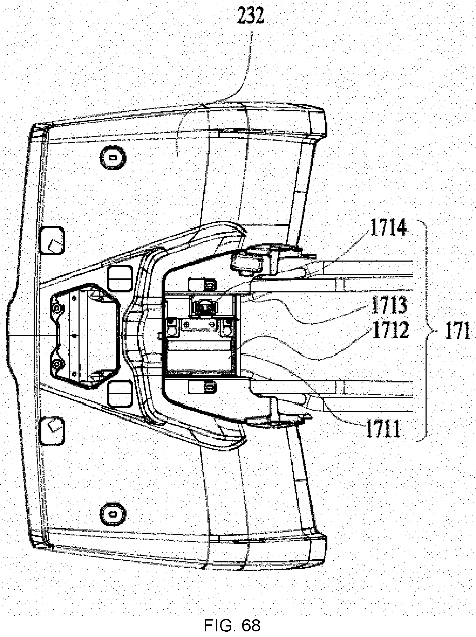

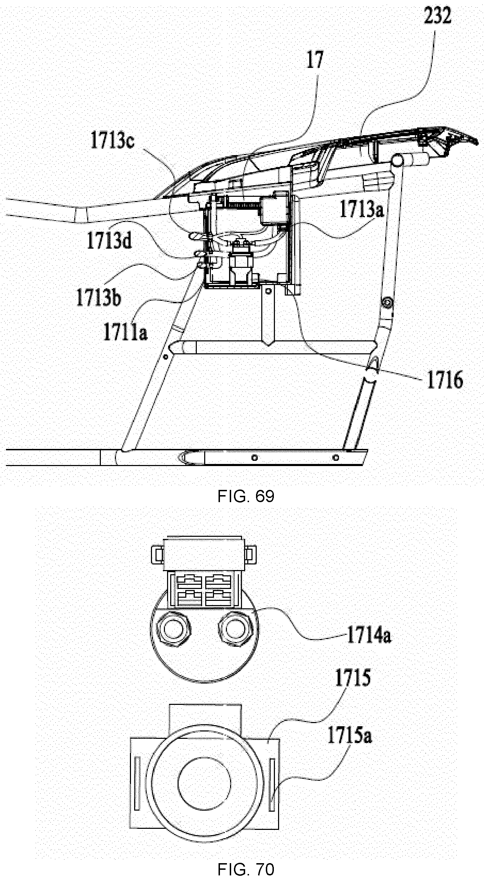

The electrical system 17 is used to provide power for the starting the all-terrain vehicle 100 and for other electrical appliances of the all-terrain vehicle 100. As shown in FIG. 68, the electrical system 17 includes a battery box assembly 171 and a fuse box assembly 172 (see FIG. 54). The battery box assembly 171 includes a battery box 1711, a battery 1712, cables 1713, and electrical appliances 1714. The battery 1712 for providing the necessary electricity for the ignition stage of the engine 111 and providing the necessary electricity for the operation of other electrical appliances of the all-terrain vehicle 100 is fixed in the battery box 1711. In this embodiment, the battery 1712, the electrical appliances 1714, and the cables 1713 are integrated and mounted in the battery box 1711. This can facilitate inspection and maintenance, and also facilitate the reasonable arrangement of the internal space of the all-terrain vehicle 100, thereby saving the internal space of the all-terrain vehicle 100. Optionally, the battery box 1711 may be a fixed chamber defined inside the second fender 232, with the battery box 1711 positioned below the second mounting bracket 242 and adjacent to the prime mover assembly 11. The upper surface of battery 1712 is connected to the second mounting bracket 242, which can effectively limit the shaking or movement of battery 1712 in the up-down direction. The battery 1712 is positioned on the side of the battery box 1711 away from the transmission assembly 14, so that the heat from the transmission assembly 14 will not be transferred to the battery 1712, thereby reducing the operating temperature of the battery 1712 and increasing the service life of the battery 1712. As shown in FIG. 69 and FIG. 70, The electrical appliances 1714 include a starting relay 1714a, and the cables 1713 includes a positive wire 1713a, a negative wire 1713b, a main wire harness 1713c, and a winch motor wire 1713d. One end of the positive wire 1713a is connected to the starting relay 1714a. The negative wire 1713b is substantially parallel to the parting surface, and one end of the negative wire 1713b is connected to the negative pole of the battery 1712. One end of the main wire harness 1713c is connected to the starting relay 1714a, and the other end of the main wire harness 1713c for connecting the starting circuit or other electrical appliances extends substantially along a direction of the prime mover assembly 11. The winch 32 is directly connected to the battery 1712 through winch motor wire 1713d due to its high power consumption when used. One end of the winch motor wire 1713d is connected to the positive pole of the battery 1712, and the other end of the winch motor wire 1713d is connected to the winch motor. As shown in FIG. 70, a shock-absorbing sheath 1715 is disposed inside the battery box 1711. The starting relay 1714a is mounted on the shock-absorbing sheath 1715, and is connected to the bottom surface of the battery box 1711 by the shock-absorbing sheath 1715. Optionally, the bottom of the battery box 1711 is provided with a limit plate 1716 substantially perpendicular to the bottom of the battery box 1711. The length of the limit plate 1716 in the up-down direction of the all-terrain vehicle 100 is greater than the length of the shock-absorbing sheath 1715 in the up-down direction of the all-terrain vehicle 100. A limit hole 1715a for matching with the limit plate 1716 is defined in the shock-absorbing sheath 1715. The limit plate 1716 passes through the limit hole 1715a to mount the shock-absorbing sheath 1715. Optionally, the shock-absorbing sheath 1715 may be made of rubber materials, which can absorb the force generated by the shaking of the all-terrain vehicle 100 during driving, thereby effectively reducing the friction loss of the starting relay 1714a. A plurality of cable ties 1711a are mounted on the side wall of battery box 1711 along the routing direction of the negative wire 1713b, the main wire harness 1713c, and the winch motor wire 1713d to fix the corresponding negative wire 1713b, the main wire harness 1713c, and the winch motor wire 1713d, which is beneficial to control the routing direction of the cables 1713, thereby avoiding the problem of disorderly connection between the battery box 1711 and the external cables, and making the layout of the interior space of the vehicle more reasonable. In this embodiment, the cable cost and the maintenance cost can be greatly reduced by integrating the battery 1712, the electrical appliances 1714, and the cables 1713 into the battery box 1711.

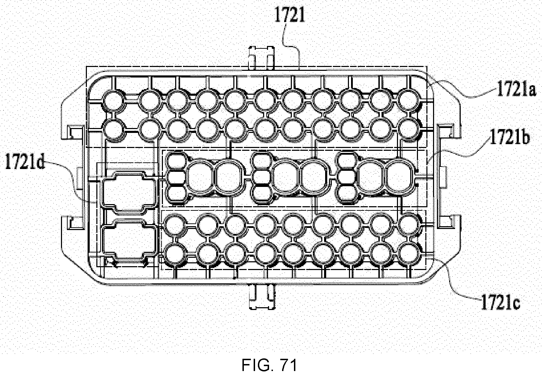

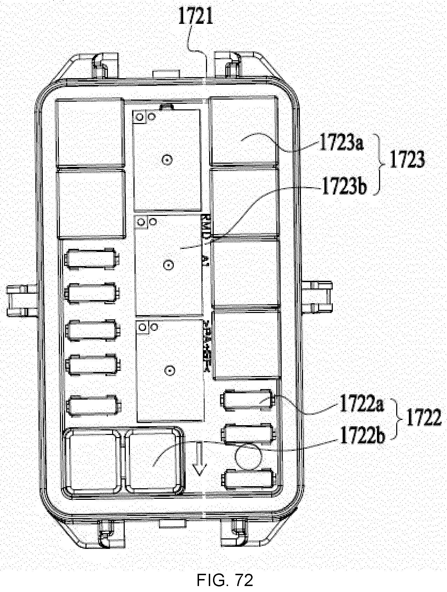

As shown in FIG. 71 and FIG. 72, the fuse box assembly 172 includes a fuse box 1721, a fuse 1722 and a relay 1723 fixed in the fuse box 1721. In existing vehicles, fuses are widely disposed in the interior of vehicles with many lines. Traditional fuse boxes are not easy to repair and replace, and their integration is poor, thereby resulting in low utilization of the interior space. In this embodiment, the fuse 1722 and the relay 1723 can be integrated and fixed in the fuse box, which can facilitate maintenance and reduce labor costs. The fuse 1722 includes a commonly used fuse 1722a and a spare fuse 1722b, and the relay 1723 includes a four-pin relay 1723a and a five-pin relay 1723b. The fuse box 1721 is disposed in the first maintenance chamber 2313. The fuse box 1721 defines a first fixing position 1721a, a second fixing position 1721b, a third fixing position 1721c, and a fourth fixing position 1721d. Both the four-pin relay 1723a and the commonly used fuse 1722a are placed at the first fixing position 1721a. The interface used by the four-pin relay 1723a and the interface used by the commonly used fuse 1722a is the same, and the four-pin relay 1723a occupies two more interfaces compared to the commonly used fuse 1722a. Both the four-pin relay 1723a and the commonly used fuse 1722a may also be placed at the third fixing position 1721a. The five-pin relay 1723b is placed at the second fixing position 1721b between the first fixing position 1721a and the third fixing position 1721c. The fourth fixing position 1721d is positioned adjacent to the third fixing position 1721c and the second fixing position 1721b, and the spare fuse 1722b is placed at the fourth fixing position 1721d, which achieves the integration of the fuse 1722 and the relay 1723. Optionally, the spare fuse 1722b has a rated current greater than the commonly used fuse 1722a. It should be noted that, corresponding to different circuit usage situations, the parameters of each commonly used fuse 1722a selected are not consistent. Considering the rated current of the commonly used fuse 1722a during operation, in this embodiment, the selection range of the rated current of the commonly used fuse 1722a is in the range from 5A to 25A, and the rated current of the spare fuse 1722b is greater than or equal to 30A. When mounting the fuse box 1721, the second fixing position 1721b is only applicable to the installation of five-pin relay 1723b, and at most three five-pin relays 1723b may be mounted on the second fixing position 1721b. Two rows and eleven columns of interfaces are disposed on the first fixing position 1721a. It should be noted that each four-pin relay 1723a occupies four interfaces, and each commonly used fuse 1722a occupies two interfaces. At least one commonly used fuse 1722a may be placed on the first fixing position 1721a. It should be noted that every four interfaces on the fuse box 1721 of this application are used together as a group. Therefore, in this embodiment, at most five four-pin relays 1723a can be mounted on the first fixing position 1721a. Alternatively, at least one commonly used fuse 1722a and at most eleven commonly used fuses 1722a can be mounted on the first fixing position 1721a. For the fixing positions of the four-pin relay 1723a and the commonly used fuse 1722a, they can be disposed horizontally in one or more groups in sequence. For example, A represents the four-pin relay 1723a and B represents the commonly used fuse 1722a. The arrangement between the four-pin relay 1723a and the commonly used fuse 1722a on the first fixing position 1721a may be ABBABBAB or BBABBABBB. It should be noted that the installation order of the four-pin relay 1723a and the commonly used fuse 1722a may be adjusted according to actual installation requirements. Two rows and nine columns of interfaces are disposed on the third fixing position 1721c. It should be noted that at least one commonly used fuse 1722a can be mounted on the third fixing position 1721c, and alternatively, at most four four-pin relays 1723a or at most nine commonly used fuses 1722a can be mounted on the third fixing position 1721c. The arrangement of the four-pin relays 1723a and the commonly used fuses 1722a on the third fixing position 1721c can be disposed horizontally in one or more groups of order. For example, the arrangement between the four-pin relays 1723a and the commonly used fuses 1722a on the third fixing position 1721c may be ABBABBB or BBABBAB. It should be noted that the installation order of the four-pin relay 1723a and the commonly used fuse 1722a on the third fixing position 1721c may be adjusted according to actual installation requirements. Compared to the integrated arrangement of fuse boxes in existing vehicles, the fuse box assembly 172 in this application can be matched with multiple types of fuses 1722 and relays 1723, and can reasonably distribute the installation positions of each type of fuse 1722 and relay 1723. More installation positions can be disposed as much as possible in the limited space of fuse box 1721, thereby making the wiring of relays 1723 and fuses 1722 easier, facilitating the installation and disassembly of relay 1723 and fuse 1722, and facilitating user inspection and maintenance.

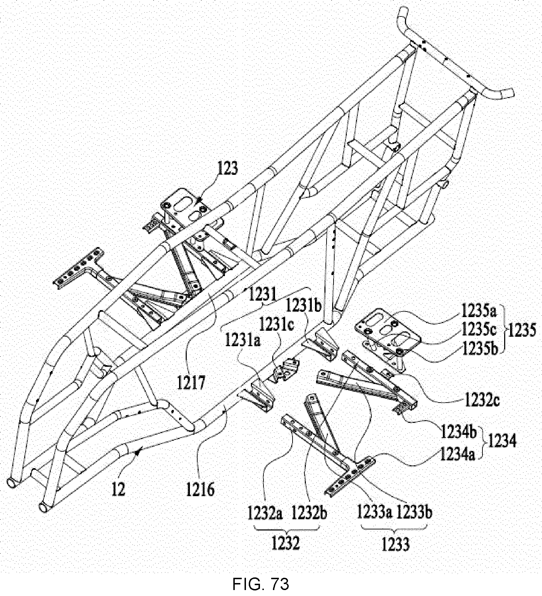

As shown in FIG. 73, the frame 12 further includes two foot pedal brackets 123. Both the sixth main beam 1216 and the seventh main beam 1217 are provided with a foot pedal bracket 123. As an example, the foot pedal bracket 123 is mounted on the sixth main beam 1216. The foot pedal bracket 123 includes a connector 1231, a support bracket 1232, a reinforcement bracket 1233, an expansion bracket 1234, and a foot pedal rack 1235. The connector 1231 is used to fix the support bracket 1232 and reinforcement bracket 1233 to the frame 12. Alternatively, the connector 1231 is used to fix the support bracket 1232 and reinforcement bracket 1233 to the sixth main beam 1216. The expansion bracket 1234 is mounted on support bracket 1232 to support plastic parts by increasing the area of foot pedal bracket 123. The reinforcement bracket 1233 is used to enhance the structural strength of support bracket 1232, which is beneficial for improving the strength of foot pedal bracket 123. The foot pedal bracket 1235 is used to provide support for the feet of rear passengers and improve riding comfort. The foot pedal bracket 123 is dispersed into multiple parts to facilitate the installation, disassembly, and replacement of the foot pedal bracket 123, thereby improving its versatility and replaceability. In addition, the stiffness and stability of the foot pedal bracket 123 can be improved, thereby improving the strength of the foot pedal bracket 123.

Alternatively, the connector 1231 includes a first connector 1231a, a second connector 1231b, and a third connector 1231c. The support bracket 1232 includes a first support bracket 1232a and a second support bracket 1232b. The reinforcement bracket 1233 includes a first reinforcement bracket 1233a and a second reinforcement bracket 1233b. The expansion bracket 1234 includes a first expansion bracket 1234a and a second expansion bracket 1234b. The foot pedal bracket 1235 includes an upper plate 1235a, a lower plate 1235b, and a support column 1235c. The first connector 1231a is in front of the second connector 1231b, the third connector 1231c is between the first connector 1231a and the second connector 1231b, and the first connector 1231a, second connector 1231b, and third connector 1231c are all mounted on the sixth main beam 1216. One end of the first support bracket 1232a is mounted on the first connector 1231a, and the other end of the first support bracket 1232a is provided with a first expansion bracket 1234a. One end of the second support bracket 1232b is mounted on the second connector 1231b, and the other end of the second support bracket 1232b is provided with a second expansion bracket 1234b. One end of the first reinforcement bracket 1233a is mounted on the third connector 1231c, and the other end of the first reinforcement bracket 1233a is mounted on a section of the first support bracket 1232a with the first expansion bracket 1234a. One end of the second reinforcement bracket 1233b is mounted on the third connector 1231c, and the other end of the second reinforcement bracket 1233b is mounted on a section of the second support bracket 1232b with a second expansion bracket 1234b. The first support bracket 1232a, the second support bracket 1232b, the first reinforcement bracket 1233a, and the second reinforcement bracket 1233b cooperatively defines a M-shaped structure. The first reinforcement bracket 1233a and the second reinforcement bracket 1233b are both mounted between the first support bracket 1232a and the second support bracket 1232b. The second support bracket 1232b is equipped with a support seat 1232c, which is fixed on the side of the second support bracket 1232b away from the second reinforcement bracket 1233b. Along the front and rear directions of the all-terrain vehicle 100, the second reinforcement bracket 1233b is mounted on the front of the second support bracket 1232b, and the support seat 1232c is mounted on the rear of the second support bracket 1232b. The foot pedal bracket 1235 is mounted on the second support bracket 1232b and the support seat 1232c. Optionally, three first fixing holes are defined on the lower plate 1235b, two second fixing holes are defined on the second support bracket 1232b, and one second fixing hole is defined on the support seat 1232c. The lower plate 1235b and the second support bracket 1232b, as well as the lower plate 1235b and the support seat 1232c are connected through the first fixing holes and the second fixing holes. The upper plate 1235a and the lower plate 1235b are connected by a support column 1235c. The support column 1235c can be welded to the upper plate 1235a and the lower plate 1235b, thereby achieving fixation between the upper plate 1235a and the lower plate 1235b. The foot pedal bracket 123 is dispersed into multiple parts to facilitate the installation, disassembly, and replacement of the foot pedal bracket 123, thereby improving its versatility and replaceability. In addition, the stiffness and stability of the foot pedal bracket 123 can be improved, thereby improving the strength of the foot pedal bracket 123.

Optionally, the area of the upper plate 1235a is larger than that of the lower plate 1235b, which can improve the support of the upper plate 1235a and provide better support for the feet of passengers, thereby improving ride comfort. Since the area of the upper plate 1235a is larger than that of the lower plate 1235b, the support column 1235c is disposed diagonally, which can avoid the first fixing hole, thereby making it easier to install and remove the lower plate 1235b.

Optionally, a weight reduction hole is defined on the upper plate 1235a for the lightweight of the foot pedal bracket 123. In addition, the weight reduction hole can also provide installation space for the installation and removal of the lower plate 1235b, thereby making it easier to install and remove the lower plate 1235b.

Optionally, the first connector 1231a is welded to the sixth main beam 1216, the second connector 1231b is welded to the sixth main beam 1216, the third connector 1231c is welded to the sixth main beam 1216, and the support seat 1232c is welded to the second support bracket 1232b. The first support bracket 1232a and the first connector 1231a are connected by means of bolts, the second support bracket 1232b and the second connector 1231b are connected by means of bolts, the first reinforcement bracket 1233a and the third connector 1231c are connected by means of bolts, and the second reinforcement bracket 1233b and the third connector 1231c are connected by means of bolts.

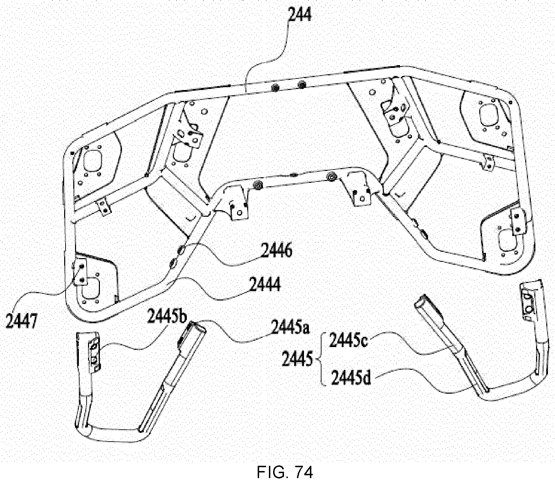

As shown in FIG. 74, the mounting bracket assembly 24 further includes a shelf 244. The shelf 244 may be mounted on frame 12, serving as an extension component of all-terrain vehicle 100. The shelf 244 is used to provide installation locations for external devices or equipment for all-terrain vehicle 100, thereby allowing the all-terrain vehicle 100 to carry more external devices or equipment. The shelf 244 can be positioned on the front and/or rear side of frame 12. The shelf 244 positioned behind frame 12 is the first shelf 2444. A handrail 2445 is mounted on the first shelf 2444, which is positioned on the front of the first shelf 2444. The handrail 2445 is used to provide grip for the hands of passengers, allowing them to hold the handrail 2445 while driving the all-terrain vehicle 100, thereby stabilizing their body and improving the safety of the all-terrain vehicle 100. Several first mounting holes 2446 and several second mounting holes 2447 are defined on the first shelf 2444. Several third mounting holes 2445a and several fourth mounting holes 2445b are defined on the handrail 2445. The number of the first mounting holes 2446 and the third mounting holes 2445a are equal, and the first shelf 2444 and one side of the handrail 2445 is connected through the first mounting holes 2446 and the third mounting holes 2445a. The number of the second mounting holes 2447 and the fourth mounting holes 2445b are equal, and the first shelf 2444 and the other side of the handrail 2445 are connected through the second mounting holes 2447 and the fourth mounting holes 2445b. The first shelf 2444 and the handrail 2445 can be fixedly connected, so that the handrail 2445 can be stably placed on the first shelf 2444, thereby allowing passengers to stabilize their bodies while driving the all-terrain vehicle 100, and further improving the safety of the all-terrain vehicle 100. In this application, the handrail 2445 includes a mounting portion 2445c and a bending portion 2445d, with several third mounting holes 2445a and several fourth mounting holes 2445b defined on the mounting portion 2445c. The mounting portion 2445c is substantially a cylinder, and the bending portion 2445d is substantially a cylinder. The axis of the bending portion 2445d and the axis of the mounting portion 2445c cooperatively defines a first angle, and the first angle can be adjusted according to actual needs to meet the gripping needs of passengers.

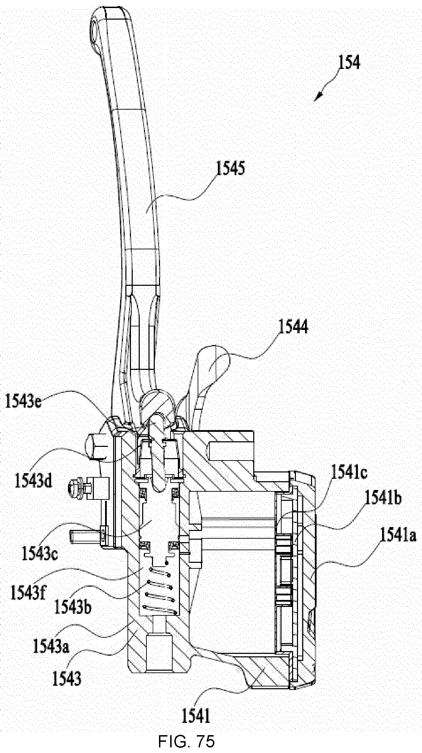

As shown in FIGS. 75 to 77, the steering assembly 16 includes a handlebar 162. The braking system 15 includes a hand-operated brake assembly 154. The hand-operated brake assembly 154 is mounted on the handlebar 162. The hand-operated brake assembly 154 is used to brake the all-terrain vehicle 100 by hydraulic braking the wheel assembly 26. Optionally, the hand-operated brake assembly 154 includes a brake fluid cup 1541, a brake switch 1542, a hand-operated brake pump 1543, a pressure maintaining device 1544, and a hand shank 1545. The brake fluid cup 1541 is filled with brake fluid. The brake fluid cup 1541 is above the hand-operated brake pump 1543, and the brake fluid cup 1541 and the hand-operated brake pump 1543 are integrated to improve the sealing of the brake fluid cup 1541 and the hand-operated brake pump 1543, which makes it easier to process the brake fluid cup 1541 and the hand-operated brake pump 1543, thereby improving processing efficiency. The hand-operated brake pump 1543 can better control the brake fluid in the brake fluid cup 1541, thereby enabling the hand-operated brake pump 1543 to better brake the wheel assembly 26 and improve the braking effect of the all-terrain vehicle 100. The pressure maintaining device 1544 is mounted on the hand shank 1545, and can rotate relative to the hand shank 1545. When the all-terrain vehicle 100 is parked on a slope, and the hand-operated brake assembly 154 is in an un-braked state, the pressure maintaining device 1544 is used to brake the all-terrain vehicle 100. Therefore, when the hand-operated brake assembly 154 is in an un-braked state, the hydraulic pressure of the brake fluid is maintained through the pressure maintaining device 1544, thereby achieving braking of the all-terrain vehicle 100, effectively preventing its movement in situations such as parking on a slope, and improving the safety of the all-terrain vehicle. The brake switch 1542 is used to quickly light up the rear brake light when the pressure retaining device 1544 brakes, thereby reminding the rear vehicle to slow down and improving the safety of the all-terrain vehicle 100. The rear brake light refers to the tail light that lights up when braking the all-terrain vehicle 100. The pressure maintaining device 1544 includes a first state and a second state. The first state is the state when the pressure maintaining device 1544 is not braked, and the second state is the state when the pressure maintaining device 1544 is braked. Brake switch 1542 is capable of transmitting at least the first signal and the second signal to the rear brake lights. The first signal refers to the signal when brake switch 1542 is in the normally closed state, and the second signal refers to the signal when brake switch 1542 is in the open state. When the pressure maintaining device 1544 is in the first state, the brake switch 1542 is in the normally closed state, and the brake switch 1542 transmits the first signal to the rear brake light. At this time, the rear brake light does not light up. When the pressure maintaining device 1544 is in the second state, the brake switch 1542 is in the open state, and the brake switch 1542 transmits a second signal to the rear brake light. At this point, the rear brake lights will light up. When the pressure maintaining device 1544 is in the braking state, the brake switch 1542 can be used to control the rear brake light to light up, thereby reminding the rear vehicle to slow down and improving the safety of the all-terrain vehicle 100 and the driver.

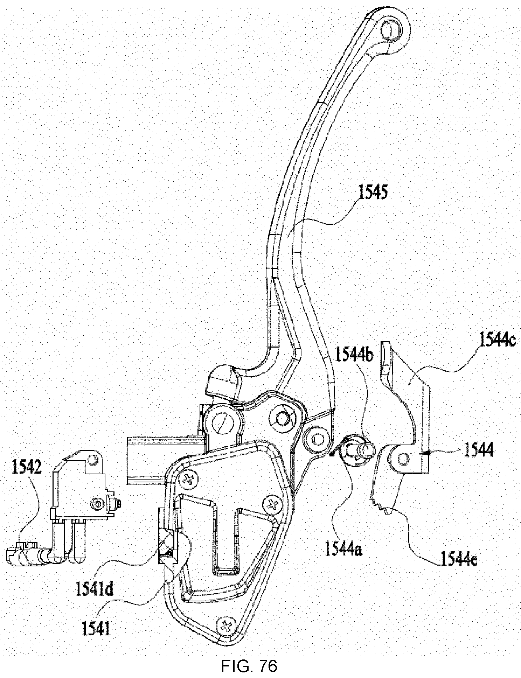

As shown in FIG. 75 and 76, optionally, the brake fluid cup 1541 includes a cup lip 1541a, a cup plate 1541b, a cup gasket 1541c, and an cup window 1541d. The cup lip 1541a is mounted above the cup plate 1541b to seal the brake fluid cup 1541 and improve its sealing performance. The cup plate 1541b is mounted below the fuel tank cover 1541a, and the fuel tank gasket 1541c is set below the cup lip 1541a to improve the sealing of the brake fluid cup 1541. The cup window 1541d is disposed on the rear of the brake fluid cup 1541, making it easy for drivers to check the remaining amount of brake fluid in brake fluid cup 1541 through cup window 1541d.

As shown in FIGS. 75 and 76, optionally, the hand-operated brake pump 1543 includes a main pump housing 1543a, a return spring 1543b, a piston 1543c, a dust cover 1543d, and a push rod 1543e. The main pump housing 1543a is integrated with the brake fluid cup 1541 to improve the sealing of the brake fluid cup 1541 and the hand-operated brake pump 1543, which makes it easier to process the brake fluid cup 1541 and the hand-operated brake pump 1543, thereby improving processing efficiency. The return spring 1543b, the piston 1543c, the dust cover 1543d, and the push rod 1543e are all mounted in the main pump housing 1543a. One end of the push rod 1543e is connected to hand shank 1545, and the other end of push rod 1543e is connected to one end of piston 1543c. The other end of the piston 1543c is connected to the return spring 1543b. The push rod 1543e passes through the dust cover 1543d and is connected to the hand shank 1545. The dust cover 1543d can prevent external dust from entering the hand-operated brake pump 1543, thereby keeping the brake fluid pure and improving the braking effect of the hand-operated brake pump 1543.

A mounting hole 1543f is defined on the hand-operated brake pump 1543. One end of the mounting hole 1543f is equipped with a push rod 1543e, and the other end of the mounting hole 1543f is connected to the outside of the hand-operated brake pump 1543. One end of the return spring 1543b is connected to the piston 1543c, and the other end of the return spring 1543b is connected to the mounting hole 1543f and connected to the external end of the hand-operated brake pump 1543. In this embodiment, a plug is provided at one end of the mounting hole 1543f that is connected to the outside of the hand-operated brake pump 1543. The plug is used to seal the mounting hole 1543f, thereby improving the sealing performance of the hand-operated brake pump 1543.

In this embodiment, when the hand-operated brake assembly 154 brakes, the hand shank 1545 drives the push rod 1543e to move, thereby causing the push rod 1543e to drive the piston 1543c to move. At this time, the return spring 1543b is compressed, and the hand-operated brake pump 1543 controls the brake fluid to brake the wheel assembly 26. When the hand-operated brake assembly 154 returns to an un-braked state, due to the reset function of the return spring 1543b, the return spring 1543b pushes the piston 1543c to move, thereby causing the piston 1543c to move and reset through the push rod 1543e control the hand shank 1545.

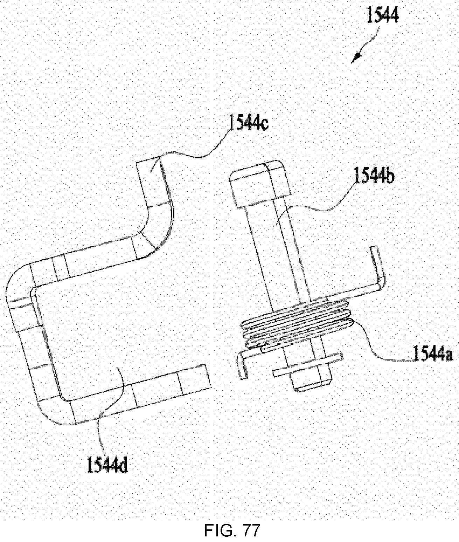

As shown in FIGS. 76 and 77, optionally, the pressure retaining device 1544 includes a torsion spring 1544a, a pin shaft 1544b, and a parking push plate 1544c. The parking push plate 1544c includes an upper push plate, a middle push plate, and a lower push plate. The middle push plate is substantially perpendicular to the upper push plate, and the upper push plate is substantially parallel to the lower push plate. The upper push plate, the middle push plate, and the lower push plate are integrally formed. The upper push plate, the middle push plate, and the lower push plate cooperatively defines a mounting space 1544d. The hand shank 1545 is at least partially mounted in the mounting space 1544d and is connected to the parking push plate 1544c through a pin shaft 1544b. The pin shaft 1544b is at least partially mounted in the mounting space 1544d to connect the hand shank 1545 and the parking push plate 1544c. The pin shaft 1544b passes through the upper push plate, the hand shank 1545, the torsion spring 1544a, and the lower push plate to make the upper push plate rotationally connected to the hand shank 1545 and the lower push plate rotationally connected to the hand shank 1545. One end of torsion spring 1544a is connected to the hand shank 1545, and the other end of torsion spring 1544a is connected to the lower push plate, thereby achieving the connection between the hand shank 1545 and the parking push plate 1544c.

In this embodiment, a plurality of locking teeth 1544e are provided on one side of the parking push plate 1544c adjacent to the hand-operated brake pump 1543. A clamping portion is disposed on the side of the hand-operated brake pump 1543 adjacent to the locking tooth 1544e. When the pressure maintaining device 1544 brakes, the clamping portion and locking tooth 1544e are clamped, thereby fixing the parking push plate 1544c and maintaining the braking state of the pressure maintaining device 1544.

In this application, the braking principle of pressure maintaining device 1544 is as follows. The driver controls the movement of the parking push plate 1544c by hand, causing the locking teeth 1544e to engage with the clamping portion, thereby achieving locking between the locking teeth 1544e and the clamping portion, and maintaining the braking state of pressure maintaining device 1544, and enabling it to brake the all-terrain vehicle 100. When the pressure maintaining device 1544 is required to not brake the all-terrain vehicle 100, the driver controls the locking teeth 1544e to disengage from the clamping portion by hand. Under the action of the torsion spring 1544a, the parking push plate 1544c will move towards the hand shank 1545, thereby causing the pressure maintaining device 1544 to stop braking the all-terrain vehicle 100.

It should be noted that the brake switch 1542 is equipped with a contact switch. When the pressure maintaining device 1544 is not braked, the contact switch is in a normally closed state. At this time, the brake switch 1542 sends the first signal to the rear brake light, but the rear brake light does not light up. When the pressure maintaining device 1544 brakes, the parking push plate 1544c drives the locking teeth 1544e to move. The locking teeth 1544e can touch the contact switch, causing the contact switch to be in the open state. At this time, the brake switch 1542 sends the second signal to the rear brake light, which lights up. When the pressure maintaining device 1544 is in the braking state, the brake switch 1542 can be used to control the rear brake light to light up, thereby reminding the rear vehicle to slow down and improving the safety of the all-terrain vehicle 100 and the driver.

Although preferred embodiments of this embodiment have been disclosed for illustrative purposes, those skilled in the art will recognize that various improvements are possible without departing from the scope of the invention defined by the accompanying claims.

## Claims

1. An all-terrain vehicle (100) comprising
a frame (12);
a vehicle cover (23) at least partially disposed on the frame (12), the vehicle cover (23) defining an accommodation space (23a) and comprising an instrument shield (23b);
a wheel assembly (26) comprising a pair of first wheels (261) and a pair of second wheels (262);
a suspension assembly (27) comprising a front suspension (271) and a rear suspension (272), the first wheels (261) being connected to the frame (12) by the front suspension (271) and the second wheels (262) being connected to the frame (12) by the rear suspension (272);
a prime mover assembly (11) for driving the wheel assembly (26) and comprising an engine (111);
a transmission assembly (14) disposed between the prime mover assembly (11) and the wheel assembly (26), a driving force being passed from the prime mover assembly (11) to the wheel assembly (26) by the transmission assembly (14); and
an air intake system (25) at least partially in fluid communication with the prime mover assembly (11);
wherein the vehicle cover (23) further comprises a side cover assembly (237) comprising a first insulation cover (2373) and a second insulation cover (2374); and
the first insulation cover (2373) and the engine (111) cooperatively define a first airflow passage extending along a front-rear direction of the all-terrain vehicle (100) and extending to a rear of the frame (12); **characterized in that**
the air intake system (25) comprises
an air inlet (251) at least partially defined on the instrument shield (23b); and
an air intake pipe (252) connected to the transmission assembly (14), the air inlet (251) being at least partially in fluid communication with the air intake pipe (252).

2. The all-terrain vehicle (100) of claim 1, wherein the air intake pipe (252) comprises a first air intake pipe (2521) and a second air intake pipe (2523), the first air intake pipe (2521) is disposed between the instrument shield (23b) and the second air intake pipe (2523) and in fluid communication with the instrument shield (23b) and the second air intake pipe (2523), and the second air intake pipe (2523) is disposed between the first air intake pipe (2521) and the transmission assembly (14) and is in fluid communication with the first air intake pipe (2521) and the transmission assembly (14); the air intake pipe (252) comprises a pipe joint (2522) comprising a first joint portion (2522a) coupling between the first air intake pipe (2521) and the second air intake pipe (2523) and a second joint portion (2522b) coupling between the second intake pipe and the transmission assembly (14).

3. The all-terrain vehicle (100) of claim 1, wherein the instrument shield (23b) has an instrument shield windward surface (23ba) at a front of the all-terrain vehicle (100), the air inlet (251) is at least partially defined on the instrument shield windward surface (23ba); a first projection plane (304) is defined as a plane perpendicular to an up-down direction of the all-terrain vehicle (100) and a second projection plane (305) is defined as a plane perpendicular to a left-right direction of the all-terrain vehicle (100), the instrument shield windward surface (23ba) is substantially perpendicular to the second projection plane (305); the projection of the instrument shield windward surface (23ba) projected on the second projection plane (305) is defined as a first projection line; and a straight line intersecting the first projection plane (304) and the second projection plane (305) is defined as a second projection line; an angle defined between the first projection line and the second projection line is in the range from 45 degrees to 90 degrees.

4. The all-terrain vehicle (100) of claim 3, wherein several louvers (23bb) are disposed on the instrument shield windward surface (23ba) and divide the instrument shield windward surface (23ba); the several louvers (23bb) are substantially perpendicular to the second projection plane (305), the projection of the louver (23bb) projected on the second projection plane (305) is defined as a third projection line, and the angle defined between the third projection line and the second projection line is in the range from 9 degrees to 11 degrees.

5. The all-terrain vehicle (100) of claim 2, wherein the second air intake pipe (2523) comprises a first branch pipe (2523a) in fluid communication with the first joint portion (2522a) and the second joint portion (2522b) and a second branch pipe (2523b) in fluid communication with the first joint portion (2522a) and the second branch pipe (2523b); the internal diameter of the second branch pipe (2523b) is smaller than that of the first branch pipe (2523a).

6. The all-terrain vehicle (100) of claim 1, wherein the vehicle cover (23) further comprises a first fender (231), a flow-guiding cavity (2314) extending along the front-rear direction and in fluid communication with the accommodation space (23a) is defined on the first fender (231); the first fender (231) has a fender windward surface (2311) at the front of the all-terrain vehicle (100), and the flow-guiding cavity (2314) is at least partially defined on the fender windward surface (2311); the first fender (231) further has a fender wind-in surface (2312) at the front of the all-terrain vehicle (100) and connecting the fender windward surface (2311), and the flow-guiding cavity (2314) is at least partially defined on the fender wind-in surface (2312).

7. The all-terrain vehicle (100) of claim 6, wherein a third projection plane (306) is defined as a plane perpendicular to a front-rear direction of the all-terrain vehicle (100), the projection of the flow-guiding cavity (2314) projected on the third projection plane (306) is defined as a first projection area, and the area of the first projection area is in the range from 5800 mm² to 9000 mm²; several flow-guiding plates (2315) are disposed on the first fender (231), the several of flow-guiding plates (2315) are disposed in the flow-guiding cavity (2314) and divide the flow-guiding cavity (2314) into several ventilation holes.

8. The all-terrain vehicle (100) of claim 1, wherein the second insulation cover (2374) and the engine (111) cooperatively defines a second airflow passage extending along a front-rear direction of the all-terrain vehicle (100) and extending to a rear of the frame (12).

9. The all-terrain vehicle (100) of claim 8, wherein the vehicle cover (23) further comprises a first fender (231) and a second fender (232); and the first insulation cover (2373) and second insulation cover (2374) are both connected between the first fender (231) and the second fender (232); the front of the first insulation cover (2373) is connected to the first fender (231), and the rear of the first insulation cover (2373) is connected to the second fender (232) along the front-rear direction.

10. The all-terrain vehicle (100) of claim 8, wherein an insulation portion (2374a) for isolating inside heat of the all-terrain vehicle (100) is disposed between the second insulation cover (2374) and the engine (111).

11. The all-terrain vehicle (100) of claim 1, further comprising a mounting bracket assembly (24) disposed on the frame (12);
wherein the vehicle cover (23) further comprises
a side cover assembly (237) comprising a first side cover (2371) and a second side cover (2372) both clamped with the mounting bracket assembly (24);
a fuel tank guard (238) comprising a plurality of bolt fixing ends (2381a), a clamp end (2381b), and a plug hole (2381c);
the fuel tank guard (238) and the side cover assembly (237) are connected through the bolt fixing end (2381a), the clamp end (2381b), and the plug hole (2381c); the vehicle cover (23) further comprises a first fender (231) and a first maintenance cover (234), and the first maintenance cover (234) comprises a first connection portion and a first clamp portion, and the first fender (231) and the first maintenance cover (234) are connected through the first connection portion and the first clamp portion.

12. The all-terrain vehicle (100) of claim 11, wherein the vehicle cover (23) further comprises a ventilation grille (236) disposed at the front of the all-terrain vehicle (100) and disposed on the first fender (231); several second connection portions are disposed at the edges of the ventilation grille (236), and the ventilation grille (236) is connected to the first fender (231) through the several second connection portions.

13. The all-terrain vehicle (100) of claim 1, further comprising a cooling system (19), wherein the cooling system (19) comprises a radiator (191) and a wind deflector (195), the wind deflector (195) is disposed between the radiator (191) and the vehicle cover (23) to define an air guide cavity for blocking the return hot air.

14. The all-terrain vehicle (100) of claim 13, wherein the radiator (191) has a radiator wind-in surface, and the wind deflector (195) is disposed around the radiator wind-in surface to ensure that the air introduced by the vehicle cover (23) substantially flows towards the radiator wind-in surface along the air guide cavity.

15. The all-terrain vehicle (100) of claim 1, wherein the all-terrain vehicle (100) further comprises an exhaust system (18), the exhaust system (18) comprises a muffler (182) and a tail pipe (184), and the tail pipe (184) is disposed below the muffler (182); the length of the muffler (182) is defined as a distance H, and the connection between the tail pipe (184) and the muffler (182) is defined as a first connection position, the distance between the first connection position and the tail end of the muffler (182) is defined as a distance h, the ratio of h to H is in the range from 0.1 to 0.2; the tail pipe (184) is in fluid communication with the muffler (182).

## Patentansprüche

1. Ein Geländefahrzeug (100), umfassend
einen Rahmen (12);
eine Fahrzeugverkleidung (23), die zumindest teilweise auf dem Rahmen (12) angeordnet ist, wobei die Fahrzeugverkleidung (23) einen Aufnahmeraum (23a) definiert und eine Instrumentenabdeckung (23b) umfasst;
eine Radanordnung (26), die ein Paar erster Räder (261) und ein Paar zweiter Räder (262) umfasst;
eine Federungsanordnung (27), die eine Vorderradfederung (271) und eine Hinterradfederung (272) umfasst, wobei die ersten Räder (261) durch die Vorderradfederung (271) mit dem Rahmen (12) verbunden sind und die zweiten Räder (262) durch die Hinterradfederung (272) mit dem Rahmen (12) verbunden sind;
eine Antriebsaggregatanordnung (11) zum Antreiben der Radanordnung (26), wobei die Antriebsaggregatanordnung (11) einen Motor (111) umfasst;
eine Übertragungsanordnung (14), die zwischen der Antriebsaggregatanordnung (11) und der Radanordnung (26) angeordnet ist, wobei eine Antriebskraft von der Antriebsaggregatanordnung (11) durch die Übertragungsanordnung (14) an die Radanordnung (26) übertragen wird; und
ein Ansaugsystem (25), das zumindest teilweise in Fluidverbindung mit der Antriebsaggregatanordnung (11) steht;
wobei die Fahrzeugverkleidung (23) ferner eine Seitenabdeckungsanordnung (237) umfasst, die eine erste Isolierabdeckung (2373) und eine zweite Isolierabdeckung (2374) umfasst; und
wobei die erste Isolierabdeckung (2373) und der Motor (111) gemeinsam einen ersten Luftstromkanal definieren, der sich entlang einer Vorder-Hinter-Richtung des Geländefahrzeugs (100) erstreckt und sich bis zu einem hinteren Bereich des Rahmens (12) erstreckt; **dadurch gekennzeichnet, dass**
das Ansaugsystem (25) umfasst
einen Lufteinlass (251), der zumindest teilweise an der Instrumentenabdeckung (23b) definiert ist; und
ein Ansaugrohr (252), das mit der Übertragungsanordnung (14) verbunden ist, wobei der Lufteinlass (251) zumindest teilweise in Fluidverbindung mit dem Ansaugrohr (252) steht.

2. Das Geländefahrzeug (100) nach Anspruch 1, wobei das Ansaugrohr (252) ein erstes Ansaugrohr (2521) und ein zweites Ansaugrohr (2523) umfasst, wobei das erste Ansaugrohr (2521) zwischen der Instrumentenabdeckung (23b) und dem zweiten Ansaugrohr (2523) angeordnet ist und mit der Instrumentenabdeckung (23b) und dem zweiten Ansaugrohr (2523) in Fluidverbindung steht, und wobei das zweite Ansaugrohr (2523) zwischen dem ersten Ansaugrohr (2521) und der Übertragungsanordnung (14) angeordnet ist und mit dem ersten Ansaugrohr (2521) und der Übertragungsanordnung (14) in Fluidverbindung steht; wobei das Ansaugrohr (252) ein Rohrverbindungsstück (2522) umfasst, das einen ersten Verbindungsabschnitt (2522a), der zwischen dem ersten Ansaugrohr (2521) und dem zweiten Ansaugrohr (2523) kuppelt, und einen zweiten Verbindungsabschnitt (2522b), der zwischen dem zweiten Ansaugrohr und der Übertragungsanordnung (14) kuppelt, umfasst.

3. Das Geländefahrzeug (100) nach Anspruch 1, wobei die Instrumentenabdeckung (23b) eine Instrumentenabdeckungs-Anströmfläche (23ba) an einer Vorderseite des Geländefahrzeugs (100) aufweist, wobei der Lufteinlass (251) zumindest teilweise an der Instrumentenabdeckungs-Anströmfläche (23ba) definiert ist; wobei eine erste Projektionsebene (304) als eine Ebene definiert ist, die senkrecht zu einer Oben-Unten-Richtung des Geländefahrzeugs (100) ist, und eine zweite Projektionsebene (305) als eine Ebene definiert ist, die senkrecht zu einer Links-Rechts-Richtung des Geländefahrzeugs (100) ist, wobei die Instrumentenabdeckungs-Anströmfläche (23ba) im Wesentlichen senkrecht zu der zweiten Projektionsebene (305) ist; wobei die Projektion der Instrumentenabdeckungs-Anströmfläche (23ba), projiziert auf die zweite Projektionsebene (305), als eine erste Projektionslinie definiert ist; und wobei eine Gerade, die die erste Projektionsebene (304) und die zweite Projektionsebene (305) schneidet, als eine zweite Projektionslinie definiert ist; wobei ein zwischen der ersten Projektionslinie und der zweiten Projektionslinie definierter Winkel in dem Bereich von 45 Grad bis 90 Grad liegt.

4. Das Geländefahrzeug (100) nach Anspruch 3, wobei mehrere Lamellen (23bb) an der Instrumentenabdeckungs-Anströmfläche (23ba) angeordnet sind und die Instrumentenabdeckungs-Anströmfläche (23ba) unterteilen; wobei die mehreren Lamellen (23bb) im Wesentlichen senkrecht zu der zweiten Projektionsebene (305) sind, wobei die Projektion der Lamelle (23bb), projiziert auf die zweite Projektionsebene (305), als eine dritte Projektionslinie definiert ist, und wobei der zwischen der dritten Projektionslinie und der zweiten Projektionslinie definierte Winkel in dem Bereich von 9 Grad bis 11 Grad liegt.

5. Das Geländefahrzeug (100) nach Anspruch 2, wobei das zweite Ansaugrohr (2523) ein erstes Abzweigrohr (2523a), das mit dem ersten Verbindungsabschnitt (2522a) und dem zweiten Verbindungsabschnitt (2522b) in Fluidverbindung steht, und ein zweites Abzweigrohr (2523b), das mit dem ersten Verbindungsabschnitt (2522a) und dem zweiten Abzweigrohr (2523b) in Fluidverbindung steht, umfasst; wobei der Innendurchmesser des zweiten Abzweigrohrs (2523b) kleiner ist als der des ersten Abzweigrohrs (2523a).

6. Das Geländefahrzeug (100) nach Anspruch 1, wobei die Fahrzeugverkleidung (23) ferner einen ersten Kotflügel (231) umfasst, wobei an dem ersten Kotflügel (231) ein Strömungsführungshohlraum (2314) definiert ist, der sich entlang der Vorder-Hinter-Richtung erstreckt und mit dem Aufnahmeraum (23a) in Fluidverbindung steht; wobei der erste Kotflügel (231) eine Kotflügel-Anströmfläche (2311) an der Vorderseite des Geländefahrzeugs (100) aufweist, und der Strömungsführungshohlraum (2314) zumindest teilweise an der Kotflügel-Anströmfläche (2311) definiert ist; wobei der erste Kotflügel (231) ferner eine Kotflügel-Windeintrittsfläche (2312) an der Vorderseite des Geländefahrzeugs (100) aufweist, die mit der Kotflügel-Anströmfläche (2311) verbunden ist, und der Strömungsführungshohlraum (2314) zumindest teilweise an der Kotflügel-Windeintrittsfläche (2312) definiert ist.

7. Das Geländefahrzeug (100) nach Anspruch 6, wobei eine dritte Projektionsebene (306) als eine Ebene definiert ist, die senkrecht zu einer Vorder-Hinter-Richtung des Geländefahrzeugs (100) ist, wobei die Projektion des Strömungsführungshohlraums (2314), projiziert auf die dritte Projektionsebene (306), als eine erste Projektionsfläche definiert ist, und wobei die Fläche der ersten Projektionsfläche in dem Bereich von 5800 mm² bis 9000 mm² liegt; wobei mehrere Strömungsführungsplatten (2315) an dem ersten Kotflügel (231) angeordnet sind, wobei die mehreren Strömungsführungsplatten (2315) in dem Strömungsführungshohlraum (2314) angeordnet sind und den Strömungsführungshohlraum (2314) in mehrere Belüftungsöffnungen unterteilen.

8. Das Geländefahrzeug (100) nach Anspruch 1, wobei die zweite Isolierabdeckung (2374) und der Motor (111) gemeinsam einen zweiten Luftstromkanal definieren, der sich entlang einer Vorder-Hinter-Richtung des Geländefahrzeugs (100) erstreckt und sich bis zu einem hinteren Bereich des Rahmens (12) erstreckt.

9. Das Geländefahrzeug (100) nach Anspruch 8, wobei die Fahrzeugverkleidung (23) ferner einen ersten Kotflügel (231) und einen zweiten Kotflügel (232) umfasst; und wobei die erste Isolierabdeckung (2373) und die zweite Isolierabdeckung (2374) beide zwischen dem ersten Kotflügel (231) und dem zweiten Kotflügel (232) verbunden sind; wobei eine Vorderseite der ersten Isolierabdeckung (2373) mit dem ersten Kotflügel (231) verbunden ist, und eine Rückseite der ersten Isolierabdeckung (2373) entlang der Vorder-Hinter-Richtung mit dem zweiten Kotflügel (232) verbunden ist.

10. Das Geländefahrzeug (100) nach Anspruch 8, wobei ein Isolationsabschnitt (2374a) zum Isolieren der inneren Wärme des Geländefahrzeugs (100) zwischen der zweiten Isolierabdeckung (2374) und dem Motor (111) angeordnet ist.

11. Das Geländefahrzeug (100) nach Anspruch 1, ferner umfassend eine Montagehalterungsanordnung (24), die auf dem Rahmen (12) angeordnet ist;
wobei die Fahrzeugverkleidung (23) ferner umfasst
eine Seitenabdeckungsanordnung (237), die eine erste Seitenabdeckung (2371) und eine zweite Seitenabdeckung (2372) umfasst, die beide mit der Montagehalterungsanordnung (24) geklemmt sind;
einen Kraftstofftankschutz (238), der eine Mehrzahl von Schraubenbefestigungsenden (2381a), ein Klemmende (2381b) und ein Steckloch (2381c) umfasst;
wobei der Kraftstofftankschutz (238) und die Seitenabdeckungsanordnung (237) durch das Schraubenbefestigungsende (2381a), das Klemmende (2381b) und das Steckloch (2381c) verbunden sind; wobei die Fahrzeugverkleidung (23) ferner einen ersten Kotflügel (231) und eine erste Wartungsabdeckung (234) umfasst, und die erste Wartungsabdeckung (234) einen ersten Verbindungsabschnitt und einen ersten Klemmabschnitt umfasst, und wobei der erste Kotflügel (231) und die erste Wartungsabdeckung (234) durch den ersten Verbindungsabschnitt und den ersten Klemmabschnitt verbunden sind.

12. Das Geländefahrzeug (100) nach Anspruch 11, wobei die Fahrzeugverkleidung (23) ferner ein Belüftungsgitter (236) umfasst, das an der Vorderseite des Geländefahrzeugs (100) angeordnet und an dem ersten Kotflügel (231) angeordnet ist; wobei mehrere zweite Verbindungsabschnitte an den Kanten des Belüftungsgitters (236) angeordnet sind, und wobei das Belüftungsgitter (236) durch die mehreren zweiten Verbindungsabschnitte mit dem ersten Kotflügel (231) verbunden ist.

13. Das Geländefahrzeug (100) nach Anspruch 1, ferner umfassend ein Kühlsystem (19), wobei das Kühlsystem (19) einen Kühler (191) und ein Luftleitblech (195) umfasst, wobei das Luftleitblech (195) zwischen dem Kühler (191) und der Fahrzeugverkleidung (23) angeordnet ist, um einen Luftführungshohlraum zum Blockieren der rückströmenden heißen Luft zu definieren.

14. Das Geländefahrzeug (100) nach Anspruch 13, wobei der Kühler (191) eine Kühler-Lufteintrittsfläche aufweist, und wobei das Luftleitblech (195) um die Kühler-Lufteintrittsfläche angeordnet ist, um sicherzustellen, dass die durch die Fahrzeugverkleidung (23) eingeleitete Luft im Wesentlichen entlang des Luftführungshohlraums zu der Kühler-Lufteintrittsfläche strömt.

15. Das Geländefahrzeug (100) nach Anspruch 1, wobei das Geländefahrzeug (100) ferner ein Abgassystem (18) umfasst, wobei das Abgassystem (18) einen Schalldämpfer (182) und ein Endrohr (184) umfasst, und das Endrohr (184) unterhalb des Schalldämpfers (182) angeordnet ist; wobei die Länge des Schalldämpfers (182) als ein Abstand H definiert ist, und die Verbindung zwischen dem Endrohr (184) und dem Schalldämpfer (182) als eine erste Verbindungsposition definiert ist, wobei der Abstand zwischen der ersten Verbindungsposition und dem hinteren Ende des Schalldämpfers (182) als ein Abstand h definiert ist, und wobei das Verhältnis von h zu H in dem Bereich von 0,1 bis 0,2 liegt; wobei das Endrohr (184) mit dem Schalldämpfer (182) in Fluidverbindung steht.

## Revendications

1. Un véhicule tout-terrain (100) comprenant
un châssis (12) ;
un carénage de véhicule (23) disposé au moins partiellement sur le châssis (12), le carénage de véhicule (23) définissant un espace de logement (23a) et comprenant un protège-instruments (23b) ;
un ensemble de roues (26) comprenant une paire de premières roues (261) et une paire de deuxièmes roues (262) ;
un ensemble de suspension (27) comprenant une suspension avant (271) et une suspension arrière (272), les premières roues (261) étant reliées au châssis (12) par la suspension avant (271) et les deuxièmes roues (262) étant reliées au châssis (12) par la suspension arrière (272) ;
un ensemble motopropulseur (11) destiné à entraîner l'ensemble de roues (26) et comprenant un moteur (111) ;
un ensemble de transmission (14) disposé entre l'ensemble motopropulseur (11) et l'ensemble de roues (26), une force motrice étant transmise de l'ensemble motopropulseur (11) à l'ensemble de roues (26) par l'ensemble de transmission (14) ; et
un système d'admission d'air (25) étant au moins partiellement en communication fluidique avec l'ensemble motopropulseur (11) ;
dans lequel le carénage de véhicule (23) comprend en outre un ensemble de capot latéral (237) comprenant un premier capot d'isolation (2373) et un deuxième capot d'isolation (2374) ; et
le premier capot d'isolation (2373) et le moteur (111) définissent conjointement un premier passage d'écoulement d'air s'étendant le long d'une direction avant-arrière du véhicule tout-terrain (100) et s'étendant jusqu'à un arrière du châssis (12) ; **caractérisé en ce que**
le système d'admission d'air (25) comprend
une entrée d'air (251) définie au moins partiellement sur le protège-instruments (23b) ; et
un conduit d'admission d'air (252) relié à l'ensemble de transmission (14), l'entrée d'air (251) étant au moins partiellement en communication fluidique avec le conduit d'admission d'air (252).

2. Le véhicule tout-terrain (100) selon la revendication 1, dans lequel le conduit d'admission d'air (252) comprend un premier conduit d'admission d'air (2521) et un deuxième conduit d'admission d'air (2523), le premier conduit d'admission d'air (2521) étant disposé entre le protège-instruments (23b) et le deuxième conduit d'admission d'air (2523) et étant en communication fluidique avec le protège-instruments (23b) et le deuxième conduit d'admission d'air (2523), et le deuxième conduit d'admission d'air (2523) étant disposé entre le premier conduit d'admission d'air (2521) et l'ensemble de transmission (14) et étant en communication fluidique avec le premier conduit d'admission d'air (2521) et l'ensemble de transmission (14) ; le conduit d'admission d'air (252) comprend un raccord de conduit (2522) comprenant une première portion de raccord (2522a) couplée entre le premier conduit d'admission d'air (2521) et le deuxième conduit d'admission d'air (2523) et une deuxième portion de raccord (2522b) couplée entre le deuxième conduit d'admission d'air et l'ensemble de transmission (14).

3. Le véhicule tout-terrain (100) selon la revendication 1, dans lequel le protège-instruments (23b) comporte une surface au vent du protège-instruments (23ba) à l'avant du véhicule tout-terrain (100), l'entrée d'air (251) étant définie au moins partiellement sur la surface au vent du protège-instruments (23ba) ; un premier plan de projection (304) est défini comme un plan perpendiculaire à une direction haut-bas du véhicule tout-terrain (100) et un deuxième plan de projection (305) est défini comme un plan perpendiculaire à une direction gauche-droite du véhicule tout-terrain (100), la surface au vent du protège-instruments (23ba) étant sensiblement perpendiculaire au deuxième plan de projection (305) ; la projection de la surface au vent du protège-instruments (23ba) projetée sur le deuxième plan de projection (305) est définie comme une première ligne de projection ; et une droite coupant le premier plan de projection (304) et le deuxième plan de projection (305) est définie comme une deuxième ligne de projection ; un angle défini entre la première ligne de projection et la deuxième ligne de projection est dans une plage de 45 degrés à 90 degrés.

4. Le véhicule tout-terrain (100) selon la revendication 3, dans lequel plusieurs lamelles (23bb) sont disposées sur la surface au vent du protège-instruments (23ba) et divisent la surface au vent du protège-instruments (23ba) ; les plusieurs lamelles (23bb) étant sensiblement perpendiculaires au deuxième plan de projection (305), la projection de la lamelle (23bb) projetée sur le deuxième plan de projection (305) étant définie comme une troisième ligne de projection, et l'angle défini entre la troisième ligne de projection et la deuxième ligne de projection étant dans une plage de 9 degrés à 11 degrés.

5. Le véhicule tout-terrain (100) selon la revendication 2, dans lequel le deuxième conduit d'admission d'air (2523) comprend un premier conduit de dérivation (2523a) en communication fluidique avec la première portion de raccord (2522a) et la deuxième portion de raccord (2522b) et un deuxième conduit de dérivation (2523b) en communication fluidique avec la première portion de raccord (2522a) et le deuxième conduit de dérivation (2523b) ; le diamètre intérieur du deuxième conduit de dérivation (2523b) est inférieur à celui du premier conduit de dérivation (2523a).

6. Le véhicule tout-terrain (100) selon la revendication 1, dans lequel le carénage de véhicule (23) comprend en outre un premier garde-boue (231), une cavité de guidage d'écoulement (2314) s'étendant le long de la direction avant-arrière et étant en communication fluidique avec l'espace de logement (23a) étant définie sur le premier garde-boue (231) ; le premier garde-boue (231) comporte une surface au vent du garde-boue (2311) à l'avant du véhicule tout-terrain (100), et la cavité de guidage d'écoulement (2314) est définie au moins partiellement sur la surface au vent du garde-boue (2311) ; le premier garde-boue (231) comporte en outre une surface d'entrée de vent du garde-boue (2312) à l'avant du véhicule tout-terrain (100) et reliant la surface au vent du garde-boue (2311), et la cavité de guidage d'écoulement (2314) est définie au moins partiellement sur la surface d'entrée de vent du garde-boue (2312).

7. Le véhicule tout-terrain (100) selon la revendication 6, dans lequel un troisième plan de projection (306) est défini comme un plan perpendiculaire à une direction avant-arrière du véhicule tout-terrain (100), la projection de la cavité de guidage d'écoulement (2314) projetée sur le troisième plan de projection (306) étant définie comme une première aire de projection, et l'aire de la première aire de projection étant dans une plage de 5800 mm² à 9000 mm² ; plusieurs plaques de guidage d'écoulement (2315) sont disposées sur le premier garde-boue (231), les plusieurs plaques de guidage d'écoulement (2315) étant disposées dans la cavité de guidage d'écoulement (2314) et divisant la cavité de guidage d'écoulement (2314) en plusieurs trous de ventilation.

8. Le véhicule tout-terrain (100) selon la revendication 1, dans lequel le deuxième capot d'isolation (2374) et le moteur (111) définissent conjointement un deuxième passage d'écoulement d'air s'étendant le long d'une direction avant-arrière du véhicule tout-terrain (100) et s'étendant jusqu'à un arrière du châssis (12).

9. Le véhicule tout-terrain (100) selon la revendication 8, dans lequel le carénage de véhicule (23) comprend en outre un premier garde-boue (231) et un deuxième garde-boue (232) ; et le premier capot d'isolation (2373) et le deuxième capot d'isolation (2374) sont tous deux reliés entre le premier garde-boue (231) et le deuxième garde-boue (232) ; l'avant du premier capot d'isolation (2373) est relié au premier garde-boue (231), et l'arrière du premier capot d'isolation (2373) est relié au deuxième garde-boue (232) selon la direction avant-arrière.

10. Le véhicule tout-terrain (100) selon la revendication 8, dans lequel une portion d'isolation (2374a) destinée à isoler la chaleur interne du véhicule tout-terrain (100) est disposée entre le deuxième capot d'isolation (2374) et le moteur (111).

11. Le véhicule tout-terrain (100) selon la revendication 1, comprenant en outre un ensemble de support de montage (24) disposé sur le châssis (12) ;
dans lequel le carénage de véhicule (23) comprend en outre
un ensemble de capot latéral (237) comprenant un premier capot latéral (2371) et un deuxième capot latéral (2372) tous deux serrés avec l'ensemble de support de montage (24) ;
un protecteur de réservoir de carburant (238) comprenant une pluralité d'extrémités de fixation par boulon (2381a), une extrémité de serrage (2381b), et un trou d'emboîtement (2381c) ;
le protecteur de réservoir de carburant (238) et l'ensemble de capot latéral (237) étant reliés par l'extrémité de fixation par boulon (2381a), l'extrémité de serrage (2381b), et le trou d'emboîtement (2381c) ; le carénage de véhicule (23) comprend en outre un premier garde-boue (231) et un premier couvercle d'entretien (234), et le premier couvercle d'entretien (234) comprend une première portion de connexion et une première portion de serrage, et le premier garde-boue (231) et le premier couvercle d'entretien (234) sont reliés par la première portion de connexion et la première portion de serrage.

12. Le véhicule tout-terrain (100) selon la revendication 11, dans lequel le carénage de véhicule (23) comprend en outre une grille de ventilation (236) disposée à l'avant du véhicule tout-terrain (100) et disposée sur le premier garde-boue (231) ; plusieurs deuxièmes portions de connexion sont disposées aux bords de la grille de ventilation (236), et la grille de ventilation (236) est reliée au premier garde-boue (231) par les plusieurs deuxièmes portions de connexion.

13. Le véhicule tout-terrain (100) selon la revendication 1, comprenant en outre un système de refroidissement (19), dans lequel le système de refroidissement (19) comprend un radiateur (191) et un déflecteur d'air (195), le déflecteur d'air (195) étant disposé entre le radiateur (191) et le carénage de véhicule (23) pour définir une cavité de guidage d'air destinée à bloquer l'air chaud de retour.

14. Le véhicule tout-terrain (100) selon la revendication 13, dans lequel le radiateur (191) comporte une surface d'entrée d'air du radiateur, et le déflecteur d'air (195) est disposé autour de la surface d'entrée d'air du radiateur pour garantir que l'air introduit par le carénage de véhicule (23) s'écoule sensiblement vers la surface d'entrée d'air du radiateur le long de la cavité de guidage d'air.

15. Le véhicule tout-terrain (100) selon la revendication 1, dans lequel le véhicule tout-terrain (100) comprend en outre un système d'échappement (18), le système d'échappement (18) comprenant un silencieux (182) et un tuyau de sortie (184), et le tuyau de sortie (184) étant disposé au-dessous du silencieux (182) ; la longueur du silencieux (182) étant définie comme une distance H, et la connexion entre le tuyau de sortie (184) et le silencieux (182) étant définie comme une première position de connexion, la distance entre la première position de connexion et l'extrémité arrière du silencieux (182) étant définie comme une distance h, le rapport de h à H étant dans une plage de 0,1 à 0,2 ; le tuyau de sortie (184) étant en communication fluidique avec le silencieux (182).
